# EUROPEAN PATENT SPECIFICATION

(11) **EP 0 686 082 B1**
(45) Date of publication and mention of the grant of the patent: **04.09.2002**
(21) Application number: 94910770.0
(22) Date of filing: 17.02.1994
(51) Int. Cl.: B29C 65/00, B28B 21/00, B32B 13/00

(54) **Inorganically filled moulded articles and methods for their manufacture**
Anorganisch gefüllte, geformte Artikel und Verfahren zu deren Herstellung
Inorganiquement remplis articles déformables et procédés de leurs fabrication

(30) Priority: 17.02.1993 US 19151; 21.07.1993 US 95662; 03.08.1993 US 101500; 19.11.1993 US 152354
(43) Date of publication of application: 13.12.1995
(60) Divisional application: 01109503.1
(73) Proprietor: E. KHASHOGGI INDUSTRIES, LLC, Santa Barbara, CA 93109-1419 (US)
(72) Inventor: ANDERSEN, Per, Just, Santa Barbara, CA 93105 (US); HODSON, Simon, K., Santa Barbara, CA 93105 (US)
(74) Representative: Belcher, Simon James
(86) International application number: US9402111
(87) International publication number: WO94019172

(56) References cited:
- EP-A- 0 021 682
- EP-A- 0 031 760
- EP-A- 0 055 035
- EP-A- 0 067 456
- EP-A- 0 294 983
- EP-A- 0 409 609
- WO-A-80/00959
- WO-A-81/03170
- WO-A-87/00828
- WO-A-93/17977
- WO-A-94/04330
- WO-A-94/12328
- WO-A-94/20274
- WO-A-95/04709
- WO-A-95/15849
- WO-A-95/21056
- WO-A-95/21063
- DE-A- 4 103 397
- FR-A- 856 629
- FR-A- 2 396 832
- FR-A- 2 418 829
- GB-A- 2 220 934
- US-A- 3 052 595
- US-A- 4 264 367
- US-A- 4 588 443
- US-A- 4 623 150
- US-A- 4 808 780
- DATABASE WPI Section Ch, Week 8702 Derwent Publications Ltd., London, GB; Class L02, AN 87-011701 XP002052348 & JP 61 270 246 A (ONODA CEMENT CO LTD) , 29 November 1986
- PATENT ABSTRACTS OF JAPAN vol. 017, no. 436 (C-1096), 12 August 1993 & JP 05 097491 A (DENKI KAGAKU KOGYO KK), 20 April 1993,

## Description

### 1. The Field of the Invention.

The present invention relates to a method for manufacturing articles of manufacture, particularly containers and packaging materials, from hydraulically settable mixtures and highly inorganically filled compositions, and to articles of manufacture *per se*. More particularly, the present invention relates to a method for economically mass producing a variety of hydraulically settable or inorganically filled containers or packaging materials currently made from materials such as paper, cardboard, plastic, polystyrene, glass, or metal. The articles of the present invention can be selectively designed to be lightweight, flexible, inexpensive, water resistant, thin, insulative, and environmentally neutral.

### 2. The Relevant Technology.

### A. Packaging Materials and Containers.

Advanced processing and packaging techniques presently allow an enormous variety of liquid and solid goods to be stored, packaged, or shipped while being protected from harmful elements. Packaging protects goods from environmental influences and distribution damage, particularly chemical and physical influence and damage. Packaging also provides a medium for the dissemination of information to the consumer, such as the origin of manufacture, contents, advertising, instructions, brand identification, and pricing. Packaging helps protect an enormous variety of goods from gases, moisture, light, microorganisms, vermin, physical shock, crushing forces, vibration, leaking, or spilling. In addition, food or beverage products may be dispensed using specific packaging aids, such as disposable cups, plates, or boxes (such as the "clam shell" frequently used in the fast food industry for burgers, sandwiches, and salads).

Typically, most containers and cups (including disposable containers) are made from paper, cardboard, plastic, polystyrene, glass, and metal materials. Each year over one hundred billion aluminum cans, billions of glass bottles, and thousands of tons of paper and plastic are used in storing and dispensing soft drinks, juices, and beer. Outside of the beverage industry, packaging containers, and especially disposable containers, made from such materials are ubiquitous.

In order to keep certain items hot, containers made from polystyrene have been used. Although paper or plastic coated containment products can be equipped with special handles, polystyrene containers have remained the superior disposable container of choice when insulation is required, because of insulation capabilities, cost, and stability.

In spite of the more recent attention that has been given to reduce the use of paper, cardboard, plastic, polystyrene, and metal materials, they continue to be used because of strength properties and mass producibility. Moreover, for any given use for which they are designed, such materials are relatively inexpensive, lightweight, easy to mold, strong, durable, and resistant to degradation during use.

### B. The Impact of Paper, Plastic, Glass and Metal.

Recently there has been a debate as to which of these materials (*e*.*g*., paper, cardboard, plastic, polystyrene, glass, or metal cans) is most damaging to the environment. Consciousness-raising organizations have convinced many people to substitute one material for another in order to be more environmentally "correct." The debate often misses the point that each of these materials has its own unique environmental weaknesses. One material may appear superior to another when viewed in light of a particular environmental problem, while ignoring different, often larger, problems associated with the supposedly preferred material. In fact, paper, cardboard, plastic, polystyrene, glass, and metal materials each has its own unique environmental weaknesses.

For example, while polystyrene itself is a relatively inert substance, its manufacture involves the use of a variety of hazardous chemicals and starting materials. Unpolymerized styrene is very reactive and therefore presents a health problem to those who must handle it. Because styrene is manufactured from benzene (a known mutagen and probably a carcinogen), residual quantities of benzene can be found in styrene. Polystyrene is very slow to degrade and discarded containers can persist for a long time.

More potentially damaging has been the use of chlorofluorocarbons (or "CFCs") in the manufacture of "blown" or "expanded" polystyrene products. This is because CFCs have been linked to the destruction of the ozone layer. In the manufacture of foams, including blown polystyrene, CFCs (which are highly volatile liquids) have been used to "expand" or "blow" the polystyrene into a foamed material, which is then molded into the form of cups, plates, trays, boxes, "clam-shell" containers, spacers, or packaging materials. Even the substitution of less "environmentally damaging" blowing agents (*e.g.*, HCFC, CO₂, and pentanes) are still significantly harmful and their elimination would be beneficial.

In light of these problems, some environmental groups have favored a temporary return to the use of natural products such as paper or wood, which are believed to be more biodegradable. Nevertheless, other environmental groups have taken the opposite view in order to minimize cutting trees and depleting the forests.

Although paper products are ostensibly biodegradable and have not been linked to the destruction of the ozone layer, recent studies have shown that the manufacture of paper probably more strongly impacts the environment than does the manufacture of polystyrene. In fact, the wood pulp and paper industry has been identified as one of the five top polluters in the United States. For instance, products made from paper require ten times as much steam, fourteen to twenty times the electricity, and twice as much cooling water compared to an equivalent polystyrene product. Various studies have shown that the effluent from paper manufacturing contains ten to one hundred times the amount of contaminants produced in the manufacture of polystyrene foam.

In addition, a by-product of paper manufacturing is that the environment is impacted by dioxin, a harmful toxin. Dioxin, or more accurately, 2,3,7,8-tetrachlorodibenzo[b,e][1,4]dioxin, is a highly toxic, contaminant, and is extremely dangerous even in very low quantities. The highest level of dioxin allowed in the discharge waters from paper mills is about 0.5 part per trillion. However, fish found downstream from paper pulp mills can contain nearly 200 parts per trillion of dioxin, with levels of 50 parts per trillion being not uncommon.

The manufacturing processes of metal cans (particularly those made of aluminum and tin), glass bottles, and ceramic containers utilize high amounts of energy because of the necessity to melt and then separately work and shape the raw metal into an intermediate or final product. These high energy and processing requirements not only utilize valuable energy resources, but they also result in significant air, water, and heat pollution to the environment. Further, while glass can be recycled, that portion which ends up in landfills is essentially nonbiodegradable. Broken glass shreds are very dangerous and can persist for years.

Even paper or cardboard, believed by many to be biodegradable, can persist for years, even decades, within landfills where they are shielded from air, light, and water, all of which are required for normal biodegradation activities. There are reports of telephone books and newspapers having been lifted from garbage dumps that had been buried for decades. This longevity of paper is further complicated since it is common to treat, coat, or impregnate paper with various protective materials which further slow or prevent degradation.

Another problem with paper, cardboard, polystyrene, and plastic is that each of these requires relatively expensive organic starting materials, some of which are nonrenewable, such as the use of petroleum in the manufacture of polystyrene and plastic. Although trees used in making paper and cardboard are renewable in the strict sense of the word, their large land requirements and rapid depletion in certain areas of the world undermines this notion. Hence, the use of huge amounts of essentially nonrenewable starting materials in making disposable containers cannot be sustained and is not wise from a long term perspective.

Furthermore, the processes used to make the packaging stock raw materials (such as paper pulp, styrene, or metal sheets) are very energy intensive, cause major amounts of water and air pollution, and require significant capital requirements.

In light of the foregoing, the debate should not be directed to which of these materials is more or less harmful to the environment, but rather toward asking: Can we discover or develop an alternative material which will solve most, if not all, of the various environmental problems associated with each of these presently used materials?

### C. Traditional Hydraulically Settable and Inorganically Filled Materials.

Man has made great use of essentially nondepletable inorganic materials such as clay, natural minerals, or stone for millennia. Clay has found extensive use because of its ready moldability into a variety of objects including containers, tiles, and other useful objects. However, some of the drawbacks of clay include the time it takes for clay to harden, the need to fire or sinter clay in order for it to achieve its optimum strength properties, and its generally large, heavy, and bulky nature. Unfired clay, in particular, has low tensile strength and is very brittle. Nevertheless, clay has found some use in the manufacture of other materials as a plentiful, inexhaustible, and low-cost filler, such as in paper or cardboard. However, because of the brittle and non-cohesive nature of clay when used as a filler, clay has generally not been included in amounts greater than about 20% by weight of the overall paper material.

Man has also made extensive use of stone in the manufacture of buildings, tools, containers, and other large, bulky objects. An obvious drawback of stone, however, is that it is very hard, brittle,'and heavy, which limits its use to large, bulky objects of relatively high mass. Nevertheless, smaller or crushed stone can be used as an aggregate material in the manufacture of other products, such as hydraulically settable, or cementitious materials.

Hydraulically settable materials such as those that contain hydraulic cement or gypsum (hereinafter "hydraulically settable," "hydraulic," or "cementitious" compositions, materials, or mixtures) have been used for thousands of years to create useful, generally large, bulky structures that are durable, strong, and relatively inexpensive.

For example, cement is a hydraulically settable binder derived from clay and limestone, and it is essentially nondepletable and very inexpensive compared to the other materials discussed above. Hydraulic cement can be mixed with water and an aggregate material such as crushed stone or pebbles in order to create concrete. However, due to the high level of fluidity required for typical cementitious mixtures to have adequate workability, the uses of concrete and other hydraulically settable mixtures have been limited mainly to simply shapes which are generally large, heavy, and bulky, and which require mechanical forces to retain their shape for an extended period of time until sufficient hardening of the material has occurred. Another aspect of the limitations of traditional cementitious mixtures or slurries is that they have little or no form stability and are molded into the final form by pouring the mixture into a space having externally supported boundaries or walls.

It is precisely because of this lack of moldability (which may be the result of poor workability and / or poor form stability), coupled with the low tensile strength per unit weight, that hydraulically settable materials have traditionally been useful only for applications where size and weight are not limiting factors and where the forces or loads exerted on the concrete are generally limited to compressive forces or loads, as in, e.g., roads, foundations, sidewalks and walls.

Published PCT no. WO87/00828 discloses moldable cementitious compositions that include a hydraulic cement binder, which are useful in molding a wide variety of articles of manufacture therefrom. The compositions are preferably cured at elevated temperature for a period of a few hours or several days after solidification. The articles manufactured therefrom have extremely low porosity and a high level of particle compaction.

Moreover, hydraulically settable materials have historically been brittle, rigid, unable to be folded or bent, and having low elasticity, deflection, and flexural strength. The brittle nature and lack of tensile strength (about 1-4 Mpa) in concrete is ubiquitously illustrated by the fact that concrete readily cracks or fractures upon the slightest amount of shrinkage or bending, unlike other materials such as metal, paper, plastic, or ceramic. Consequently, typical cementitious materials have not been suitable for making small, lightweight objects, such as containers or thin sheets, which are better if made from materials with much higher tensile and flexural strengths per unit weight compared to typical hydraulically settable materials.

Another problem with traditional, and even more recently developed high strength concretes, has been the lengthy curing times almost universally required for most concretes. Typical concrete products formed from a flowable mixture require a hardening period of 10-24 hours before the concrete is mechanically self-supporting, and upwards of a month before the concrete reaches a substantial amount of its maximum strength. To avoid cracking, extreme care has had to be used to avoid moving the hydraulically settable articles until they have obtained sufficient strength to be demolded. Since the molds used in forming hydraulically settable objects are generally reused in the production of concrete products and a substantial period of time is required for even minimal curing of the concrete, it has been difficult to economically and commercially mass produce hydraulically settable objects.

Although cement or other types of hydraulically settable binders are believed to impart a significant amount of strength, including tensile and (especially) compressive strengths, to the above described hydraulically settable materials, such binders have been found in lower quantities to act less as a binding agent and more like an aggregate filler. As a result, studies have been conducted to determine whether articles which do not necessarily use a hydraulically settable binder (or which only use such a binder in low enough quantities so that it will act mainly as an aggregate material) but which incorporate high concentrations of inorganic material in conjunction with an alternative binder can be manufactured.

Materials in which the hydraulic binder is used only as an aggregate are herein referred to as inorganically filled materials. Articles made from such materials would likewise have the advantages of hydraulically settable articles over prior art paper, plastic, and metal materials in terms of their low cost, low environmental impact, and the ready availability of abundant starting materials.

Some attempts have been made to fill paper with inorganic materials, such as kaolin and/or calcium carbonate, although there is a limit (about 20-35% by volume) to the amount of inorganics that can be incorporated into these products. In addition, there have been attempts to fill certain plastic packaging materials with clay in order to increase the breathability of the product and improve the ability of the packaging material to keep fruits or vegetables stored therein fresh. In addition, inorganic materials are routinely added to adhesives and coatings in order to impart certain properties of color or texture to the cured product.

Nevertheless, inorganic materials only comprise a fraction of the overall material used to make such products, rather than making up the majority of the packaging mass. Because highly inorganically filled materials essentially comprise such environmentally neutral components as rock, sand, clay, and water, they would be ideally suited from an ecological standpoint to replace paper, cardboard, plastic, polystyrene, or metal materials as the material of choice for such applications. Inorganic materials also enjoy a large advantage over synthetic or highly processes materials from the standpoint of cost

Due to the more recent awareness of the tremendous environmental impacts of using paper, cardboard, plastic, polystyrene, and metals for a variety of single-use, mainly disposable, items such as printed sheets or containers made therefrom (not to mention the ever mounting political pressures), there has been an acute need (long since recognized by those skilled in the art) to find environmentally sound substitute materials. In particular, industry has sought to develop hydraulically settable and highly inorganically filled materials for these high waste volume items.

In spite of such economic and environmental pressures, extensive research, and the associated long-felt need, the technology simply has not existed for the economic and feasible production of hydraulically settable and highly inorganically filled, organic polymer bound materials which could be substituted for paper, cardboard, plastic, polystyrene, or metal sheets or container products made therefrom.

Such materials are not only made from nondepletable components, they do not impact the environment nearly as much as do paper, cardboard, plastic, polystyrene, glass, or metal. Another advantage of hydraulically settable and other inorganic materials is that they are far less expensive than paper, cardboard, plastic, polystyrene, or metals.

While paper, cardboard, plastic, polystyrene, glass, and metal products might be comparably priced to each other, they are far more expensive than typical hydraulically settable materials and highly inorganically filled materials. Because no rational business would ignore the economic benefit which would necessarily accrue from the substitution of significantly less expensive materials for paper, cardboard, plastic, polystyrene, or metals, the failure to do so can only be explained by a marked absence of available technology to make such a substitution.

In light of the foregoing, what is needed are new materials other than paper, cardboard, plastic, polystyrene, glass, or metal which can be used in the manufacture of containers and packaging materials used in storing, dispensing, and packaging liquids or solids. Such materials would represent a significant advancement in the art if they could be made without relying so heavily on the use of trees, petroleum, or other essentially nonrenewable or slowly renewing resources as the source of the primary starting material.

It would be a significant improvement in the art to provide compositions, methods, and systems which yielded hydraulically settable and inorganically filled articles of manufacture which had properties similar to paper, cardboard, polystyrene, plastic, or metal. It would yet be a tremendous improvement in the art if such articles could be made using the same or similar manufacturing apparatus and techniques as those presently used to form articles from paper, cardboard polystyrene, plastic, or metal sheets.

It would yet be an important advancement in the art if such hydraulically settable and inorganically filled articles did not result in the generation of wastes involved in the manufacture of paper, cardboard, plastic polystyrene, or metals. In addition, it would be a significant improvement in the art if such articles were readily degradable into substances which are commonly found in the earth.

From a practical point of view it would be a significant improvement if such compositions and methods made possible the manufacture of containers and packaging materials at a cost comparable, or even superior to existing methods of manufacturing containers and packaging materials from existing materials. Specifically, it would be desirable to reduce the energy requirements and the initial capital investment costs for making products using existing materials.

From a manufacturing perspective, it would be a significant advancement to provide hydraulically settable and inorganically filled materials and methods for mass producing articles therefrom, particularly containers and packing materials, that can rapidly be formed and substantially dried within a matter of minutes from the beginning of the manufacturing process.

Such materials, methods, and systems used to manufacture articles of manufacture including packaging materials and containers are disclosed herein.

### SUMMARY AND OBJECTS OF THE INVENTION

The present invention relates to novel methods for manufacturing articles of manufacture from hydraulic settable and inorganically filled materials (hereinafter referred to collectively as "moldable materials, mixtures, or compositions."). It has been found that lightweight, strong, and environmentally compatible (and if desired, flexible or insulative) articles such as containers and packaging materials can be readily and inexpensively mass produced from moldable materials, including hydraulically settable or inorganic binders, through innovative processes developed through materials science and microstructural engineering approaches.

The materials science and microstructural engineering approaches of the present invention build into the microstructure of the moldable compositions of the present invention the desired physical characteristics and properties, while at the same time remaining cognizant of costs and other complications involved in the large scale manufacturing systems. In doing so, many of the problems have been overcome which have historically limited the use of most moldable materials.

As discussed in greater detail hereinafter, the materials science and microstructural engineering approaches, instead of the traditional trial-and-error, mix-and-test approach, specifically allow for the design of moldable materials with the properties of high tensile and flexural strength, high insulation, low weight, low cost, and low environmental impact desired for articles, including containers and packing materials. Control of the design of the moldable compositions on the microstructural level has come, in part, from the discovery that during formation of an object either (a) the rheology of the composition should be chemically modified to give moldability and rapid form stability, or (b) the concentration of water in the composition should be reduced by processing or by adding energy.

The result is the ability to mass produce on a commercially viable scale a wide variety of containers and other articles (including many which are disposable) from moldable materials at a cost that is usually competitive with, and in most cases even superior to, the cost involving using other materials. The major components within the moldable materials of the present invention include a hydraulically settable binder (like cement or gypsum), an organic binder (polysaccharide, protein or synthetic organic materials), aggregates (like perlite, sand, glass, silica, vermiculite, clay, mica, and even waste concrete products), fibers (typically wood or plant), water, and 'admixtures such as dispersants and set accelerators.

Moldable materials include both hydraulically settable materials and highly inorganically filled materials. Although these two materials can comprise the same components, the mixtures are distinguishable by the concentration and function of certain components.

Hydraulically settable materials include a hydraulically settable binder and water to which components such as aggregates, fibers, dispersants, and a rheology-modifying agent can be selectively added to modify the properties of the mixture. The hydraulically settable binder functions as the primary binder for the selected components.

In a hydraulically settable material, the organic components, such as cellulose-based fibers and/or rheology-modifying agents, will make up a small fraction of the overall mass of the material used to manufacture articles. Together, the organic components will make up usually less than about 30% by volume of the unhardened hydraulically settable mixture; preferably, this fraction will be less than about 15% by volume.

In contrast, highly inorganically filled materials comprise a mixture of a water-dispersable organic binder (similar to the substances used as rheology-modifying agents within a hydraulically settable mixture), water, fibers, and inorganic aggregates having a concentration in a range from about 40% to about 98% by volume of the total solids in the mixture. To this mixture, other components can be selectively added such as organic aggregates, dispersants, and hydraulically settable binders. In inorganically filled materials, the organic binder functions as the primary binder, while the hydraulically settabie binder is generally added (if at all) in smaller amounts to function as an inorganic fillers and to react with some of the water. Of course, a mixture having a binding quantity of both a hydraulically settable binder and an organic binder may satisfy the definitions of both a "hydraulically settable mixture" and an "inorganically filled mixture". The difference between the two often being only a matter of degree.

In order to design the desired specific functional properties into the moldable mixture and/or the hardened structural matrix for a specific article, a variety of additives can be included within the moldable mixture, such as rheology-modifying agents or organic binders, dispersants, one or more aggregate materials, fibers, air entraining agents, blowing agents, or reactive metals. The identity and quantity of any additive will depend on the desired properties or performance criteria of both the moldable mixture as well as the final hardened article made therefrom.

Organic binders are simply polymers that when added to water under certain conditions form long chains that intertwine and capture the components of the mixture. As water is removed from the mixture, these long chains solidify and bind the structural matrix. Because of the nature of these organic binders, however, they also function to modify the rheology of a composition.

As used in the specification and appended claims the terms "organic binder" and "rheology-modifying agent" are used synonymously. Whether the organic material is a binder, or primarily affects the rheology is a matter of degree and is dependent on the concentration. In smaller amounts the organic material primarily affects the rheology. As more of the "rheology-modifying agent" is added, its ability to help bind the particles together increases and may fairly be called an "organic binder" although it also affects the rheology.

Organic binders or rheology-modifying agents can be added to increase the cohesive strength, "plastic-like" behavior, and the ability of the mixture to retain its shape when molded or extruded. They act as thickeners and increase the yield stress of the moldable mixture, which is the amount of force necessary to deform the mixture. This creates high "green strength" in the molded or extruded product. Suitable rheology-modifying agents include a variety of cellulose-, starch-, and protein-based materials (which are generally highly polar), all of which assist in bridging the individual particles together.

Dispersants, on the other hand, act to decrease the viscosity and the yield stress of the mixture by dispersing the individual aggregates and binding particles. This allows for the use of less water while maintaining adequate levels of workability. Suitable dispersants include any material which can be adsorbed onto the surface of the hydraulically settable binder particles or aggregates and which act to disperse the particles, usually by creating a charged area on the particle surface or in the near colloid double layer.

It may be preferable to include one or more aggregate materials within the moldable mixture in order to add bulk and decrease the cost of the mixture. Aggregates often impart significant strength properties and improve workability. An example of one such aggregate is ordinary sand or clay, which is completely environmentally safe, extremely inexpensive, and essentially inexhaustible.

In other cases, lightweight aggregates can be added to yield a lighter, and often more insulating, final product. Examples of lightweight aggregates are perlite, vermiculite, hollow glass spheres, aerogel, xerogel, pumice, and other lightweight, rocklike materials. These aggregates are likewise environmentally neutral and relatively inexpensive.

Fibers may be added to the moldable mixture in order to increase the compressive, tensile, flexural, and cohesive strengths of the wet material as well as the hardened articles made therefrom. In the case where an article is made from a sheet formed from the mixture, the inclusion of fibers will allow the sheet to be rolled up, scored, or folded into the desired shape of the article. Fiber should preferably have high tear and burst strengths (*i*.*e*., high tensile strength), examples of which include abaca, southern pine, flax, bagasse (sugar cane fiber), cotton, and hemp. Fibers with a high aspect ratio work best in imparting strength and toughness to the moldable material.

One significant aspect of the present invention is that the articles of the present invention can be economically and mass producibly manufactured. The articles disclosed herein are not intended to be handmade at the rate of a few at a time, but are intended to be made at the rate of hundreds, thousands, or tens of thousands per hour. The creation of new materials that can be rapidly processed in such a manner (that is, similar to paper, plastic, or metals) comes from utilization of one of the following approaches during the manufacturing process: (a) chemically modifying the moldable mixture (such as by the addition of a rheology-modifying agent) in order to give the mixture workability and then rapid form stability, or (b) reducing the water content ratio during the formation process (such as by the addition of energy in the form of heat or pressure). The application of these principles will become readily apparent from the following methods of manufacture.

There are several steps and methods for manufacturing the article of the present invention. The first step, which is universal to all methods, is preparing the moldable mixture. The mixture is prepared by combining the desired binder and water with selected materials such as a rheology-modifying agent, dispersant, aggregates, and fibers to create a mixture having the desired rheological properties as well as ultimate strength, weight, insulative, and low cost properties. The components are typically combined under high shear mixing, however, fragile or lightweight aggregates are often added under low shear mixing to prevent crushing of the aggregate.

The second step is molding or forming the mixture into the desired shape of the article. Preferred processes include die pressing, injection molding, blow molding, jiggering, wet sheet molding, dry sheet molding, and the like. The die pressing process comprises positioning the mixture between a male die and a female die having complementary shapes. The dies are then mated so as to mold the mixture into the shape of the dies. In injection molding, the mixture is injected under high pressure into a closed mold, thereby forming the mixture into the shape of the mold. Once the mixture has obtained form stability, the mold is opened and the article removed for drying.

There are two types of blow molding processes: injection blow molding and extrusion blow molding. In injection blow molding the mixture is positioned onto a core rod which is then positioned into a closed mold. Air is then blown through the core rod so as to expand the mixture against the wall of the mold, forming the desired article. Extrusion blow molding is accomplished by extruding the mixture into a tube that is captured between two halves of a mold. A blow pin is then injected into the tube through which air passes, thereby expanding the mixture against the walls of the mold and into the desired shape of the article.

Jiggering is similar to clay molding in which a potter wheel is used. The process requires a rotating spindle on which is placed an open mouthed mold. A quantity of the mixture is placed at the bottom of the spinning mold. A spinning roller head is then used to press the mixture against the side walls of the mold, forming the mixture into the desired article. Once the mixture is formed, the excess material is removed from the edge of the mold and the article is allowed to obtain form stability.

The wet sheet and dry sheet molding processes are similar in that the mixture is first formed into a sheet. The moldable mixture having the desired characteristics (prepared according to the procedure described above) is extruded through a die, for example, an auger- or piston-type extruder, into relatively thin sheets of a predetermined thickness. In one embodiment, a vacuum is attached to the auger to remove excess air from the mixture.

The extruded sheets are then "rolled" by passing them between a set of reduction rollers to form sheets with a more uniform thickness and a smoother surface. In some cases, it may be preferable to pass the sheets through a series of sets of rollers having progressively smaller distances between the sets of rollers to obtain a rolled sheet having a progressively thinner thickness.

In addition, by using a pair of rollers having different orientations in the "Z" direction (or normal to the surface of the sheet), such as by using a flat roller paired with a conical roller, a percentage of the fibers can be oriented in the "X" (or width-wise) direction. In this way, a sheet having bidirectionally oriented fibers can be manufactured. This is thought to occur because the conical roller can widen the sheet in the "X" direction. Sheets having bidirectionally aligned fibers produce articles having a more uniform strength.

In the wet sheet process, a portion of the sheet is then fashioned into a desired shape of a container or article. This is preferably accomplished by pressing the sheet between a male die of a desired shape and a female die having a substantially complementary configuration of the male die shape. Alternative types of dies that can be used include split dies and progressive dies. The articles can also be formed by applying one of many vacuum forming techniques to the sheets.

In the dry sheet process, the wet sheet as discussed above is subsequently passed over heated drying rollers to form the sheet into a dry paper sheet like product. In addition, the sheet can optionally be passed between compaction rollers while still in a slightly moistened condition in order to eliminate unwanted voids within the structural matrix, increase the fiber adhesion, reduce porosity, and/or increase surface smoothness. By carefully controlling the water content, it will be possible to ensure that the compaction rollers only compress and increase the density of the sheet without further elongating the sheet.

The sheet can also be optionally scored, score cut, or perforated while in a slightly moistened or even in the dry condition in order to create a line within the structural matrix upon which the sheet can later be hinged or bent. Optionally, the sheet could be passed through a set of corrugation rollers in order to produce a corrugated sheet and/or cardboard.

Once the dry sheet is formed it can subsequently be fashioned into a desired article through a number of methods well known in the paper industry. Such methods include folding, convoluting, spiral winding, molding, assembling, and pouch forming.

To economically produce the articles, the fashioned article must quickly obtain form stability. In one embodiment, the forming apparatus, including dies, molds, and rollers, is heated to a predetermined temperature so as to rapidly dry the surface of the article, thereby creating a form-stable article. Heating the forming apparatus also functions to form a steam barrier that minimizes the adhering of the article to the forming apparatus. Additional methods, such as cooling the forming apparatus or adding a nonhydrating liquid to the mixture that rapidly evaporates, can also be used to quickly impart form stability to the articles. Still other methods used to impart form stability include the addition of gypsum hemihydrate, carbonate sources, accelerators, methyl cellulose, and starch to the mixture or limiting the amount of water in the mixture.

Once the articles obtain sufficient form stability, they can be removed from the dies. Removal from the dies is typically accomplished by airveying, or sucking the articles off the mold. Air can be blow between the molded articles and the dies to assist in removal. Alternatively, various templates or stripper rings can be used to lift the articles off the mold.

Finally, the articles are passed through a drying apparatus to drive off additional amounts of water within the article, thereby increasing the strength and improving the form stability of the article. The heat imparted by the drying apparatus also increases the rate of hydration of the hydraulic cement and drying of the organic binder. Once the article has obtained sufficient strength, the article can be packaged and shipped.

Before, during, or after any of the above molding process, coatings may be applied to the surface of a substantially dried sheet or article for a number of reasons, such as to make the article more waterproof, more flexible, or to give it a glossier surface. Coatings based upon materials such as soybean and methocel, alone or in combination with polyethylene glycol, can be applied to the surface in order to permanently soften the sheet or article or hinge within the article.

Elastomers, plastic, or paper coatings can aid in preserving the integrity of a fold or hinge (if used), whether or not the underlying hardened structural matrix fractures upon bending at the hinge. It may be also desirable to print or emboss the sheets or articles with indicia, logos, or other printed material.

Additional embodiments of the present invention include the addition of air voids in order to add insulative properties to the articles. These air voids are created by the incorporation of gas through various techniques into the hydraulically settable mixture -- one method being the mechanical incorporation of air voids during the mixing process, and another being the incorporation of a gas which is chemically generated in situ within the hydraulic paste.

The compositions of the present invention can be varied to yield products of substantially different character. For example, very lightweight products (similar to that of polystyrene foam) with rigid walls can be manufactured. For convenience, this first type of product is sometimes herein referred to as a "foam-like" product.

Alternatively, products that have an appearance more like that of a pottery or ceramic product can be made according to the present invention. However, the products of the present invention are much lighter, typically having a bulk specific gravity less than about 1.5, whereas pottery or ceramic products typically have a bulk specific gravity of 2 or greater. This second type of product of the present invention is sometimes herein referred to as a "clay-like" product, because it is a zero-slump, form stable moldable material that still has excellent workability properties.

Both foam-like and clay-like materials may first be molded into a sheet (or a continuous roll), which is later stamped, pressed, scored, folded, or rolled into a desired container or other article of manufacture. This third kind of product will be referred to as a "sheet-like" product, which will appear most like, and take the place of, paper or cardboard in many articles of manufacture.

A key feature of the microstructural engineering design of the present invention is the materials science optimization of each desired property (including minimization of cost). It is only because of the unique microstructural engineering of the present invention that the moldable mixtures, including hydraulically settable and inorganically filled mixtures, can be molded into a thin-walled, complex, lightweight product such as a food and beverage container and still maintain its shape without external support during the green state until hardening can be accomplished.

Indeed, the economic viability of mass producing articles such as food and beverage containers from moldable materials is only possible because the mixture is self-supporting during the green state and will maintain its molded state throughout the curing or drying process. In addition, the compositions importantly provide mixtures that rapidly reach a sufficiently high tensile and compressive strength so that the molded containers and other articles can be handled and manipulated using conventional means.

From the foregoing, an object of the present invention is to provide improved methods for manufacturing hydraulically settable and inorganically filled articles of manufacture that are presently formed from, *e*.*g*., paper, cardboard, polystyrene, plastic, or metals.

Another object and feature of the present invention is to provide methods which yield hydraulically settable and inorganically filled articles that have properties similar to those of paper, cardboard, polystyrene, plastic, or metals.

A further object of the present invention is to provide moldable mixtures which can be formed into a variety of articles using the same or similar manufacturing apparatus and techniques as those presently used to form such objects from, *e*.*g*., paper, cardboard, plastic, polystyrene, or metals.

Yet another object and feature of the present invention is to provide methods for manufacturing articles from moldable mixtures which do not result in the generation of wastes involved in the manufacture of paper, plastic, polystyrene, or metal materials.

Still a further object and feature is that the articles are readily degradable into substances which are nontoxic and commonly found in the earth.

Another object of the present invention is to provide methods which make possible the manufacture of articles at a cost comparable to and even superior to existing methods of manufacturing articles from existing materials.

Still another object and feature of the present invention is to provide methods of manufacture which are less energy intensive, conserve valuable natural resources, and require lower initial capital investments compared to those used in making articles from existing materials.

A further object of the present invention is to provide a manufacturing process in which the compositions contain less water which has to be removed (as compared to paper manufacturing) in order to shorten the processing time and reduce the initial equipment capital investment.

Finally, an additional object and feature of the present invention is to provide methods for mass producing articles from moldable mixtures which can rapidly be formed and substantially dried within a matter of minutes from the beginning of the manufacturing process.

These and other objects and features of the present invention will become more fully apparent from the following description and appended claims, or may be learned by the practice of the invention.

### BRIEF DESCRIPTION OF THE DRAWINGS

In order that the manner in which the above-recited and other advantages and objects of the invention are obtained, a more particular description of the invention briefly characterized above will be rendered by reference to specific embodiments thereof which are illustrated in the appended drawings. Understanding that these drawings depict only typical embodiments of the invention and are therefore not to be considered limiting of its scope, the invention will be described with additional specificity and detail through the use of the accompanying drawings in which:
Figure 1 is a comprehensive view of the system used for preparing the moldable mixtures of the present invention, including a mixer and a twin auger extruder.
Figure 2 is a schematic view of a male die and female die used in the die pressing process.
Figure 2A is a cross-sectional view of a split die.
Figure 2B is a cross-sectional view of a progressive die.
Figure 3 is a schematic view of a male die and a female die partially mated to form a gap distance.
Figure 4 is a cross-sectional view of a two-stage injector.
Figure 5 is a cross-sectional view of a reciprocating screw injector.
Figure 6 is a schematic view of the mixture being positioned between the male die and the female die.
Figures 7A-B are a schematic view of a template being used to position the moldable mixture.
Figure 8 is a cross-sectional view of an injection molding mold.
Figure 9 is a schematic view of the three stages used in injection blow molding.
Figures 10A-F illustrate the processing stages in extrusion blow molding.
Figures 11A-D illustrate the processing stages in jiggering.
Figure 12 is a comprehensive view of the preferred system used in manufacturing sheets in the wet sheet molding process, including a mixer, a twin auger extruder, a die head, and a plurality of reduction rollers.
Figure 13 is a cross-sectional view of a pair of reduction rollers.
Figure 14 is a schematic view of a male die and female die used in molding a wet sheet into a desired article.
Figures 15A-B are cross-sectional views of the molds used in the drape forming process.
Figures 16A-B are cross-sectional views of the molds used in straight vacuum forming.
Figure 17 is a cross-sectional view of the molds used in drape vacuum forming.
Figures 18A-B are cross-sectional views of the molds used in snapback vacuum forming.
Figures 19A-B are cross-sectional views of the molds used in billow/air-slip vacuum forming.
Figures 20A-B are cross-sectional views of the molds used in billow/drape vacuum forming.
Figures 21A-B are cross-sectional views of the molds used in plug assist vacuum forming.
Figure 22 A-C are cross-sectional views of the molds used in billow/plug-assist/snapback forming.
Figures 23A-C are cross-sectional views of the molds used in twin sheet forming.
Figure 24 is a comprehensive view of the system used in manufacturing sheets in the dry sheet forming process, including a mixer, an extruder, reduction rollers, heating rollers, compaction rollers, hard rollers, soft rollers, and a spool.
Figure 25 is a cross-sectional view of a sheet passing between a pair of compaction rollers.
Figure 26 is a sheet passing over a hard and soft roller.
Figure 27 reveals a sheet passing between corrugated rollers.
Figure 28 is a perspective view of a sheet being score cut by a knife blade cutter.
Figure 29 is a perspective view of a sheet being score cut by a continuous die cut roller.
Figure 30 is a perspective view of a score being pressed into a sheet by a scoring die.
Figure 31 is a perspective view of a sheet being perforated by a perforation cutter.
Figure 32A is a perspective view of a sealed end carton blank.
Figure 32B is a perspective view of a sealed end carton intermediary shell.
Figure 32C is a perspective view of a sealed end carton.
Figure 33A is a perspective view of a cup blank.
Figure 33B is a perspective view of a cup.
Figure 34 is a schematic view of an automated cup constructing apparatus.

### DETAILED DESCRIPTION OF THE PREFERRED EMBODIMENTS

The present invention relates to novel articles of manufacture containing inorganically filled materials and to methods for manufacturing certain articles of manufacture.

Thus viewed from one aspect the present invention provides a molded article of manufacture having an inorganically filled matrix formed by removing a substantial quantity of water by evaporation from an inorganically filled mixture, the inorganically filled mixture comprising:
water;
a water-dispersible organic polymer binder;
an inorganic aggregate having a concentration in a range from about 20% to about 95% by weight of total solids in the mixture; and
a fibrous material,
wherein the fibrous material is substantially homogeneously dispersed throughout the inorganically filled matrix, wherein the inorganically filled matrix has a thickness in a range from about 0.01 mm to about 1 cm and degrades after prolonged exposure to water,
characterised in that the inorganically filled mixture is substantially free of hydraulic cement.

Viewed from a further aspect the present invention provides a method for manufacturing an article having an inorganically filled matrix comprising the steps of:
mixing together a water-dispersible organic polymer binder, an inorganic aggregate in an amount in a range from about 20% to about 95% by weight of total solids, water, and a fibrous material to form a moldable mixture,
molding the moldable mixture in a heated mold in order to remove at least a portion of the water by evaporation and yield a form stable molded article; and
removing the form stable molded article from the mold, wherein the inorganically filled matrix has a thickness of less than about 2cm, characterised in that the moldable mixture is substantially free of hydraulic cement.

Hydraulically settable and inorganically filled materials, previously defined as moldable materials, can generally be described as multi-component, multi-scale, fiber-reinforced, micro-composites. By carefully incorporating a variety of different materials capable of imparting discrete yet synergistically related properties, it is possible to create micro-composites having remarkable properties of strength, toughness, environmental soundness, mass-producibility, and low cost. One important aspect is that by carefully choosing the sizes of the aggregate particles a highly homogeneous material can be produced.

In particular, materials that can include a hydraulically settable binder, an organic binder, fibers (both organic and inorganic), aggregates (both organic and inorganic) and various other components can be molded into an article of manufacture, including containers and packaging materials, that have traditionally been made of materials such as metal, plastic, glass, and paper. The novel materials or mixtures can be designed to have the properties of conventional materials while simultaneously possessing improved properties of being environmentally neutral in production and disposal and being less expensive. As will be discussed in greater detail, the articles of the present invention can be manufactured through a variety of process such as extruding, rolling, pressing, molding and combinations thereof.

### I. General Discussion.

### A. Microstructural Engineering Design.

As mentioned above, the compositions used to make the articles of the present invention have been developed from the perspective of microstructural engineering in order to build into the microstructure of the moldable material certain desired, predetermined properties, while at the same time remaining cognizant of costs and other manufacturing complications. Furthermore, this microstructural engineering analysis approach, in contrast to the traditional trial-and-error, mix-and-test approach, has resulted in the ability to design materials with those properties of strength, weight, insulation, cost, and environmental neutrality that are necessary for making articles in a significantly more efficient manner.

Moldable materials have an advantage over other conventional materials in that they gain their properties under relatively gentle and nondamaging conditions. (Other materials require high energy, severe heat, or harsh chemical processing that significantly affects the material components.) Therefore, many different materials can be incorporated into moldable materials with surprising synergistic properties or results if properly designed and engineered.

The design of the compositions has been developed and narrowed, first by primary constraints dictated by the design, and then by seeking the subset of materials which maximizes the performance of the components. At all times during the process, however, it is important to realize the necessity of designing products which can be manufactured in a cost-competitive process.

Primary constraints in materials selection are imposed by characteristics of the design of a component which are critical to a successful product. For example, with respect to a sheet used to make a container, those primary constraints include minimal weight, strength (both compressive and tensile), and toughness requirements, while simultaneously keeping the costs to those comparable to paper, cardboard, plastic, polystyrene, or metal counterparts.

One of the problems with moldable materials in the past have been the lengthy curing times before such materials would be demolded. An important feature of the present invention is that when the moldable mixture is molded into a desired article, it will maintain its shape (*i*.*e*., support its own weight subject to minor forces, such as gravity and movement through the processing equipment) in the green state without external support. Further, from a manufacturing perspective, in order for production to be economical, it is important that the molded article rapidly (in a matter of minutes or even seconds) achieve sufficient strength so that it can be handled using ordinary manufacturing procedures, even though the material may still be in a green state and not fully hardened.

In its simplest form, the process of using materials science in microstructurally engineering and designing a moldable material comprises characterizing, analyzing, and modifying (if necessary): (a) the aggregates, (b) the predicted particle packing, (c) the system rheology, and (d) the processing and energy of the manufacturing system. In characterizing the aggregates, the average particle size is determined, the natural packing density of the particles (which is a function of the actual particle sizes) is determined, and the strength of the particles is ascertained. (Unreacted hydraulic binder particles may be considered to be an aggregate.)

With this information, the particle packing can be predicted according to mathematical models. It has been established that the particle packing is a primary factor for designing desired requirements of the ultimate product, such as workability, form stability, shrinkage, bulk density, insulative capabilities, tensile, compressive, and flexural strengths, elasticity, durability, and cost optimization. The particle packing is affected not only by the particle and aggregate characterization, but also by the amount of water and its relationship to the interstitial void volume of the packed aggregates.

System rheology is a function of both macro-rheology and micro-rheology. The macro-rheology is the relationship of the solid particles with respect to each other as defined by the particle packing. The micro-rheology is a function of the lubricant fraction of the system. By modification of the lubricants (which may be water, rheology-modifying agents, plasticizers, or other materials), the viscosity and yield stress can be chemically modified. The micro-rheology can also be modified physically by changing the shape and size of the particles, *e*.*g*., the use of chopped fibers, plate-like mica, round-shaped silica fume, or crushed, angular, granular, hydrated binder particles will interact with the lubricants differently.

The concept of microstructural engineering is further discussed in United States patent application number 08/109,100, entitled Design Optimized Compositions and Processes For Microstructurally Engineering Cementitious Mixtures, filed August 18, 1993, in the names of Per Just Andersen and Simon K. Hodson which is incorporated herein by specific reference.

From the following discussion, it will be appreciated how each of the component materials within the moldable mixture, as well as the processing parameters, contributes to the primary design constraints of the articles of manufacture so that they can be economically mass produced. Specific compositions are set forth in the examples given later in order to demonstrate how the maximization of the performance of each component accomplishes the combination of desired properties.

### B. Articles of Manufacture.

The present invention is directed to the manufacturing of articles of manufacture, primarily containers and packaging materials. The term "article" or "article of manufacture" as used in the specification and appended claims, is intended to include all goods that can be formed by the processes disclosed herein, *e.g.*, die pressing, injection molding, blow molding, jiggering, wet sheet molding, and dry sheet molding, using the described moldable materials. Such articles include containers, packaging materials and other goods currently made from paper, plastic, styrofoam, metal, glass, and composites.

The terms "container" or "containers," as used in this specification and the appended claims, are intended to include any receptacle or vessel utilized for packaging, storing, shipping, serving, portioning or dispensing various types of products or objects (including both solids and liquids), whether such use is intended to be for a short-term or a long-term duration of time.

Containers within the scope of this invention include but are not limited to the following: cartons, boxes, corrugated boxes, sandwich containers, hinged "clam shell" containers (including but not limited to hinged sandwich containers utilized with fast-food sandwiches such as hamburgers and hinged salad containers), dry cereal boxes, frozen food boxes, milk cartons, fruit juice containers, carriers for beverage containers (including but not limited to wraparound carriers, basket-style carriers, and "six pack" ring-style carriers), ice cream cartons, cups (including but not limited to disposable drinking cups, two piece cups, one piece pleated cups and cone cups), french fry containers used by fast-food outlets, fast food carryout boxes, packaging, flexible packaging such as bags for snack foods, bags (including but not limited to bags with an open end such as grocery bags, bags within cartons such as a dry cereal box, and multiwall bags) sacks, wraparound casing, support cards for products which are displayed with a cover, particularly plastic covers (including food products such as lunch meats, office products, cosmetics, hardware items, and toys), support trays (for supporting products such as cookies and candy bars), cans, yoghurt containers, convoluted or spiral wound containers (for products such as frozen juice concentrate, oatmeal, potato chips, ice cream, salt, detergent, and motor oil), mailing tubes, sheet roll for rolling materials (such as wrapping paper, cloth materials, paper towels and toilet paper), sleeves, cigar boxes, confectionery boxes, boxes for cosmetics, plates, vending plates, pie plates, trays, baking trays, bowls, breakfast plates, microwaveable dinner trays, "TV" dinner trays, egg cartons, meat packaging platters, disposable single use liners which can be utilized with containers such as cups, wraps (including but not limited to freezer wraps, tire wraps, butcher wraps, meat wraps, and sausage wraps), food containers, substantially spherical objects, bottles, jars, cases, crates, dishes, lids, straws, envelopes, gummed tape, cutlery, postcards, three-ring binders, book covers, folders, toys, medicine vials, ampules, animal cages, non-flammable firework shells, model rocket engine shells, model rockets, and an endless variety of other objects.

In short, the article should be capable of holding its contents, whether stationary or in movement or handling, while maintaining its structural integrity or that of the materials contained therein or thereon. This does not mean that the article is required to withstand strong or even minimal forces. In fact, it may be desirable in some cases for a particular article to be extremely fragile or perishable. The article should, however, be capable of performing the function for which it was intended. The necessary properties may always be designed into the material and structure of the article beforehand.

The article should also be capable of containing its goods and maintaining its integrity for a sufficient period of time to satisfy its intended use. It will be appreciated that, under certain circumstances, the article may seal the contents from the external environments and in other circum-stances may merely hold or retain the contents.

Containment products used in conjunction with the containers are also intended to be included within the term "containers." Such products include, for example, lids; straws; interior packaging, such as, partitions, liners; anchor pads, corner braces, corner protectors, clearance pads, scored sheets, and trays; funnels, wrappers, cushioning materials, and any other object used in packaging storing, shipping, portioning, serving, or dispensing an object within a container.

The present invention may include certain types of articles such as those discussed in U.S. Patent No. 5,100,586, entitled "Cementitious Hazardous Waste Containers and Their Method of Manufacture." This patent discloses and claims cementitious containers for the storage of hazardous waste. For purposes of disclosure, the above-identified patent is incorporated herein by specific reference. Such hazardous waste containers can be spherical with a hollow core.

The articles within the purview of the present invention may or may not be classified as being disposable. In some cases, where a stronger, more durable construction is required, the article might be capable of repeated use. On the other hand, the article might be manufactured in such a way so as to be economical for it to be used only once and then discarded. The present articles have a composition such that they can be readily discarded or thrown away in conventional waste landfill areas as an environmentally neutral material (*i*.*e*., without causing significant extraordinary environmental hazards).

The term "blank" as used in this specification and the appended claims is intended to include a sheet ready for formation into a article. A blank is a sheet that has been cut into the appropriate shape, having the appropriate dimensions, with any appropriate scores, perforations, holes or slots which might facilitate its formation or assembly into the appropriate article.

The terms "moldable sheet" or "sheet" as used in this specification and the appended claims is intended to include any substantially flat, scored, cut, perforated, laminated, corrugated, curved, bent, printed, coated, or textured sheet using the methods described herein and useful for stock in forming containers or other articles. The only essential limitation is that the sheet include a matrix formed from a moldable material as defined herein. It is also within the scope of this invention to incorporated other materials onto the sheet by laminating the sheet with sheets formed from other materials such as paper, plastics, or metals by coating the sheet, by applying printing indicia to the sheet, by utilizing continuous fibers as an external support for the sheet, and by applying other nonhydraulically settable materials.

The term "matrix" or "structural matrix" as used in this specification and the appended claims is intended to refer to a moldable mixture that has been molded or formed into a desired shape. This term shall include all such matrices without regard to the extent of hydration and/or drying of the matrix. Hence, a matrix may comprise a moldable mixture in a green, hard, dry, set, or cured state.

The phrases "mass producible" or manufactured in a "commercial" or "economic" manner are intended in the specification and the appended claims to refer to a capability of the articles described herein to be rapidly produced at a rate that make their manufacture economically comparable to articles made from other materials, such as paper, cardboard, plastics, polystyrene, or metal. The present invention is directed to innovative compositions which solve the prior art problems involved in molding moldable materials in an economic or cost-effective manner. Articles made from moldable materials are intended to be competitive in the marketplace with articles currently made of other standard materials, such as paper, cardboard, plastic, polystyrene, glass, or metal.

### C. Moldable Materials.

As previously defined, the term "moldable material" as used in the specification and appended claims is intended to include "hydraulically settable mixtures, materials, or compositions" and "inorganically filled mixtures, materials, or compositions." The term "hydraulically settable materials" as used in this specification and the appended claims includes any material with a structural matrix and strength properties that are predominately derived from a hardening or curing of a hydraulic binder. Binders include cement, calcium sulfate (or gypsum), plaster, hemihydrate, and other substances which harden after being exposed to water. The hydraulically settable binders used in the present invention are to be distinguished from other cements or binders such as polymerizable, water insoluble organic cements, glues, or adhesives.

The term "inorganically filled materials" as used in the specification and appended claims is intended to broadly define materials and compositions characterized by having a high concentration of inorganic filler or aggregate (at least about 40% by volume of the total solids content of the dried article), water, and a structural matrix with strength properties that are predominately derived from a drying or hardening water-dispersable organic binder.

The terms "hydraulically settable, inorganically filled, and moldable mixture, material, or composition" shall refer to the mixture regardless of the extent of drying or curing that has taken place. These mixtures shall include mixtures that are highly workable, which are partially dried or cured, and which have been completely dried or cured (although a certain amount of water will usually remain within the article as bound water within the hydraulic and organic binder).

Moldable mixtures may often contain the same components, however, the components will be in different concentration and serve a different function. For example, a mixture including a hydraulic binder, an organic binder, aggregates, fibrous material, and water may be defined as either a hydraulically settable mixture or an organically filled mixture.

As a hydraulically settable mixture, the hydraulic binder is added in sufficient concentrations to function as the predominate binder for the mixture while the organic binder, although perhaps assisting as a binder, primarily functions as a rheology-modifying agent. In contrast, as a inorganically filled mixture, the hydraulically settable binder is added in such minimal concentrations that it primarily functions as an aggregate while the organic binder functions as the primary binder. The above discussed moldable mixtures may also include other admixtures such as plasticizers, lubricants, dispersants, and air void forming agents.

### 1. Hydraulically Settable Binders.

The terms "hydraulically settable binder" or "hydraulic binder" as used in this specification and the appended claims are intended to include any inorganic binder such as hydraulic cement, gypsum hemihydrate, or calcium oxide which develop strength properties and hardness by chemically reacting with water and, in some cases, with carbon dioxide in the air and water. The terms "hydraulic cement" or "cement" as used in this specification and the appended claims are intended to include clinker and crushed, ground, milled, and processed clinker in various stages of pulverization and in various particle sizes.

Examples of typical hydraulic cements known in the art include the broad family of portland cements (including ordinary portland cement without gypsum), MDF cement, DSP cement, Densite-type cements, Pyrament-type cements, calcium aluminate cements (including calcium aluminate cements without set regulators), plasters, silicate cements (including β-dicalcium silicates, tricalcium silicates, and mixtures thereof), gypsum cements, phosphate cements, high alumina cements, microfine cements, slag cements, magnesium oxychloride cements, and aggregates coated with microfine cement particles. The term "hydraulic cement" is also intended to include other cements known in the art, such as α-dicalcium silicate, which can be made hydraulic under hydrating conditions within the scope of the present invention.

Gypsum is also a hydraulically settable binder that can be hydrated to form a hardened binding agent. One hydratable form of gypsum is calcium sulfate hemihydrate, commonly known as "gypsum hemihydrate." The hydrated form of gypsum is calcium sulfate dihydrate, commonly known as "gypsum dihydrate." Calcium sulfate hemihydrate can also be mixed with calcium sulfate anhydride, commonly known as "gypsum anhydrite" or simply "anhydrite."

Although gypsum binders or other hydraulic binders such as calcium oxide are generally not as strong as hydraulic cement, high strength may not be as important as other characteristics (*e.g.*, the rate of hardening) in some applications. In terms of cost, gypsum and calcium oxide have an advantage over hydraulic cement because they are somewhat less expensive. Moreover, in the case where the hydraulically settable material contains a relatively high percentage of weak, lighter weight aggregates (such as perlite), the aggregates will often comprise a "weak link" within the structure of the hydraulically settable matrix. At some point, adding a stronger binder may be inefficient because the binder no longer contributes its higher potential strength due to a high content of weaker aggregates.

Terms such as "hydrated" or "cured" refer to a level of substantial water-catalyzed reaction which is sufficient to produce a hydraulically settable product having a substantial amount of its potential or final maximum strength. Nevertheless, hydraulically settable materials may continue to hydrate long after they have attained significant hardness and a substantial amount of their final maximum strength.

Terms such as "green" or "green state" are used in conjunction with moldable mixtures which have not achieved a substantial amount of their final strength, regardless of whether such strength is derived from artificial drying, curing, or other means. Moldable mixtures are said to be "green" or in a "green state" just prior and subsequent to being molded into the desired shape. The moment when a moldable mixture is no longer "green" or in a "green state" is not necessarily a clear-cut line of demarcation, since such mixtures generally attain a substantial amount of their total strength only gradually over time. Moldable mixtures can, of course, show an increase in "green strength" and yet still be "green." For this reason, the discussion herein often refers to the form stability of the moldable material in the green state.

As mentioned above, preferable hydraulic binders include white cement, portland cement, microfine cement, high alumina cement, slag cement, gypsum hemihydrate, and calcium oxide, mainly because of their low cost and suitability for the manufacturing processes of the present invention. This list of cements is by no means exhaustive, nor in any way is it intended to limit the types of binders which would be useful in making the hydraulically settable articles within the scope of the claims appended hereto.

An important advantage of using hydraulically settable binders in order to form the hydraulically settable matrix of the article is that such binders are generally resistant to or even insoluble in water. Nevertheless, as set forth more fully below, certain other ingredients including for example rheology modifying agents, are water soluble. By adjusting the balance between the soluble and insoluble constituents within the moldable mixture, one can design a article having a desired level of water resistance or degradability in water. As a general rule, adding more hydraulic cement decreases the article's solubility in water and increases its resistance to water degradation. Conversely, by adding less hydraulic cement and more water soluble components such as rheology modifying agents, the article will be far more susceptible to water degradation. The level of water resistance or degradation is of course a function of the performance criteria of the article in question.

The percentage of hydraulically settable binder within the overall mixture varies depending on the identity of the other added constituents. However, the hydraulic binder is preferably added in an amount ranging from between about 2% to about 60% by volume of the total solids of the moldable mixture. From the disclosure and examples set forth herein, it will be understood that this wide range of weights covers moldable mixtures used to manufacture foam-like or clay-like sheets and articles.

It will be appreciated from the foregoing that embodiments within the scope of the present invention will vary from a very lightweight "foam-like" product to a somewhat higher density "clay-like" product. Either foam-like or clay-like materials can readily be molded into sheets which can be handled much like paper, cardboard, plastic, polystyrene or even a sheet of metal. Within these broader categories will be other variations and differences which will require varying quantities and identities of the components. The components and their relative quantities may substantially vary depending upon the specific article to be made.

Generally, when making a "foam-like" article, it will be preferable to include the hydraulically settable binder within the range from between about 3% to about 60% by volume of the total solids of the moldable mixture, and more preferably within the range from between about 10% to about 30%.

When making a "clay-like" article, it will be preferable to include the hydraulically settable binder within the range from between about 2% to about 60% by volume of the total solids of the moldable mixture, preferably within the range from about 4% to about 40%, and most preferably within a range from about 5% to about 30% of the total solids of the moldable mixture.

### 2. Water-Dispersable Organic Binders.

In the event that the amount of hydraulically settable binder added to the moldable mixture is substantially decreased, or eliminated altogether, it will usually be necessary to increase the amount of rheology-modifying agent to the point where it also acts as an organic binder. In this case, the moldable mixtures will develop strength properties through the drying out of a substantially solvated "water-dispersable organic binder" or "organic binder." (Of course, even where a hydraulically settable binder is used it may be advantageous in some cases to include a large amount of organic binder in order to increase the tensile strength and flexibility of the final hardened material. The decision will often depend on the economics of the manufacture of a given article since the organic binder is usually far more expensive than hydraulically settable binders.)

The moldable mixtures first develop workability and flow properties by adding an amount of water to the mixture sufficient to lubricate the solid inorganic aggregate particles and fibers, and to solvate, or at least disperse, the water-dispersable organic binder. Thereafter, the removal of water, such as by evaporation, allows the water-dispersable binder to develop its maximum strength properties.

For example, certain starch-based materials can be purchased as tiny granules which are in a powder-like form. The starch based binder is "activated" by dissolving and gelating the starch binder in water by heating the dispersion above the gelation temperature. After the water has been removed, such starch based materials can, by themselves, have tensile strengths of up to about 40-50 MPa. Through careful microstructural engineering, the highly inorganically filled articles can have varying tensile strengths, even approaching 40 MPa in some cases.

The water-dispersable organic binder not only binds the individual aggregate particles and fibers together within the mixture upon drying or hardening (thereby forming a structural or highly inorganically filled matrix), but they also have the general tendency of affecting the rheology of the moldable mixture. Accordingly, as used in the specification and appended claims, the term "rheology-modifying agent" is synonymous with the term "organic binder" when identifying a particular substance. The difference is only in the amount that such substance is added to the moldable mixture.

The inclusion of a rheology-modifying agent or organic binder acts to increase the plastic or cohesive nature of the hydraulically settable mixture so that it behaves more like a moldable clay. The rheology-modifying agent tends to increase the yield stress of the mixture without greatly increasing the viscosity. Raising the yield stress in relation to the viscosity makes the material more plastic-like and moldable, while greatly increasing the subsequent form stability and green strength of the molded material.

The various rheology-modifying agents or organic binders contemplated by the present invention can be roughly organized into the following categories: (1) polysaccharides and derivatives thereof, (2) proteins and derivatives thereof, and (3) synthetic organic materials. Polysaccharide rheology-modifying agents can be further subdivided into (a) cellulose-based materials and derivatives thereof, (b) starch based materials and derivatives thereof, and (c) other polysaccharides.

Suitable cellulose-based material, for example, methylhydroxyethylcellulose, hydroxymethylethylcellulose, carboxymethylcellulose, methylcellulose, ethylcellulose, hydroxyethylcellulose, hydroxyethylpropylcellulose, and the like. The entire range of possible permutations is enormous and cannot be listed here, but other cellulose materials which have the same or similar properties as these would also work well.

Suitable starch-based materials include, for example, amylopectin, amylose, seagel, starch acetates, starch hydroxyethyl ethers, ionic starches, long-chain alkylstarches, dextrins, amine starches, phosphate starches, and dialdehyde starches.

Other natural polysaccharide based materials include, for example, alginic acid, phycocolloids, agar, gum arabic, guar gum, locust bean gum, gum karaya, and gum tragacanth.

Suitable protein-based materials include, for example, Zein® (a prolamine derived from corn), collagen derivatives extracted from animal connective tissue such as gelatin and glue, and casein (the principal protein in cow's milk).

Suitable synthetic organic materials include, for example, polyvinyl pyrrolidone, polyethylene glycol, polyvinyl alcohol, polyvinylmethyl ether, polyacrylic acids, polyacrylic acid salts, polyvinylacrylic acids, polyvinylacrylic acid salts, polyacrylimides, ethylene oxide polymers, polylactic acid, synthetic clay, and latex, which is a styrene-butadiene copolymer.

A currently preferred rheology-modifying agent or organic binder is methylhydroxyethylcellulose, examples of which are Tylose® FL 15002 and Tylose® 4000, both of which are available from Hoechst Aktiengesellschaft of Frankfurt, Germany. Another preferred rheology-modifying agent that can be used instead of, or in conjunction with, Tylose® is polyethylene glycol having a molecular weight of between 20,000 and 35,000. Polyethylene glycol works more as a lubricant and adds a smoother consistency to the mixture. For this reason, polyethylene glycol might be referred more precisely as a "plasticizer." In addition, it gives the molded hydraulically settable material a smoother surface. Finally, polyethylene glycol can create a coating around soluble components of the mixture and thereby render the hardened product less water soluble.

Finally, starch-based rheology-modifying agents are of particular interest within the scope of the present invention because of their comparatively low cost compared to cellulose-based rheology-modifying agents such as Tylose®. Although starches typically require heat and/or pressure in order to gelate, starches may by modified and prereacted so that they can gel at room temperature. The fact that starches, as well as many of the other rheology-modifying agents listed above, have a variety of solubilities, viscosities, and rheologies allows for the careful tailoring of the desired properties of a mix design so that it will conform to the particular manufacturing and performance criteria of a particular article.

It is also within the scope of this invention to include mixtures of cellulose-based materials, protein based materials, starch based materials, and synthetic organic materials.

The rheology-modifying agent within the hydraulically settable materials of the present invention can be included in an amount within the range from about 0.1% to about 30% by volume of the total solids of the hydraulically settable mixture. Generally, however, the preferable concentration is within the range from about 0.5% to about 15% by volume of the total solids of the hydraulically settable mixture. The rheology-modifying agent is more preferably within the range from about 1% to about 10% and most preferably within the range from about 2% to about 5%.

The water-dispersable organic binders within the moldable mixtures of the present invention are preferably included in an amount such that a substantially hardened article manufactured therefrom will contain from about 1% to about 50% organic binder by volume of the total solids within the hardened sheet, more preferably from about 2% to about 30%, and most preferably from about 5% to about 20%.

### 3. Water.

With regard to inorganically filled materials, water is added to the moldable mixture in order to solvate, or at least disperse, the water-dispersable organic binder within the mixture. In many cases, some of the water actually reacts with and becomes chemically bound within the organic binder. In other cases it may be more loosely bound to the organic binder, often by means of hydrogen bonding. Certain amounts of water may also react with other admixtures within the mixture, such as hydraulically settable binders or other materials which chemically react with water. The hydration reaction between the hydraulically settable binder and water yields reaction products which give the hydraulically settable materials the ability to set up and develop strength properties.

Independent of the type of moldable mixture, the water also serves the function of creating a moldable mixture having the desired rheological properties, including viscosity and yield stress. These properties are general ways of approximating the "workability" or flow properties of the moldable mixture.

In order for the moldable mixture to have adequate workability, water must generally be included in quantities sufficient to solvate or at least disperse the organic binder in the inorganically filled mixtures and to initially react with the hydraulically settable binder in the hydraulically settable materials. Furthermore, sufficient water should be added to wet each of the aggregate particles, fibers, or other solid particles and to at least partially fill the interstices or voids between the particles. In some cases, such as where a dispersant or a lubricant is added, adequate workability can be maintained while using less water initially.

The amount of water that is added to the moldable mixture must be carefully balanced so that the mixture is sufficiently workable, while at the same time recognizing that lowering the initial water content increases both the green strength and the final strength of the hardened product. Less water results in a stronger final product because the total porosity is reduced during the molding processes. Moreover, if less water is initially included in the moldable mixture, less water must be removed in order to cause the molded article or sheet to harden.

The appropriate rheology to meet these needs can be defined in terms of yield stress. The yield stress of the moldable mixture will preferably be in the range from about 2 kPa to about 5 MPa, more preferably in the range from about 100 kPa to about 1 MPa, and most preferably in the range from about 200 kPa to about 700 kPa. The desired level of yield stress can be adjusted and optimized to the particular molding process being used to form the articles made therefrom.

In some cases it may be desirable to initially include a relatively high amount of water in light of the fact that excess water can later be removed by heating the article during or shortly after the molding process. It should also be understood that the hydraulically settable binder has an internal drying effect on the hydraulically settable mixture because binder particles chemically react with water and reduce the amount of free water within the interparticulate interstices. This internal drying effect can be enhanced by including faster reacting hydraulic binders such as gypsum hemihydrate along with slower reacting hydraulic cement.

As set forth more fully below, the sizes of the individual aggregate particles and fibers can be selected in order to increase the particle packing density of the resulting moldable mixture. The amount of water that must be added in order to obtain a moldable mixture having a particular rheology or yield stress will, to a large extent, depend on the particle-packing density. For example, if the particle-packing density of the moldable mixture is 0.65, water will be included in an amount of roughly 35% by volume in order to substantially fill the interstitial voids between the particles. On the other hand, a moldable mixture having a particle-packing density of 0.95 will only require water in an amount of about 5% by volume in order to substantially fill the interstitial voids. This is a seven-fold decrease in the amount of water which must be added in order to substantially fill the interstitial voids, which influences the rheology and workability of the moldable mixture.

In light of the foregoing, the amount of water which should be added to the mixture will depend to a large extent on the level of particle packing density within the mixture, the amount of water-dispersable binder that is added, the amount of hydraulically settable binder that is added, and the desired rheology of the resultant moldable mixture. Hence, the amount of water that will be added to form the moldable mixture will range from as little as 5% to as high as 50% by volume of the moldable mixture. The exact amount of water will greatly vary depending on the volume and identity of other components and admixtures within the mixture. One skilled in the art will be able to adjust the level of water to obtain adequate workability for any given manufacturing process.

It is preferable in most cases to include the minimum amount of water that is required to give the moldable mixture the desired level of workability, and thereby reduce the amount of water that must be removed from the processed article. Decreasing the amount of water that must be removed generally reduces the cost of manufacture since removing water requires energy. Nevertheless, the compositions of the present invention include far less water, even at the upper ranges of water inclusion, compared to slurries used to make paper articles, which generally contain more than 95% water by volume.

Nevertheless, upon removing the water from the molded article, the total amount of water remaining after the drying process will range up to about 10% by weight.

### 4. Aggregates.

Inorganic materials commonly used in the paper industry, as well as more finely ground aggregate materials used in the concrete industry, may be used in the moldable mixtures of the present invention. Nevertheless, the size of the aggregate or inorganic filler materials will often be many times larger than inorganic filler materials used in the paper industry. While the average diameter of the particles within the inorganic fillers used in the paper industry will usually be less than 2 microns, the average particle diameter of the aggregate materials used in the present invention will typically be up to 100 microns or larger depending on the wall thickness of the resulting article and, hence, be less expensive in general.

The large variety of inorganic aggregate materials that may be added to the moldable mixtures of the present invention allow a variety of properties to be added to the final article. The aggregate materials employed in the present invention can be added to increase the strength (tensile and, especially, compressive strength), increase the modulus of elasticity and elongation, decrease the cost by acting as an inexpensive filler, decrease the weight, and/or increase the insulation ability of the resultant article of manufacture. In addition, plate-like aggregates, such as mica and kaolin, can be used in order to create a smooth surface finish in the articles of the present invention. Typically, larger aggregates, such as calcium carbonate, give a matte surface, while smaller particles give a glass surface.

Examples of useful inorganic aggregates include perlite, vermiculite, sand, gravel, rock, limestone, sandstone, glass beads, aerogels, xerogels, seagel, mica, clay, synthetic clay, alumina, silica, fly ash, fumed silica, fused silica, tabular alumina, kaolin, microspheres, hollow glass spheres, porous ceramic spheres, gypsum dihydrate, calcium carbonate, calcium aluminate, cork, seeds, lightweight polymers, xonotlite (a crystalline calcium silicate gel), lightweight expanded clays, hydrated or unhydrated hydraulic cement particles, pumice, exfoliated rock, and other geologic materials. Partially hydrated and hydrated cement, as well as silica fume, have a high surface area and give excellent benefits such as high initial cohesiveness of the freshly formed article.

Even discarded inorganically filled materials, such as discarded sheets, containers, or other articles of the present invention can be employed as aggregate fillers and strengtheners. It will also be appreciated that the sheets and other objects of the present invention can be easily and effectively recycled by simply adding them to fresh moldable mixtures as an aggregate filler.

Both clay and gypsum are particularly important aggregate materials because of their ready availability, extreme low cost, workability, ease of formation, and because they can also provide a degree of binding and strength if added in high enough amounts. "Clay" is a term that refers to materials found in the earth that have certain chemical compositions and properties. The predominant clays include silica and alumina (used for making pottery, tiles, brick, and pipes) and kaolinite. The kaolinic clays are anauxite, which has the chemical formula Al₂O₃·SiO₂·H₂O, and montmorilonite, which has the chemical formula Al₂O₃·SiO₂·H₂O. However, clays may contain a wide variety of other substances, such as iron oxide, titanium oxide, calcium oxide, calcium oxide, zirconium oxide, and pyrite.

In addition, although clays have been used for millennia and can obtain hardness even without being fired, such unfired clays are vulnerable to water degradation and exposure, are extremely brittle, and have low strength. Nevertheless, clay makes a good, inexpensive aggregate within the moldable materials of the present invention.

Similarly, gypsum hemihydrate is also hydratable and forms the dihydrate of calcium sulfate in the presence of water. Thus, gypsum may exhibit the characteristics of both an aggregate and a binder depending on whether (and the concentration of) the hemihydrate or dihydrate form is added to a moldable mixture.

Even hydraulic cement, such as portland cement, can be added as an inorganic filler material within the moldable mixtures of the present invention. Not only are hydraulic cements relatively inexpensive and plentiful, but they also can impart a degree of binding to the inorganically filled matrix if included in high enough amounts. The reaction between hydraulically settable binders and water causes an internal drying effect within the moldable mixture which effectively removes at least some of the water within the mixture without the need for evaporation.

Prehydrated hydraulic cement particles may also be added as an aggregate filler. One difference between unhydrated and prehydrated cement is that the latter has a definable morphology of plates and platelets.

In addition, the hydraulic cement can effect the rheology of the moldable mixture, at least in part by chemically reacting with the water, thereby diminishing the amount of water available to lubricate the aggregate particles and fibers. In addition, it has been found that portland grey cement increases the internal cohesion of the moldable mixture. Finally, although it is not known for sure, it is possible that hydraulic cement may interact to some degree with the large number of hydroxyl groups present on many organic polymer binders. The hydroxyl groups of such binders will, at a minimum, have hydrogen bonding-like interactions with the highly polar hydraulic cement gel products, being known to adsorb onto the surface of cement particles.

Because of the nature of the moldable mixtures and articles made therefrom, it is possible to include lightweight aggregates having a high amount of interstitial space in order to impart an insulation effect with the molded sheets. Examples of aggregates which can add a lightweight characteristic to the moldable mixture include perlite, vermiculite, glass beads, hollow glass spheres, calcium carbonate, synthetic materials (*e*.*g*., porous ceramic spheres, tabular alumina, etc.), cork, lightweight expanded clays, sand, gravel, rock, limestone, sandstone, pumice, and other geological materials.

In addition to conventional aggregates used in the paper and cement industries, a wide variety of other aggregates, including fillers, strengtheners, including metals and metal alloys (such as stainless steel, calcium aluminate, iron, copper, silver, and gold), balls or hollow spherical materials (such as glass, polymeric, and metals), filings, pellets, powders (such as microsilica), and fibers (such as graphite, silica, alumina, fiberglass, polymeric, organic fibers, and other such fibers typically used to prepare various types of composites), may be added to the moldable mixtures.

In addition to these inorganic aggregates, certain organic, polymeric, or elastomeric aggregates such as seeds, starches, gelatins, agar-type materials, cork or plastic spheres can be used as an aggregate material to impart varying properties such as flexibility into the finished product. Lightweight plastic spheres are especially useful where a combination of low weight, high flexibility and resilience is desired, such as in materials used to cushion, partition, separate, wrap, line or space.

A preferred polymeric sphere is made from lightweight polyethylene, with a density of 0.01 to 0.3 g/cm³ and a particle size of less than 100 microns, although larger spheres may be preferred in larger packaging materials.

In those products where lightweight plastic spheres are used, such as in lightweight and flexible containers, partitions, or lining materials, the amount of plastic spheres will preferably be within the range from about 1% to about 10% by weight, and most preferably within the range from about 3% to about 6%. Hence, cushioning materials made according to the present invention that contain plastic spheres are far more environmentally neutral than those made from polystyrene, the almost universal cushioning material of choice, the contains 100% polystyrene. Pound for pound, the cushioning materials of the present invention impart far less plastic into the environment than their polystyrene counterparts. If water degradable flexible aggregates such as, for example, agar or amylopectin granules are used instead of plastic balls, the cushioning materials will be essentially nonpolluting.

It may be advantageous to concentrate the majority of plastic balls near the surface of the article where the need for flexibility is the greatest. Similarly, near the core of the article where durability and rigidity are more important there might be few or no plastic balls. This concentration of plastic balls near the surface of the article increases their effectiveness while allowing a decrease in their amount, thus making the articles of the present invention even more environmentally sound. Such articles might contain as little as 1% plastic balls by weight.

It is often preferable, according to the present invention, to include a plurality of differently sized and graded aggregates capable of more completely filling the interstices between the aggregate particles and fibers within the moldable mixture. Optimizing the particle packing density reduces the amount of water that is required to obtain the desired level of workability by eliminating spaces which would otherwise be filled with interstitial water, often referred to as "capillary water."

In order to optimize the packing density, differently sized aggregates with particle sizes ranging from as small as about 0.05 microns to as large as about 2 mm may be used. (Of course, the desired purpose and thickness of the resulting product will dictate the appropriate particle sizes of the various aggregates to be used.) It is within the skill of one in the art to know generally the identity and sizes of the aggregates to be used in order to achieve the desired rheological properties of the green moldable mixtures, as well as the final strength and weight properties of the final hardened inorganically filled composite.

In certain embodiments, it may be desirable to maximize the concentration of aggregates within the moldable mixture in order to maximize the properties and characteristics of the aggregates (such as qualities of strength, low density, or high insulation). Depending upon the natural packing density of each aggregate material and the relative sizes of the particles the resulting volume of the combined aggregates may be less than the sum of the volumes of the aggregates before they were mixed.

A detailed discussion of particle packing can be found in the following article coauthored by one of the inventors of the present invention: Johansen, V. & Andersen, P.J., "Particle Packing and Concrete Properties," Materials Science of Concrete II at 111-147, The American Ceramic Society (1991). Further information is available in the Doctoral Dissertation of Anderson, P.J., "Control and Monitoring of Concrete Production -- A Study of Particle Packing and Rheology," The Danish Academy of Technical Sciences. For purposes of disclosure, the foregoing article and doctoral dissertation are incorporated herein by specific reference. The advantages of such packing of the aggregates can be further understood by reference to the examples which follow in which hollow glass spheres of varying sizes are mixed in order to maximize the amount of the insulating spheres within the moldable mixture.

In embodiments in which it is desirable to obtain an article having high insulation capability, it may be preferable to incorporate into the highly inorganically filled matrix a lightweight aggregate which has a low thermal conductivity, or "k-factor" (defined as W/m·K). The k-factor is roughly th reciprocal of the expression commonly used in the United States to describe the overall thermal resistance of a given material, or "R-factor," which is generally defined as having units of hr·ft²°F/BTU. The term R-factor is most commonly used in the United States to describe the overall thermal resistance of a given material without regard to the thickness of the material. However, for purposes of comparison, it is common to normalize the R-factor to describe thermal resistance per inch of thickness of the material in question or hr·ft²°F/BTU·in.

For purposes of this specification, the insulation ability of a given material will hereinafter be expressed only in terms of the IUPAC method of describing thermal conductivity, *i*.*e*., "k-factor." (The conversion of thermal resistance expressed in British units (hr·ft²°F/BTU·in) to IUPAC units can be performed by multiplying the normalized number by 6.9335 and then taking the reciprocal of the product.) Generally, aggregates having a very low k-factor also contain large amounts of trapped interstitial space, air, mixtures of gases, or a partial vacuum which also tends to greatly reduce the strength of such aggregates. Therefore, concerns for insulation and strength tend to compete and should be carefully balanced when designing a particular mixed design.

The preferred insulating, lightweight aggregates include expanded or exfoliated vermiculite, perlite, calcined diatomaceous earth, and hollow glass spheres, all of which tend to contain large amounts of incorporated interstitial space. However, this list is in no way intended to be exhaustive, these aggregates being chosen because of their low cost and ready availability. Any aggregate with a low k-factor, which is able to impart sufficient insulation properties to the sheet or other article made therefrom, is within the scope of the present invention.

In light of the foregoing, the inorganic aggregate will preferably be included in an amount as low as about 40% by volume of the total solids content of the hardened sheet, and as high as about 98%, more preferably in a range from about 50% to about 95%, and most preferably in a range from about 60% to about 80% by volume of the total solids.

### 5. Fibers.

As used in the specifications and appended claims, the terms "fibers" and "fibrous materials" include both inorganic fibers and organic fibers. Fibers are a particular kind of aggregate which may be added to the moldable mixtures to increase the elongation ability, deflection ability, toughness, fracture energy, and flexural and tensile strengths of the molded articles. Fibrous materials reduce the likelihood that the fashioned articles and containers will shatter when a strong cross-sectional force is applied.

Fibers which may be incorporated into the moldable materials are preferably naturally occurring fibers, such as cellulosic fibers extracted from hemp, cotton, plant leaves, wood or stems, or fibers made from glass, silica, graphite, ceramic, or metal. Glass fibers are preferably pretreated to be alkali resistant.

Preferred fibers of choice include glass fibers, abaca, bagasse, wood fibers (both hardwood or softwood such as southern pine), ceramic fibers (such as alumina, silica nitride, silica carbide, graphite) and cotton. Recycled paper fibers can be used, but they are somewhat less desirable because of the fiber degradation that occurs during the original paper manufacturing process, as well as in the recycling process. Any equivalent fiber, however, which imparts strength and flexibility is also within the scope of the present invention. Abaca fibers are available from Isarog Inc. in the Philippines. Glass fibers such as Cemfill® are available from Pilkington Corp, in England.

These fibers are preferably used in the present invention due to their low cost, high strength, and ready availability. Nevertheless, any equivalent fiber which imparts the compressive and tensile strength needed, as well as toughness and flexibility is certainly within the scope of the present invention. The only limiting criteria is that the fiber impart the desired properties without adversely reacting with the other constituents of the moldable material and without contaminating the materials (such as food) stored or dispensed in articles made from materials containing the fibers.

The fibers used to make the articles and containers of the present invention preferably have a high length to width ratio (or "aspect ratio"). Longer, narrower fibers can impart more strength to the structural matrix without significantly adding bulk and mass to the composite materials. The fibers should have an average aspect ratio of at least about 10:1, preferably at least about 100:1, and most preferably at least about 200:1.

The amount of fibers added to the moldable material will vary depending upon the desired properties of the final product, with strength, toughness, flexibility, and cost being the principal criteria for determining the amount of fiber to be added in any mix design. In most cases, fibers will be added in an amount within the range from about 0.2% and to about 50% by volume of the total solids of the moldable mixture, more preferably within the range from about 1% to about 30%, and most preferably within the range from about 5% to about 20% of the total solids of the moldable mixture.

It has been found that slight increases of fiber concentration below about 20% fiber by volume tend to dramatically increase the strength, toughness, and bending endurance of the finished article. Adding fibers above about 20% by volume will produce a less dramatic increase in the strength and flexibility of the article, although such increases may be economically justified in individual circumstances.

It will be appreciated, however, that the strength of the fiber is a very important feature in determining the amount of the fiber to be used. The stronger the tensile strength of the fiber, the less the amount that must be used to obtain the same level of tensile strength in the resulting product. Of course, while some fibers have a high tensile strength, other types of fibers with a lower tensile strength may be more elastic. Fibers with a smaller aspect ratio are more easily placed and yield a sheet with fewer defects, while a larger aspect ratio increases the strength-imparting effect of the fiber. Hence, a combination of two or more fibers may be desirable in order to obtain a resulting product that maximizes multiple characteristics, such as high tensile strength, high elasticity, and better fiber placement.

It should also be understood that some fibers, such as southern pine and abaca, have high tear and burst strengths. Others, such as cotton, have lower strength but greater flexibility. In the case where better placement, higher flexibility, and high tear and burst strength are desired, a mixture of fibers having the various properties can be added to the mixture.

Finally, certain fibers and inorganic fillers are known to chemically interact and bind with certain starch-based organic polymer binders, thereby adding another dimension to the materials of the present invention. For example, it is known that many fibers and inorganic fillers are anionic in nature and have a negative charge. Therefore, in order to maximize the interaction between the organic binder and the anionic fibers and inorganic materials, it may be advantageous to add a positively charged organic binder, such as a cationic starch.

Better water resistance can be obtained by treating the fibers with rosin and alum (Al₂(SO₄)₃) or NaAl(SO₄)₂, the latter of which precipitate out the rosin onto the fiber surface making it highly hydrophobic. The aluminum floc that is formed by the alum creates an anionic adsorption site on the fiber surface for a positively charged organic binder, such as a cationic starch.

### 6. Dispersants.

The term "dispersant" is hereinafter used to refer to the class of materials which can be added to reduce the viscosity and yield stress of the moldable mixture. A more detailed description of the use of dispersants may be found in the Master's Thesis of Andersen, P.J., "Effects of Organic Superplasticizing Admixtures and Their Components on Zeta Potential and Related Properties of Cement Materials" (1987). For purposes of disclosure, the above-referenced article is incorporated herein by specific reference.

Dispersants generally work by being adsorbed onto the surface of the aggregates, hydraulic binder particles, and/or into the near colloid double layer of the binder particles. This creates a negative charge around the surfaces of particles, causing them to repel each other. This repulsion of the particles adds "lubrication" by reducing the "friction" or attractive forces that would otherwise cause the particles to have greater interaction. Because of this, less water can be added initially while maintaining the workability of the moldable mixture.

Greatly reducing the viscosity and yield stress may be desirable where plastic-like properties, cohesiveness, and/or form stability are less important. Adding a dispersant aids in keeping the moldable mixture workable even when very little water is added.

Nevertheless, due to the nature of the coating mechanism of the dispersant, the order in which the dispersant is added to the mixture can often be critical. If certain water-dispersable organic binders (such as Tylose® ) are used, the dispersant should be added to a mixture containing water and at least part of the inorganic aggregates first and then the binder should be added second. Otherwise, the dispersant will be less able to become adsorbed onto the surface of the aggregate particles because the Tylose® will first be irreversibly adsorbed, thereby forming a protective colloid on the surface and thereby preventing the dispersant from being adsorbed.

A preferred dispersant is sulfonated naphthalene-formaldehyde condensate, an example of which is marketed under the trademark WRDA 19, which is available from W. R. Grace, Inc. Other dispersants which can also work well include sulfonated melamine-formaldehyde condensate, lignosulfonate, and polyacrylic acid. The concentration of the dispersant will generally range up to about 5% by weight of the water, more preferably in the range from about 0.5% to about 4%, and most preferably within the range from about 1% to about 2%.

The dispersants contemplated within the present invention have sometimes been referred to in the concrete industry as "superplasticizers." In order to better distinguish dispersants from other rheology-modifying agents, which often act as plasticizers, the term "superplasticizer" will not be used in this specification.

### 7. Air Voids.

Where insulation, not strength, is the overriding factor (*i*.*e*., whether it is desired to insulate hot or cold materials), it may be desirable to incorporate tiny air voids within the structural matrix of the articles in addition to lightweight aggregates in order to increase the insulating properties of the articles. The incorporation of air voids into the moldable mixture is carefully calculated to impart the requisite insulation characteristics without degrading the strength of the article to the point of nonutility. Generally, however, if insulation is not an important feature of a particular product, it is desirable to minimize any air voids in order to maximize strength and minimize volume.

In certain embodiments, finely dispersed air voids may be introduced by high shear, high speed mixing of moldable mixture, with a foaming or stabilizing agent added to the mixture to aid in the incorporation of air voids. The high shear, high energy mixers discussed above are particularly useful in achieving this desired goal. Suitable air entraining agents include commonly used surfactants and vinsol resin. One currently preferred surfactant is polypeptide alkylene polyol, such as Mearlcrete® Foam Liquid.

In conjunction with the surfactant, it will be necessary to stabilize the entrained air within the material using a stabilizing agent like Mearlcel 3532®, a synthetic liquid anionic biodegradable solution. Both Mearlcrete® and Mearlcel® are available from the Mearl Corporation in New Jersey. In addition, the organic polymeric binder can act to stabilize the entrained air.

Foam stability helps maintain the dispersion, and prevents the agglomeration, of the air voids within the unhardened moldable mixture. Failure to prevent the coalescence of the air voids actually decreases the insulation effect, and it also greatly decreases the strength of the hardened moldable mixture. Raising the Ph, increasing the concentration of soluble alkali metals such as sodium or potassium, adding a stabilizing agent such as a polysaccharide rheology-modifying agent, and carefully adjusting the concentrations of surfactant and water within the moldable mixture all help to increase the foam stability of the mixture.

During the process of molding and/or hardening the moldable mixture, it is often desirable to heat the moldable mixture in order to increase the volume of the air void system. Heating also aids in rapidly removing significant amounts of the water from the moldable mixture, thereby increasing the green strength of the molded product.

If a gas has been incorporated into the moldable mixture, heating the mixture to 250°C, for example, will result (according to the ideal gas equation) in the gas increasing its volume by about 85%. When heating is appropriate, it has been found desirable for the heating to be within a range from about 100°C to about 250°C. The upper limit is set by any adverse reactions within the moldable mixture that might occur, such as the burning of the fibers or organic binder. More importantly, if properly controlled, heating will not result in the cracking of the structural matrix of the article, or yield imperfections in the surface texture of the article.

Another foaming agent is a mixture of citric acid and bicarbonate or bicarbonate that has been processed into small granules or particles and coated with wax, starch, or water soluble coatings. This can be used in void formation two ways: (1) to react with water and form CO₂ gas in order to create a cellular foam structure within the structural matrix or (2) to pack the particles as part of the matrix and after hardening the matrix remove the foam particles by heating the product above 180°C, which causes an endothermic decomposition of the particles, leaving behind a well controlled cellular lightweight structure.

In other applications, where the viscosity of the moldable mixture is high, such as is required in certain molding processes, it may be difficult to obtain adequate numbers of air voids through high shear mixing. In this case, air voids may alternatively be introduced into the moldable mixture by adding an easily oxidized metal, such as aluminum, magnesium, zinc, or tin to a mixture that is either naturally alkaline (such as a mixture containing hydraulic cement or calcium oxide) or one that has been made alkaline by the addition of a strong base, such as sodium hydroxide. This reaction results in the evolution of tiny hydrogen bubbles throughout the moldable mixture.

It may be desirable to heat the mixture in order to initiate the chemical reaction and increase the rate of formation of hydrogen bubbles. Heating the molded product to temperatures in the range of from about 50°C to about 100°C, and preferably about 75°C to about 85°C, effectively controls the reaction and also drives off a significant amount of the water. Again, this heating process can be controlled so that it does not result in the introduction of cracks into the matrix of the molded product. This second method of introducing air voids into the structural matrix can be used in conjunction with, or in place of, the introduction of air through high speed, high shear mixing in the case of lower viscosity moldable mixtures.

Finally, air voids may be introduced into the moldable mixture during the molding process by adding a blowing agent to the mixture, which will expand when heat is added to the mixture. Blowing agents typically consist of a low boiling point liquid and finely divided adsorbing material such as calcium carbonate (chalk). The chalk and blowing agent are uniformly mixed into the moldable mixture and kept under pressure while heated. The liquid blowing agent penetrates into the pores of the individual chalk particles, which act as points from which the blowing agent can be vaporized upon the thermal expansion of the blowing agent as the pressure is suddenly reduced.

During the molding or extrusion process, the mixture may be heated while at the same time it is compressed. While the heat would normally cause the blowing agent to vaporize, the increase in pressure prevents the agent from vaporizing, thereby temporarily creating an equilibrium. When the pressure is released after the molding or extrusion of the material, the blowing agent vaporizes, thereby expanding or "blowing" the moldable material. Water can also act as a blowing agent as long as the mixture is heated above the boiling point of water and kept under pressure of up to 50 bars.

Air voids increase the insulative properties of the sheets and other articles made therefrom and also greatly decrease the bulk density and, hence, the weight of the final product. This reduces the overall mass of the resultant product, which reduces the amount of material that is required for the manufacture of the article and which reduces the amount of material that will ultimately be discarded in the case of a disposable article.

### 8. Set Accelerators.

In some cases it may be desirable to accelerate the initial set of the hydraulically settable mixture by adding to the mixture an appropriate set accelerator. These include Na₂CO₃, KCO₃, KOH, NaOH, CaCl₂, CO₂, triethanolamine, aluminates, and the inorganic alkali salts of strong acids, such as Hcl, HNO₃, and H₂SO₄. In fact, any compound which increases the solubility of gypsum and Ca(OH)₂ will tend to accelerate the initial set of hydraulically settable mixtures, particularly cementitious mixtures.

The amount of set accelerator which may be added to a particular hydraulically settable mixture will depend upon the degree of set acceleration that is desired. This in turn will depend on a variety of factors, including the mix design, the time interval between the steps of mixing the components and molding or extruding the hydraulically settable mixture, the temperature of the mixture, and the identity of the set accelerator. One of ordinary skill in the art will be able to adjust the amount of added set accelerator according to the parameters of a particular manufacturing process in order to optimize the setting time of the hydraulically settable mixture. Based on the percent volume of hydraulically settable binder in an inorganically filled mixture, the set accelerator may also increase the rate of setting or hardening of the inorganically filled mixture.

### II. Specific Applications of the Materials into Articles.

The key structural component which gives strength to the articles of manufacture of the present invention is the structural matrix formed by the interaction of water with a hydraulically settable binder and/or an organic polymer binder. Within the structural matrix are other components (such as fibers, aggregates, air voids, rheology-modifying agents, dispersants, and even accelerants) which add additional characteristics and properties to the materials.

### A. Effect of Components on Mixture Rheology.

The amount of water that should be added to obtain a mixture having adequate workability and flowability will depend on the concentration and particle packing density of the inorganic filler or aggregate, the amount of fibers, the identity and quantity of the organic binder, the identity and quantity of hydraulically settable binder, and the identity and quantity of other admixtures (such as dispersants, plasticizers, or lubricants). In general, however, the addition of more water will decrease the viscosity and yield stress of the moldable mixture, thereby increasing the flowability of the mixture and decreasing the form stability of an object molded therefrom.

The water-dispersable organic polymer binder can greatly affect the rheology of the mixture depending on the identity, concentration, and extent of gelation of the organic binder. As set forth above, preferred organic polymer binders can roughly be divided into the following categories: cellulose-based, starch-based, protein-based, polysaccharide-based, and synthetic organic. Within each of these broader categories are numerous subcategories and divisions. A unifying feature of each of these materials is that they will generally dissolve in, or at least be fairly thoroughly dispersed by, water. Hence, they require adequate levels of water for their dispersion and activation (including gelation) within the moldable mixture.

Nevertheless, the organic polymer binders have greatly varying levels of water solubility or dispersability, as well as varying levels of viscosity and yield stress. Organic polymers within the same class may have greatly varying viscosities depending on the molecular weight. For example, a 2% solution of Tylose® FL 15002 at 20°C has a viscosity of about 15000 cps, while a similar solution of Tylose® 4000 has a viscosity of about 4000 cps. The former greatly increases the yield stress and plastic-like properties of a moldable mixture, while the latter may act more as a lubricant or plasticizer.

Other organic polymers react at different rates and different temperatures within the water. Although many organic polymer binders such as Tylose® neither polymerize or depolymerize when added to the moldable mixture, but rather gelate and then dry out to form a bonding matrix, it is within the scope of the present invention to add water soluble or water-dispersable polymerizable units to the moldable mixture which will thereafter polymerize in situ over time. The rate of the polymerization reaction can be regulated by adjusting the temperature of the mixture and/or adding a catalyst or inhibitor. Examples of polymerizable units which may be added to a moldable mixture include Cellosize and latex forming monomers.

With regard to gelation, most cellulose-based polymers (such as Tylose®) will readily gelate in water at room temperature. Others such as many starches will only gelate in water at higher temperatures. Certain modified starches can, however, gelate at room temperature. Hence, cellulose-based and modified starch-based polymer binders are advantageous in that a moldable mixture can be formed therefrom at room temperature. Nevertheless, they are generally significantly more expensive than typical starch-based polymers which must be heated to gelate. A preferred starch-based polymer is National 51-6912, which may be purchased from National Starch.

Depending on the desired rheology of the moldable mixture, including where it is desired to affect the viscosity or yield stress as a function of time or temperature, it may be preferable to add a number of different organic polymer binders to the moldable mixture. Cellulose-based organic polymer binders will generally impart their maximum rheological affect almost immediately, while polymerizable binders will stiffen over time and starch-based binders will stiffen as the temperature of the mixture is increased.

Hydraulically settable binders such as hydraulic cement, gypsum hemihydrate, and calcium oxide can affect the rheology of the moldable, particularly over time as they react with the water in the moldable mixture. Hydraulically settable binders chemically react with the water, thereby reducing the effective level of water within the moldable mixture without resorting to heating or drying techniques. Hydraulic cement also increases the cohesive strength of the green inorganically filled mixture and a fresh article made therefrom.

Other admixtures which may be added to directly influence the rheology of the moldable mixture include dispersants, plasticizers, and lubricants. Dispersants such as sulfonyl-based materials greatly decrease the viscosity and increase the workability of the moldable mixture while keeping the amount of water constant. A corollary is that using a dispersant allows for the inclusion of less water while maintaining the same level of workability. A preferred plasticizer and lubricant is polyethylene glycol.

The amount, identity, and particle packing density of the aggregates can greatly affect the rheology and workability of the moldable mixture. Aggregates which are porous or which have a high specific surface area will tend to absorb more water than nonporous aggregates, thereby reducing the amount of water available to lubricate the particles. This results in a stiffer, more viscous mixture. Particle packing density can greatly impact the rheology of the mixture by determining the amount of interstitial space which generally must be filled by water, lubricants, organic polymers, or other liquids in order for the mixture to flow.

In situations where the moldable mixture will be subjected to high pressures, such as extrusion or other high pressure molding processes, it may be possible to take advantage of the interplay between the principles of particle packing and water deficiency in order to temporarily increase the workability and flowable while compressing the mixture. For purposes of this specification and the appended claims, the terms "water deficiency" or "deficiency of water" shall refer to a moldable mixture in which there is insufficient water (and other liquids) to fully occupy the interstitial space between the particles. Because of this, there is insufficient water to adequately lubricate the particles.

However, upon applying a pressure that is great enough to temporarily increase the particle packing density, the amount of interstitial space between the particles will decrease. Because water is incompressible and maintains the same volume under pressure, the increased pressure increases the apparent amount of water that is available to lubricate the particles, thereby increasing the workability and flowability of the mixture. After the pressure is removed, usually after the molding process has ended, the aggregate particles will expand slightly, thereby increasing the amount of interstitial space and creating a partial internal vacuum. This results in an almost immediately increase in form stability and green strength.

Finally, other solid components within the mixture such as fibers will affect the rheology of the mixture in similar fashion to the aggregates. Certain fibers may absorb water depending on their porosity and swelling capability. In addition, certain fibers can be treated to become ionically charged, which will allow them to chemically interact with ionically charged organic plasticizers, such as ionic starches.

### B. Effect of Components on Final Properties.

With regard to the final dried or hardened article, some of the properties considered generally desirable to design into the structural matrix of the articles include high tensile strength (in general or along particular vectors), flexural strength, flexibility, and ability to elongate, deflect or bend. In some cases, it may be desirable to obtain articles which substantially incorporate the properties of existing articles made from paper, paperboard, or plastic materials. However, in other cases it may be desirable to obtain a structural matrix having properties not obtainable using conventional materials. These may include increased toughness, higher modulus, water resistance, or lower bulk density.

In contrast to tree paper or paperboard, in which the properties of the sheets and subsequent articles are extremely dependent on the properties of the pulps used, the properties of the articles of the present invention are substantially independent of the properties of the fibers used in making the moldable mixture for forming. To be sure, using longer, more flexible fibers will impart more flexibility to the article than shorter, stiffer fibers. However, properties that are largely pulp-dependent in conventional papers can be designed into the present articles by adjusting the concentrations of the nonfibrous components of the moldable mixture as well as the processing techniques used. Such properties as stiffness, rigidity, surface finish, porosity, and the like are generally not dependent on the type of fibers incorporated into the current articles.

The flexibility, tensile strength, flexural strength, or modulus can be tailored to the particular performance criteria of the sheet, container, or other object made therefrom by altering the components and relative concentrations of the components within the moldable mixture. In some cases, higher tensile strength may be an important feature. In others, it may be less significant. Some articles should preferably be more flexible, while others will be stiff. Some will be relatively dense, others will be thicker, lighter, and more insulative. The important thing is to achieve a material which has properties appropriate for a particular use, while remaining cognizant of cost and other practical production line parameters. While having "too much" or "too little" of a particular property may be inconsequential from the standpoint of performance, from a cost standpoint it may be wasteful or inefficient to provide for the particular property.

In general, increasing the amount of organic polymer binder will increase the tensile and flexural strength of the final hardened article, while also greatly increasing the flexibility and resilience of the article. Adding more organic polymer also decreases the stiffness of the article. Similarly, increasing the concentration of fibers within the mixture also increases the tensile strength of the final article, particularly higher tensile strength fibers, such as ceramic fibers, although such fibers are stiff and will yield a relatively stiff hardened article. Conversely, adding flexible fibers, such as natural cellulosic fibers, will greatly increase the flexibility, as well as the tensile, tear, and burst strengths of the article.

Different fibers have greatly varying degrees of tear and burst strength, flexibility, tensile strength, ability to elongate without breaking, and stiffness. In order to obtain the advantageous properties of different types of fibers it may be preferable in some cases to combine two or more different kinds of fibers within the moldable mixture.

Certain article forming processes, such as extrusion and rolling tend to orient the fibers in the direction of elongation of the mixture. This may be advantageous in order to maximize the tensile strength of the article or sheet in a certain direction. For example, where the sheet forming an article will be required to bend along a hinge, it is preferable for the fibers to be oriented in a way so as to more effectively bridge the two sides of the hinge or bend by being oriented perpendicular to the fold line. It may be desirable to concentrate more of the fibers in the area of a hinge or where the sheet requires increased toughness and strength.

The type of aggregate can also affect the properties of the final hardened article. Aggregates comprising generally hard, inflexible, small particles such as clay, kaolin, or chalk, will generally result in an article having a smooth surface and having an increased brittleness. Lightweight aggregates such as perlite or hollow glass spheres results in an article having lower density, lower brittleness, and greater insulating ability. Aggregates such as crushed sand, silica, gypsum, or clay are extremely inexpensive and can greatly reduce the cost of manufacturing an article therefrom. Any material with a high specific surface area gives increased drying shrinkage and shrinkage defects. Materials with lower specific surface areas are advantageous because they are less sticky, which helps inhibit the mixture from adhering to the molding apparatus.

Hydraulically settable binders such as hydraulic cement, gypsum hemihydrate, and calcium oxide provide small to significant degrees of binding within the hardened article depending on the amount in which such hydraulically settable binders are added. Such binders increase the stiffness and compressive strength of the final article and, to some degree, the tensile strength. Hydraulic cement can also decrease the solubility of the article in water, thereby increasing the resistance of the article to water degradation.

Finally, other admixtures within the moldable mixtures can add a waterproofing property to the final product, such as by adding rosin and alum to the mixture. These interact to form a vary water resistant component within the structural matrix. In the absence of significant quantities of such waterproofing agents, water can be used to remoisten the article and temporarily increase the flexibility, bendability, and elongation before rupture. This is particularly useful where the mixture is first formed into a sheet that will subsequently be formed into another article of manufacture, such as a container. Of course, water can also facilitate the degradation of the article after it has been discarded. Water resistance can be introduced by treating the article surface with a 5-10% w/w starch solution in order to seal the surface porosity.

As a general rule, articles which have concentrations of organic polymer binder and fiber but high concentrations of hydraulically settable binder will be more rigid, have a higher insulation ability, have a higher compressive strength, have lower cohesiveness, resist heat damage, have lower tensile strength, and resist water degradation.

Articles which have lower concentrations of organic binder but higher fiber and hydraulically settable binder content will have higher tensile strength, compressive strength and toughness, but have lower flexural strengths and stiffness, with moderate flexibility, and be fairly resistant to water degradation.

Articles which have higher concentrations of organic polymer binder and lower concentrations of fiber and hydraulically settable binder will be more water soluble and degradable, easier to mold (allowing for the manufacture of thinner articles), have moderately high compressive and tensile strengths, higher toughness, moderate flexibility, and lower stiffness.

Finally, articles which have higher concentrations of organic polymer binder and fiber but low concentrations of hydraulically settable binder will have properties that are most similar to paper (both tree and plant paper), will have higher tensile strength, toughness, and folding endurance, have moderate compressive strength, have very low resistance to water degradation, will have lower resistance to heat (particularly those approaching ignition point of fibers or decomposition temperature of the binder), and have higher flexibility and lower stiffness.

The articles formed using the compositions described herein will preferably have a tensile strength in the range from about 0.05 MPa to about 70 MPa, and more preferably in the range from about 5 MPa to about 40 MPa. In addition, the articles will preferably have a bulk density in the range from about 0.6 g/cm³ to about 2 g/cm³. Whether a article will have a density at the lower, intermediate, or higher end of this range will generally depend on the desired performance criteria for a given usage. In light of the foregoing, the articles of the present invention will preferably have a tensile strength to bulk density ratio in the range from about 2 MPa-cm³/g to about 200 MPa-cm³/g, and more preferably in the range from about 3 MPa-cm³/g to about 50 MPa-cm³/g.

The direction-specific strength properties of the formed sheets used to produce the articles of the present invention should be contrasted with those of paper, which is known to have a strong and weak direction with regard to tensile and tearing strength. The strong direction in conventional paper is the machine direction, while the weak direction is the cross-machine direction. While the ratio of the strengths in the strong and weak direction are about 3:1 in ordinary paper, in the present invention it is about 2:1, which can approach about 1:1 depending on the particular forming process used. In general, decreasing the differential forming speed tends to allow the fibers to remain in a more random orientation.

The term "elongate" as used in the specification and appended claims with regard to the articles of the present invention means that the structural matrix of the article is capable of being stretched without substantial rupture. The ability of the structural matrix of the article to elongate before rupture may be measured by an Instron tensile test and a stress strain test.

By optimizing the mix design, it is possible to manufacture a freshly molded article which has a structural matrix capable of elongating up to about 20% before tearing or rupturing occurs, and from about 0.5% to 8% upon drying. This is usually accomplished by optimizing the amounts of fiber and organic binder within the moldable mixture and resulting matrix. Producing an article having a structural matrix capable of elongating within the specified range can be accomplished by including fibers within the hardened article in an amount of up to about 50% by volume. The greater the amount of fibers or organic binder added, or the better the matrix to fiber interface, the more elongation that can generally be achieved without rupture of the article. In addition, the elongation of a dry sheet can be increased by adding steam or moisture to the sheet in the order of up to 10% by weight of the dry weight of the sheet. However, remoistening also temporarily reduces the strength of the sheet until it has been dried out again.

Higher tensile strength, as well as greater elongation, may generally be obtained by increasing the amount of fibers within the structural matrix. This can be accomplished by adding more fibers to the moldable mixture or, alternatively, by attaching a layer of fibers (such as a sheet of paper) on the surface or within the interior of an article, or by combining fibers having varying properties of strength and flexibility.

The term "deflect" as used in the specification and appended claims is related to the ability of a dried sheet or article bend or roll without rupture and change in the finished surface. The ability of the article to deflect is measured by measuring the elasticity modulus and the fracture energy of the sheet using means known in the art. As with any material, the bending ability of an article manufactured according to the present invention is largely dependent upon the thickness of the wall of the article.

One way to measure deflection without regard to wall thickness is to define deflection as the relative elongation of one side of the wall compared to the other side. As the wall is rolled or bent around an axis, the length of the outer side of the wall will elongate, while the inner side generally will not. Consequently, a thinner walled article can be bent a far greater degree even though the relative elongation of the outer side compared to the elongation of the inner side is about the same as in a thicker sheet which cannot bend nearly as far.

During the process of forming a dried sheet into an appropriate article the bendability of the sheet can be temporarily increased by remoistening with water. It is believed that the water is absorbed by the fibers, water-dispersable organic binder, and the interstices between the aggregate particles. Upon drying the formed sheet, the level of bendability will generally decrease while the toughness and hardness will generally increase.

In order to obtain a sheet having the desired properties of strength, bendability, insulation, toughness, weight, or other performance criteria, the thickness of the sheet can be altered by adjusting the space between the rollers. Depending on the thickness and desired performance criteria, the components and their relative concentrations can be adjusted in order to accommodate a particular sheet thickness. The sheets of the present invention may be designed to have greatly varying thicknesses; however, most products requiring a thin-walled material will generally have a thickness in the range from about 0.01 mm to about 3 mm. Nevertheless, in applications where insulation ability or higher strength or stiffness is more important, the sheet thickness may range up to about 1 cm.

The preferred thickness of the sheets of the present invention will vary depending on the intended use of the sheet, container, or object made therefrom. As a matter of example only, where high deflectability is desired, a thinner sheet will generally be preferred. Conversely, where strength, durability, and/or insulation and not deflectability are the overriding concerns, a thicker sheet will generally be preferred. Nevertheless, where it is desired to bend the sheets along a score, or at least roll them into articles, the sheets will preferably have a thickness in the range from about 0.05 mm to about 2 mm or more, and more preferably in the range from about 0.15 mm to about 1 mm.

As previously discussed, the moldable mixture is microstructurally engineered to have certain desired properties, both as to the mixture itself, as well as the final hardened product. Consequently, it is important to accurately meter the amount of material that is added during any batch or continuous admixing of the components.

### III. Processing Techniques and Conditions.

The basic processing techniques and conditions include (1) preparing an appropriate moldable mixture (either a hydraulically settable mixture or an inorganically filled mixture); (2) molding the mixture into the desired article, including forming an article from a molded precursor; (3) increasing the form stability of the article; (4) demolding the article; and (5) optionally processing the molded article such as drying the molded article in an accelerated manner, coating, printing, and altering the surface qualities of the article, and the like.

### A. Preparing a Moldable Mixture.

Although a wide variety of molding processes and mix designs may be used in the manufacture of the articles within the scope of the present invention, the mixing processes are substantially the same. Of course, different equipment will be used to conveniently provide feed stock to the molding equipment.

At least some of the components used in making an appropriate moldable mixture are preferably blended together using a high shear mixer. High shear mixing provides even distribution of a hydraulically settable binder, organic binder, water, dispersants, fibers, durable aggregates, and other admixtures. High shear mixing improves the rheology of the mixture and increases the strength and uniformity of the final hardened article.

High shear mixing may be employed to incorporate finely dispersed air voids within the moldable mixture through the use of an air entraining agent. In those cases where a hydraulically settable binder such as hydraulic cement or calcium oxide has been added to the mixture, it may be advantageous to flood the atmosphere above the high shear mixer with carbon dioxide in order to cause the carbon dioxide to react with the mixture. It has been found that carbon dioxide can increase the foam stability of a moldable mixture and cause an early false setting of hydraulic cement. It is also the constituent which reacts with calcium oxide in order to create calcium carbonate as an insoluble binding precipitate.

High shear mixers useful in creating the more homogeneous mixtures as described herein are disclosed and claimed in U.S. Patent No. 4,225,247 entitled "Mixing and Agitating Device"; U.S. Patent No. 4,552,463 entitled "Method and Apparatus for Producing a Colloidal Mixture"; U.S. Patent No. 4,889,428 entitled "Rotary Mill"; U.S. Patent No. 4,944,595 entitled "Apparatus for Producing Cement Building Materials"; and U.S. Patent No. 5,061,319 entitled "Process for Producing Cement Building Material". For purposes of disclosure, the foregoing patents are incorporated herein by specific reference.

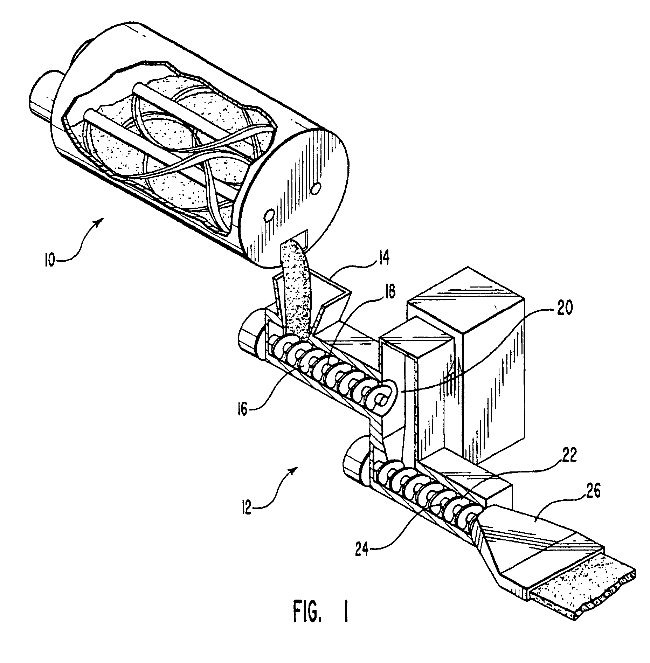

Other mixers are capable of imparting varying amounts of shear to the moldable mixture. For example, a kneader mixer, as shown in Figure 1, imparts higher shear compared to a normal cement mixer, but is low compared to an Eirich Intensive Mixer or a twin auger food extruder.

Aggregates included in higher concentrations, as well as lightweight aggregates, are generally blended into the mixture using low shear mixing. Many lightweight aggregates, such as perlite or hollow glass spheres, cannot withstand high shear conditions without breaking.

In a typical mixing process in the laboratory, the appropriate components are blended using a high shear, high speed mixer for about 1 minute. Thereafter, the remaining components are blended into the mixture using a low shear, low speed mixer for about 5 minutes. The total mixing time per batch of material is therefore about 6 minutes, although this may be varied depending upon the nature of the moldable mixture. Industrially, this mixing process can be substantially shortened by the use of appropriate mixers; specifically, the currently preferred method of mixing being a continuous mixing system.

In one embodiment, a cement mixer capable of both high and low shear mixing is used to meter and mix the materials in a batch mode. In an alternative embodiment, high shear mixers can be used to initially mix the components of the moldable mixture. Thereafter, the mixture can be transferred to a low shear mixer in order to complete the mixing process. In another embodiment, the mixing step may be combined with an extrusion step using modern extrusion equipment that includes a high shear mixing chamber.

The currently preferred embodiment for the industrial setting is equipment in which the materials incorporated into the moldable mixture are automatically and continuously metered, mixed, deaired, and extruded by a twin auger extruder apparatus. Figure 1 depicts a twin auger extruder 12, which includes a feeder 14 that feeds the moldable mixture into a first interior chamber 16 of extruder 12. Within first interior chamber 16 is a first auger screw 18 which both mixes and exerts forward pressure advancing the moldable mixture through first interior chamber 16 toward an evacuation chamber 20. Typically, a negative pressure or vacuum will be applied to evacuation chamber 20 in order to remove unwanted air voids within the moldable mixture. Thereafter, the moldable mixture is fed into a second interior chamber 22. A second auger screw 24 will advance the mixture toward a die head 26. Auger screws 18 and 24 can have different flight pitches and orientations in order to assist the advancement of the mixture and to raise or lower the amount of imparted shear.

Twin auger extruder 12 can be used to independently mix the components for the moldable mixture, or, as shown in Figure 1, can be fed by a mixer. The preferable twin auger extruder apparatus utilizes uniform rotational augers wherein the augers rotate in the same direction. Counter-rotational twin augers extruders, wherein the augers rotate in the opposite directions, accomplish the same purposes. A pugmil may also be utilized for the same purposes. Equipment meeting these specifications are available from Buhler-Miag, Inc., located in Minneapolis, Minnesota.

The internal components of the mixer can be made of stainless steel because the abrasion to the mixer is not great due to the relatively high water content. However, the mixer components can be carbide coated for extended life, thereby resisting any abrasion and the strongly basic conditions expected from a mixture containing aggregates and a hydraulically settable binder.

Because the moldable mixture is microstructurally engineered to have certain desired properties, it is usually important to accurately meter the amount of each material that is added to the moldable mixture.

### B. The General Molding Process.

### 1. Initial Molding Processes.

The term "molding", as used in this specification and the appended claims, is intended to include the specific molding techniques set forth herein by way of example, as well as those that are well known in the art with respect to materials such as clays, ceramics, and plastics. Examples of preferred molding techniques include "die press molding", "injection molding", "blow molding", "jiggering", "wet sheet molding", and "dry sheet molding". Detailed descriptions of these methods are set forth more fully below. The term "molding" shall also include heating the molded article in order to expand and/or increase the form stability of the article, and the release of the articles from the mold (also referred to as "demolding").

Within any appropriate molding process the compression necessary to impart a desired shape to a mixture or to a sheet formed from an inorganically filled mixture is achieved by mechanical pressure, vacuum pressure, air pressure, or combinations thereof. Articles can be molded in one step by die pressing, injection molding, blow molding, and jiggering. Articles can also be molded by a two step forming process wherein the mixture is first molded into a sheet, after which the sheet is molded into the desired article. Sheet molding processes include wet sheet and dry sheet processes.

The processes described below can be performed using conventional equipment well known to those skilled in the art of the paper, plastic, metal, and cement industries. The equipment, however, must be uniquely combined and arranged to form a functional system for production of the present articles. Furthermore, slight modifications of the equipment is preferred to optimize and increase mass production of the articles. For example, injection molding of plastic articles requires the molds to be cooled to quickly harden the molded articles. In the present invention, however, it is often preferred to heat the molds to rapidly harden the articles. The arrangement, modification, and operation of the equipment needed to manufacture the articles of present invention can be performed by those skilled in the art of using the conventional equipment in light of the present disclosure.

In order for the molding process to be cost effective it is important that the molded article become form stable immediately or shortly after the molding process. The term "form stable" refers to the ability of the molded article to support its own weight and maintain its shape against the attendant forces of gravity and those associated with the processing techniques being employed. Form stability is important for the article to be ejected from the mold and should preferably be obtained in less than one minute after the molding process, more preferably in less than about 10 seconds, and most preferably in less than about 1-3 seconds. In addition, the surface of the molded article should not be too sticky, as that would make the demolding, handling, and stacking processes more difficult.

The rheological or flow properties of the moldable mixture should be optimized according the particular manufacturing process being employed. Imparting the desired properties should be balanced against the cost of achieving such properties. Die pressing, injection molding, and jiggering, for example, generally require a highly viscous mixture that can be shaped under pressure to quickly produce a form stable product, while blow molding requires a highly elastic mixture that can be blown without rupturing.

There are several modifications to conventional molding processes which are preferably employed in order to ease the manufacturing process. For example, it is frequently desirable to treat the mold with a releasing agent in order to prevent sticking. Suitable releasing agents include silicon oil, Teflon®, Deleron®, and UHW®. Preferably, the mold itself will be made of stainless steel and/or coated with a material having a very slick finish, such as Teflon®, Deleron®, or chrome plating polished to about 0.1 RMS.

The same effect can be achieved from the use of frictional forces. By spinning the head of the molding apparatus against the interior and/or exterior surfaces of the moldable mixture, any chemical and mechanical adherence (*i*.*e*., stickiness) to the mold can be overcome.

During the process of molding and/or curing the mixture, it is often desirable to heat up the mixture in order to control the air void system by allowing for proper control of the porosity and the volume in the article. However, this heating process also aids in making the mixture form stable in the green state (immediately after molding) by allowing the surface to gain strength quickly. Of course, this heating aids in rapidly removing significant amounts of the water from the mixture. The result of these advantages is that the use of the heating process can ease the manufacturing of the present articles.

### 2. Increasing the Form Stability.

One of the novel features of the present invention is the ability to create articles that are form stable almost immediately upon formation. The form stability of the article can be increased by heating the moldable mixture by means of heated dies for a sufficient period of time to improve the form stability of the article. In order to achieve the appropriate rheology or flow properties varying amounts of water are added to the moldable mixture. At least a portion of the water can quickly be removed by evaporation, thereby decreasing the volume percent of water and increasing the form stability of the molded article.

Furthermore, removing water on the surface of a molded article causes the surface to be locally dry, which not only decreases the stickiness of the moldable mixture but also forms a reasonably strong thin "shell" around the article, which also increases the green strength. The heating of the moldable mixture also increases the curing rate of a hydraulically settable binder, as well as the rate of gelling or hardening of the organic binders.

The ability to rapidly increase the form stability of the article in the green state is important as it permits mass production of the articles. Form stability allows the articles to be quickly removed from the molding apparatus so that new articles can be formed using the same pressing or molding equipment.

Another purpose for increasing the temperature of the dies is to minimize adherence of the moldable mixture to the dies. As the steam is emitted from the moldable mixture, it creates a "cushion" between the dies and the moldable mixture. This steam boundary layer provides a substantially uniform force that pushes the moldable mixture away from the die and, thus, prevents the moldable mixture from sticking to the dies. It has also been found that if the male and female dies have varying temperatures, the moldable material will tend to remain on the die with the lower temperature upon separation of the dies.

The respective temperatures of the dies are preferably adjusted to maximize the speed of the manufacturing process and are dependent, in part, upon the duration that the dies are in contact with moldable material, In general, it is desirable that the temperature be as high as possible: the higher the temperature, the faster the drying on the surface of the molded articles, the quicker the articles can be demolded, and the more articles that can be manufactured per unit time.

Increasing the temperature beyond a certain point, however, may cause the water throughout the moldable mixture, not just on the surface of the article, to turn to steam. The sudden release in pressure associated with demolding can result in the cracking, or even explosion, of the molded article once the dies are separated. However, the negative effects of higher temperatures can often be avoided by faster closing and opening speeds of the press.

Moreover, the faster the moldable material cures, the greater the likelihood of a deformity forming within the article as a result of differential flow. That is, as the dies are pressed together, the moldable material flows into the desired shape. However, once the moldable mixture on the surface of a article starts to dry, the drier portion has different flow properties than the remaining wet moldable material. The differential in flow properties can result in deformities such as agglomerates, voids, cracks, and other irregularities in the structural matrix of the molded article.

In general, the interrelationship between time and temperature is that the temperature of the dies can be increased as the time that the dies are in contact with the moldable mixture is decreased. In addition, the temperature can be increased as the amount of water within the moldable mixture is increased.

To achieve the above desired objectives, it is preferable to heat the female and male die to a temperature within the range from between about 50°C to about 250°C, more preferably to between about 75°C to about 160°C, and most preferably to between about 120°C to about 140°C. For ease in demolding, it is usually desirable for the article to remain on the male die after separation of the dies. Accordingly, the male die preferably has a lower temperature than the female die. The temperature variance between the female die and male die should preferably be in the range from about 10°C to about 30°C.

The duration in which the heated male die and the heated female die are both in contact with the moldable material (*i*.*e*., the time that the dies are mated) is preferably within the range from about 0.05 seconds to about 30 seconds, more preferably between about 0.7 seconds to about 10 seconds, and most preferably between about 0.8 seconds to about 5 seconds.

In an alternative embodiment, the step of heating the article further includes exposing the molded article to heated air after the dies are separated, but before the article is removed from the die, that is, while the article is supported on the male die. Exposure to heated air increases the form stability of the article before it is removed from the die.

Certain rheology-modifying agents may liquify near room temperature and stiffen if cooled. Hence, the yield stress of certain moldable mixtures may increase if cooled significantly below the original mixing temperature. In such cases, the form stability of the molded article can be increased by cooling the dies. In addition, by heating the mixture prior to pressing and then cooling the dies, a thin film of water can condense between the article and dies, thus inhibiting the article from adhering to the dies. In such cased the dies are cooled to a temperature within a range from about -20°C to about 40°C, more preferably within a range from about -5°C to about 35°C, and most preferably within a range from about 0°C to about 30°C.

In yet another embodiment, form stability can be established through rapid evaporation of nonhydrating, volatile solvents. By mixing the moldable material and other desired additives with the minimal amount of water needed for hydration of the binder and then adding an appropriate volatile solvent to the mixture, one is able to obtain a mixture that is easily moldable and that results in a high-strength article. Once the mixture has been positioned into the desired shape, the volatile solvent can be quickly removed by evaporation, thereby producing a form stable article that can be quickly removed from the mold. The volatile solvents are preferably soluble in water and uniformly dispersed in the mixture. By way of example and not by limitation, the volatile solvents include alcohols, *e*.*g*., methanol, ethanol, n-propanol, n-butanol, and n-pentanol. Such solvents are typically added in a range from about 2% and about 50% by volume of water.

Other additives which assist in rapidly producing a form stable article containing a hydraulically settable binder include various carbonate sources and accelerators. As previously discussed, the addition of various sources of carbonate, such as CO₂, result in a mixture that obtains early strength or form stability. Sodium carbonate and potassium carbonate can also be added to the mixture so as to obtain early form stability of the article. Typically, the carbonates are added to the mixture in a range from about 0.002% to about 0.5% by weight of the water, with 0.01% to about 0.15% being preferred, and 0.1% to about 0.15% being most preferred. Similarly, citric acid can also be incorporated into the mixture for obtaining early form stability. Citric acid is typically added by weight of cement in a range from about 0.01% to about 5%, with 0.05% to about 1% being preferred, and 0.1% to about 0.2% being most preferred.

The various organic binders also function to increase form stability of the article. Cellulose admixtures such as methylethylcellulose, methylcellulose, and ethylcellulose form a gel upon being heated to temperatures above about 60°C. By combining cellulose admixtures to the moldable mixture and then heating the mixture through the heated dies or other means of heat transfer, the resulting gel can assist in imparting form stability to the molded article. To be affective in creating form stability, the methylcellulose should be combined to the mixture in a range from about 0.1% to about 10% by weight of the moldable mixture.

Starch can also be combined with the methylcellulose or can be combined separately with the mixture to impart form stability to the molded article. Heating a mixture containing starch to a temperature above 100 °C melts or dissolves the starch. Allowing the mixture to cool permits the starch to solidify which binds the cement particles and aggregate into an increased form stable condition. To be affective as a binding agent, the starch should be combined with the mixture in a range from about 0.1% to about 10% by weight of the moldable mixture. The combination of starch and methylcellulose thus increases form stability during both the heating and cooling stages of the molding process.

As previously discussed, set accelerators used in the concrete art can be added to a hydraulically settable mixture to speed up the hydration reaction of hydraulic cement. These may be used to increase the form stability of the molded article.

In terms of the final strength of the hardened article, conventional structural techniques may be used to increase the ultimate strength of the molded article. For example, relatively thin walls of a molded article may be reinforced using a variety of structures (such as a honeycomb, angular or square reinforcing rods, triangularly shaped forms, I-beams, and corrugated materials) for added strength.

### 3. Demolding the Molded Article.

The molded article may be removed from the dies upon obtaining sufficient form stability. In a preferred embodiment, the molded article will remain on the male die as the dies are separated. In addition the male and female dies are preferably rotated in opposite directions upon separation to prevent adhesion of the article to the dies.

As previously discussed, once the dies are separated, heated air can be blown over the article for a few seconds to further increase form stability. The article can then be removed from the male die without deformation. In the preferred embodiment, a standard process known as airveying is used to remove the article from the male die. Airveying is a process in which a negative pressure is applied to the article for sucking the article from off the die. The article then travels through a "U" shaped tube that deposits the article right side up.

The airveying process is preferable due to its gentle handling of the form stable article and its low operating and capital costs. Heating air which is present to dry article may be used to provide the bulk air transport carrying the article through the length of the tubes. Air ducts positioned through the male die can also be used to inject air between the mold and the article to provide a uniform force to push the article off the male die. The air inserted through the air ducts must have sufficiently low pressure to avoid damage to the molded article.

In an alternative embodiment, the article can be mechanically removed from the male die by simply picking up the article. Such a process, however, requires exceptional care so as not to deform the molded article.

### 4. Optional Processes.

The articles can be optionally dried in an accelerated manner, coated, and can receive printing indicia. It may also be desirable to laminate, corrugate, score, or perforate a portion of the article.

### (a) Accelerated Drying.

The term "drying" as used in this specification and the appended claims, includes removing water by vaporization and does not involve significant draining of liquid water (as in the manufacture of paper). Therefore, all nonvolatile yet water-soluble components remain within the organically filled matrix. The articles can dry at ambient temperatures and can even be stacked after formation by a custom automatic stacker at the end of a manufacturing line while continuing to dry. The articles can be collected, sealed, marked, stacked and wrapped in standard carton handling/palletizing equipment for subsequent shipment as the drying process continues.

The drying process can optionally be accelerated to increase the strength of the molded article. In general, once the article is formed, it must be dried in order to gain strength in the desired shape. With regard to the dry sheet molding process, however, it is the sheet that must be dried prior to formation of the article. To economically produce the articles of the present invention, the articles must be rapidly dried to a point where they have sufficient strength to proceed through the remaining manufacturing processes, *i*.*e*., printing, coating, and packaging, without deformation. Furthermore, the article must gain sufficient strength for its intended use. Of course, the required strength will vary depending on the type of article manufactured.

In a preferred embodiment, drying the article or sheet is accomplished by exposing the article to heated air, such as in a conventional drying tunnel. The drying tunnel can be configured either for batch mode drying or for a continuous conveyor process. The application of heated air drives off a portion of the water in the moldable mixture, thereby increasing the friction forces between the particles, creating a bonding film of organic binder, and increasing the strength of the resulting article. In addition, heat may also increase the rate of hydration of the hydraulically settable binder which, in turn, may impart earlier strength to the article.

To increase the rate at which water is removed from the moldable mixture, the heated air is blown over the article. The air speed, however, must not be so great as to deform the molded article. Ideally, the article is dried only to the extent that it has sufficient strength for production and transport without deformation. By permitting an article having a hydraulically settable binder to retain a small amount of water, it will continue to cure and, thus, increase in strength during the time period it is transported and stored prior to use.

It is the ability to rapidly harden the articles that makes it possible to economically complete their mass production. Drying of the articles is influenced by five different parameters: time, temperature, air speed, surface area, and thickness of the material. Empirical studies have made the following conclusions with regard to these parameters:
1) Higher temperatures and air speeds allow for shorter drying times.
2) Upon removing a majority of the water from the article, exposing the article to temperatures above 250°C may burn the fibers and organic binder, thereby decreasing the strength of the article.
4) Thinner walled articles require shorter drying times
5) Higher temperatures result in lower tensile strength of the article.
6) Air speed and total time in the oven have no effect on the tensile strength of the article.

Based on the above observations, the recommended drying conditions for a molded article having a thickness in a range from about 1 mm to about 2 mm includes heating the air in the oven to a temperature in a range from about 100°C to about 300°C, with about 140°C to about 250°C being more preferable, and about 150°C to about 200°C being most preferable. The time period during which the article is exposed to heated air can range up to about 1 hour, with less than about 15 minutes being more preferable, and less than about 1 minute being most preferable. The above values, however, may differ depending on the size, shape, thickness, and water content of the article.

In an alternative embodiment, since the fibers do not burn in the mixture at temperatures above 250°C until a majority of the water is removed, the drying process can also be accomplished in two stages. First the article can be exposed to temperatures above 250°C, typically in the range between about 250°C and about 500°C, so as to rapidly remove a portion of the water. Once between about 60% to about 80% of the water has been removed, the temperature is decreased to below 250°C to remove the remainder of the water. This process increases the rate at which the article is dried but must be regulated with greater care so as not to burn the fibers. Of course, other conventional means for drying the articles (*e.g.*, microwaves, infrared light, and the like) may be used.

### (b) Coating.

It is within the scope of the present invention to apply coatings or coating materials to the articles or, where applicable, to the sheets used to make the articles. Coatings can be used to alter the surface characteristics of the articles or sheets in a number of ways, including sealing and protecting the sheet or article. Coatings may provide protection against moisture, base, acid, grease, organic solvents. They may also provide a smoother, glossier, or scuff-resistant surface and help prevent fiber "fly away". Coatings may provide reflective, electrically conductive, or insulative properties. They may even reinforce the sheet or article, particularly at a bend, fold, edge or corner. Some of the coatings can also be utilized as laminating materials or as adhesives.

Related to the concept of coating is the "sizing" of the sheet or article, which essentially refers to the sealing of the pores of the structural matrix. Sizing can be used to improve the smoothness and water resistance of the article or sheets. They can either increase or decrease the strength, modulus, and elongation (or extensibility) depending on their composition and amount used. Some sizings or coatings may soften the moldable matrix, thereby resulting in a more flexible article or sheet. Others may make the article more stiff.

The object of the coating process is usually to achieve a uniform film with minimal defects on the surface of the sheet or article. Coatings can be applied during the sheet forming process, the article forming process, or after the article is formed. The selection of a particular coating process depends on a number of substrate (*i*.*e*., sheet or article) variables, as well as coating formulation variables. The substrate variables include the strength, wetability, porosity, density, smoothness, and uniformity of the sheet or article. The coating formulation variables include total solids content, solvent base (including water solubility and volatility), surface tension, and rheology.

The coatings may be applied to the sheets or article using any coating means known in the art of manufacturing paper, paperboard plastic, polystyrene, sheet metal, or other packaging materials, including blade, puddle, air-knife, printing, Dahlgren, gravure, and powder coating. Coatings may also be applied by spraying the sheet or article with any of the coating materials listed below or by dipping the sheet or article into a vat containing an appropriate coating material. Finally, coatings may be coextruded along with the sheet in order to integrate the coating process with the extrusion process.

Appropriate organic coatings include edible oils, melamine, polyvinyl chloride, polyvinyl alcohol, polyvinyl acetate, polyacrylates, polyamides, hydroxypropylmethylcellulose, polyethylene glycol, acrylics, polyurethane, polyethylene, polylactic acid, Biopol® (a polyhydroxybutyrate-hydroxyvalerate copolymer), starches, soybean protein, polyethylene, and synthetic polymers including biodegradable polymers, waxes (such as beeswax or petroleum based wax), elastomers and mixtures thereof. Biopol® is manufactured by ICI in the United Kingdom. Appropriate inorganic coatings include sodium silicate, calcium carbonate, aluminum oxide, silicon oxide, kaolin, clay, ceramic and mixtures thereof. The inorganic coatings may also be mixed with one or more of the organic coatings.

In some cases, it may be preferable for the coating to be elastomeric or deformable, particularly for articles formed by folding or convoluting. Elastomeric coatings may be useful to strengthen an area where the article will be subject to severe bending, such as in a hinge.

A waterproof coating is desirable for articles intended to be in contact with water. If the sheets are used to manufacture article intended to come into contact with foodstuffs, the coating material will preferably comprise an FDA-approved coating. An example of a particularly useful coating is sodium silicate, which is acid resistant. Resistance to acidity is important, for example, where the article is a container exposed to foods or drinks having a high acid content, such as soft drinks or juices. Increased resistance to basic substances can be provided by an appropriate polymer or wax coating, such as those used to coat paper articles.

Polymeric coatings are useful in forming generally thin layers having low density such as polyethylene. Low density polyethylene is especially useful in creating article which are liquid-tight and even pressure-tight to a certain extent. Polymeric coatings can also be utilized as an adhesive when heat sealed.

Aluminum oxide and silicon oxide are useful coatings, particularly as a barrier to oxygen and moisture. The coatings can be applied to the sheet or article by any means known in the art, including the use of a high energy electron beam evaporation process, chemical plasma deposition and sputtering. Another method of forming an aluminum oxide or silicon oxide coating involves the treating of the sheet with an aqueous solution having an appropriate pH level to cause the formation of aluminum oxide or silicon oxide on the sheet.

Waxes and wax blends, particularly petroleum and synthetic waxes, provide a barrier to moisture, oxygen, and some organic liquids, such as grease or oils. They also allow an article such as a container to be heat sealed. Petroleum waxes are a particularly useful group of waxes in food and beverage packaging and include paraffin waxes and microcrystalline waxes.

### (c) Printing.

It may be desirable to apply print or other indicia, such as trademarks, product information, article specifications, or logos, on the surface of the article or sheet used to make such. This can be accomplished using any conventional printing means or processes known in the art of printing paper or cardboard products, including planographic, relief, intaglio, porous, and impactless printing. Conventional printers include offset, Van Dam, laser, direct transfer contact, and thermographic printers. However, essentially any hand or mechanical means can be used. In addition, the sheets or articles may be embossed or provided with a watermark.

Because the articles have a relatively high porosity like paper or cardboard, the applied ink will tend to dry rapidly. One skilled in the art will appreciate that sheet porosity and ink quantities must be compatible. In addition, decals, labels or other indicia can be attached or adhered to the sheet using methods known in the art.

### IV. Specific Molding Processes.

### A. The Die Pressing Process.

Die pressing includes pressing the mixture between two complementary shaped dies. The steps include positioning, forming, imparting form stability, removing, and hardening.

### 1. Positioning.

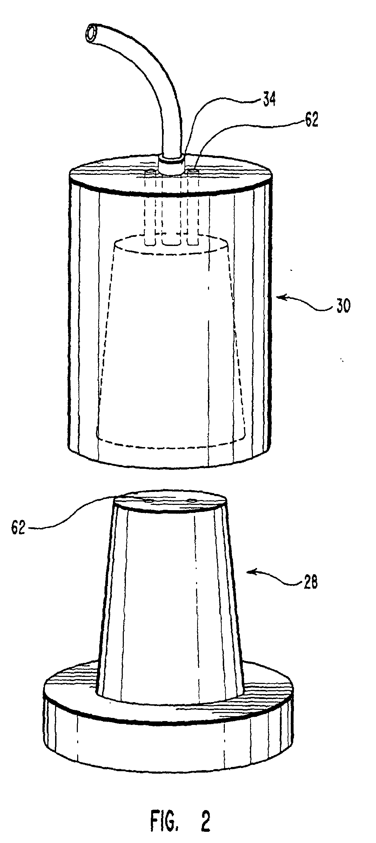

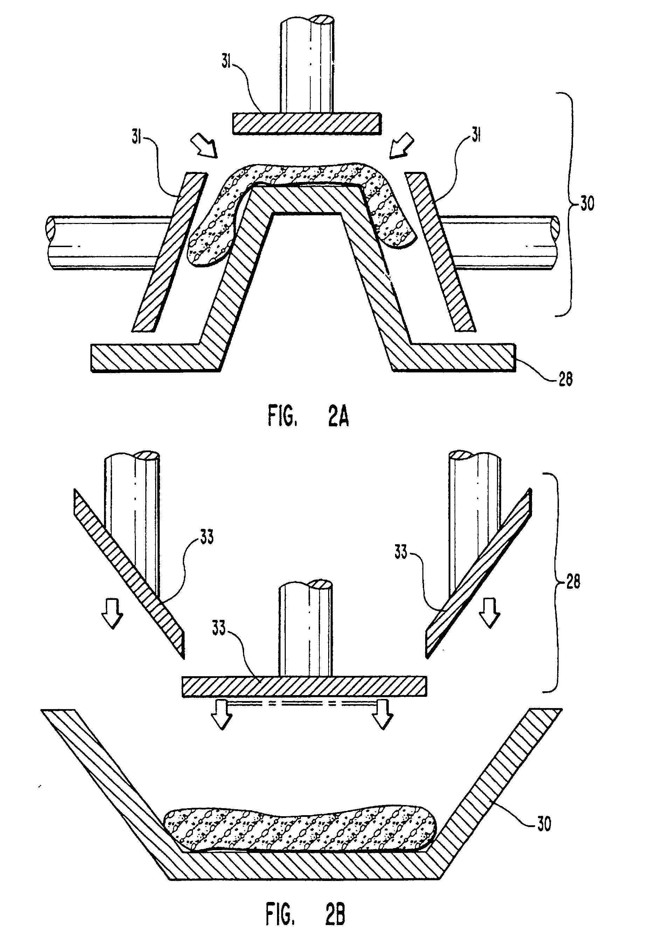

After the moldable mixture has been prepared as discussed above, it is positioned between a set of dies for shaping into the desired shape of the article. As shown in Figure 2, the dies comprise a male die 28 having a desired shape and a female die 30 having a shape substantially complementary to that of male die 28. Male die 28 and female die 30 together comprise the die pressing mold. As the moldable mixture is pressed between the dies, it is formed into an article having a shape corresponding to the space between the male and female dies.

Depending on the desired shape of the article, alternative type of dies may be used. A split die 31, as seen in Figure 2A, is a multi-component die whose components simultaneously press together at different angles to form complex shapes, especially those with negative angles, that can be easily separated from the die. In contrast, a progressive die 33, as seen in Figure 2B, is a multi-component die whose various components press together in a delayed sequential fashion, thereby forming the article in sections. The use of progressive die 33 helps eliminate air packets in articles with a deep draw or complex shape. Alternatively, a conventional collapsible die can also be used. The various dies can be used in combination to form a desired article.

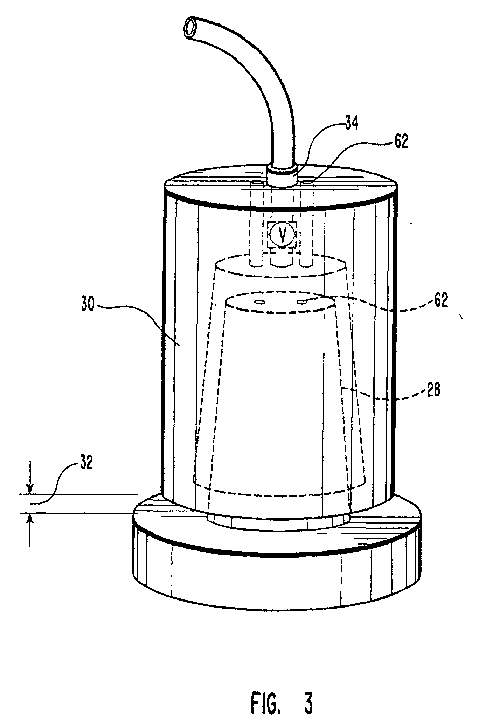

The present invention envisions two general methods for positioning the moldable mixture between male die 28 and female die 30. In the preferred embodiment shown in Figure 3, male die 28 is partially inserted into female die 30 such that a gap distance 32 is created between the dies. "Gap distance 32" is defined as the distance one die must travel with respect to the other die for mating of the dies. The dies are "mated" when they are inserted into one another so as to form a mold area between the dies. The "mold area" defines the desired shape of the article and is the area that the moldable mixture is pushed into when the dies are mated.

When the dies are positioned so as to have a gap distance, a cavity remains between the dies. This "cavity" comprises the mold area between the dies, and a second area also between the dies which corresponds to the gap distance. Once the cavity is formed, the moldable mixture can be positioned into the cavity, and thus between the dies, by being injected through a hole in one of the dies or through the gap distance.

In the preferred embodiment, female die 30 is positioned vertically above male die 28. The mixture is then injected between the dies through an injection port 34 extending through female die 30. The arrangement of having female die 30 above male die 28 is preferred since after the forming of the article the dies are separated, and the force of gravity assists in insuring that the article remains on male die 28. This is beneficial as it is easier to subsequently remove the article from male die 28 without deforming the article.

In the alternative, however, the dies can also be positioned with male die 28 vertically above the female die 30. This arrangement is preferred when the mixture has a low viscosity since female die 30 can function as a container for holding the moldable mixture prior to mating of the dies.

Before positioning the moldable mixture, it is preferable to minimize gap distance 32 between the dies so as to limit the movement of the mixture during the final pressing or mating of the dies. Minimizing the movement of the mixture decreases the chance of irregularities in the final article as a result of differential flow in the mixture.

Gap distance 32 between male die 28 and female die 30 is typically in a range of about 2 mm to about 5 cm, with 2 mm to about 3 cm being preferred, and 2 mm to about 1 cm being most preferred. It should be noted, however, that for unusually large objects, gap distance 32 may be much larger to facilitate positioning of the moldable mixture.

The moldable mixture is preferably positioned between the dies by a vacuum extruder such as twin auger extruder 12 so that unwanted air trapped within the mixture can be removed. Failure to remove such air (unless the air is desired to create voids to impart insulation properties) can result in the article having a defective or nonhomogeneous structure matrix.

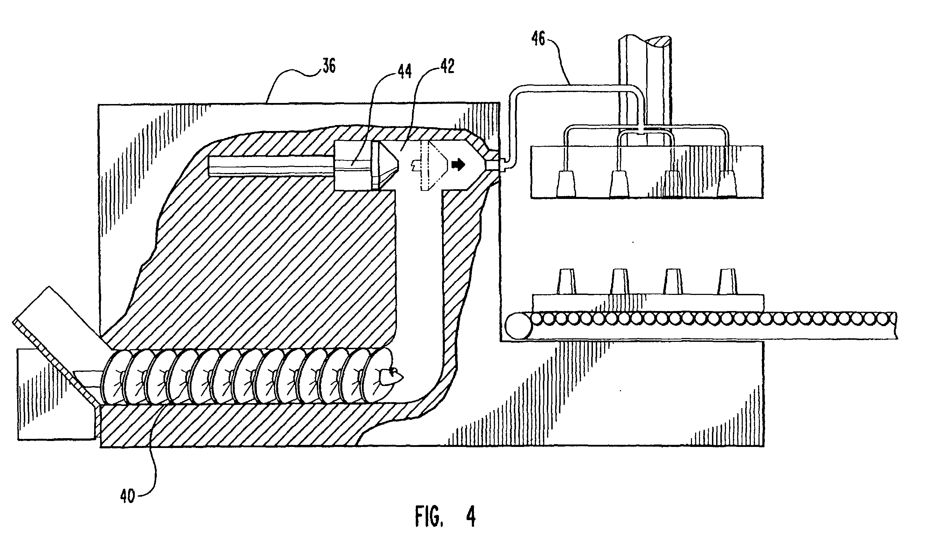

Actual injection of the moldable mixture is typically accomplished by either a two-stage injector or a reciprocating screw injector. As depicted in Figure 4, a two-stage injector 36 has separate compartments for mixing or advancing and injecting. The mixture is conveyed to an extruder screw 40 which in turn feeds the mixture to a separate shooting pot 42. Once shooting pot 42 is filled, an injection piston 44 pushes a defined quantity of the mixture into a network of flow channels 46 that feed to the partially closed dies. As shown in Figure 4, a plurality of articles can be simultaneously fashioned.

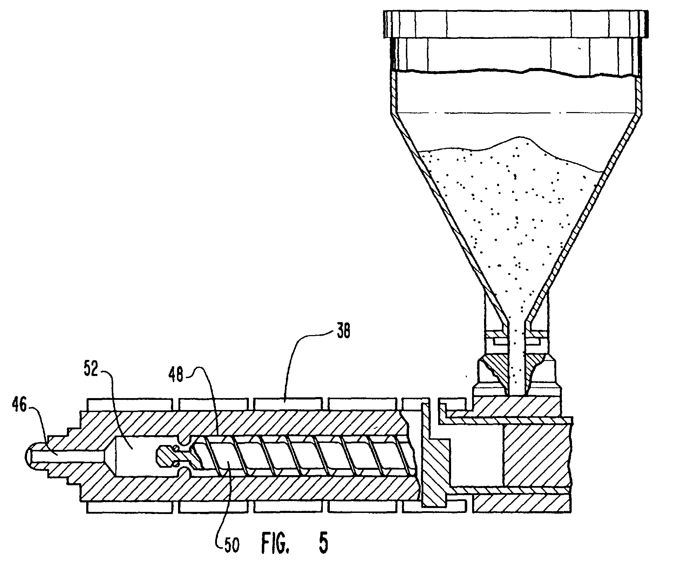

As depicted in Figure 5, a reciprocating screw injector 38 comprises a chamber 48 having a screw auger 50 longitudinally positioned therein. The moldable mixture is feed into chamber 48 and advanced by screw auger 50. As screw auger 50 rotates, it retracts and feeds the mixture to an injection end 52 of screw auger 50. When the required volume of the mixture has accumulated at end 52, screw auger 50 stops rotating and moves forward to inject the mixture into flow channels 46 as previously described.

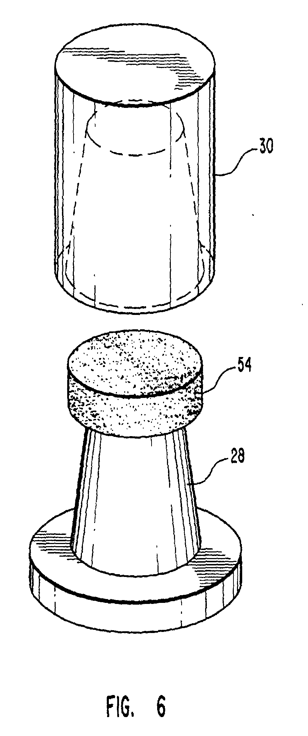

The second method for positioning the moldable mixture between the dies is performed while the dies are still fully separated. This method, as shown in Figure 6, comprises forming a portion of the moldable material into a mass 54, the portion being sufficient to create the desired article, then placing mass 54 between the dies, typically by resting mass 54 on the top of male die 28. Subsequently, as the dies are mated, mass 54 is pressed between the dies.

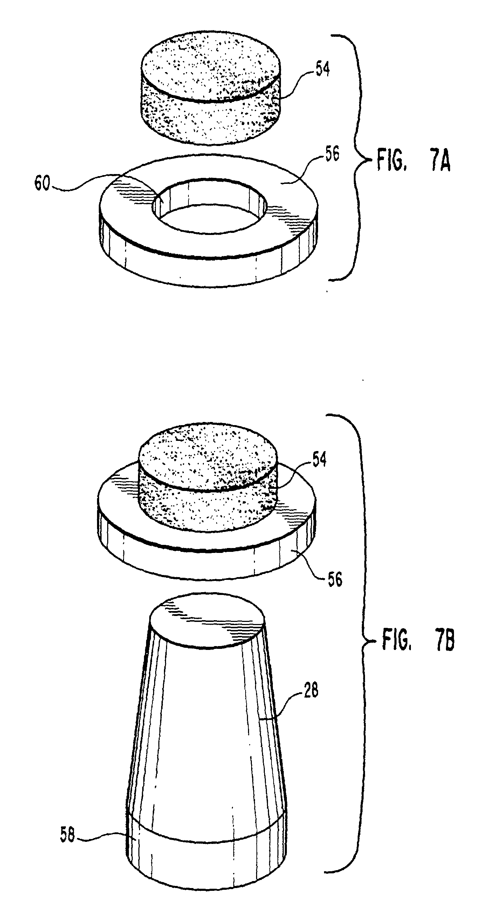

In an alternative embodiment shown in Figures 7A-B, a template 56 is used to position mass 54. Male die 28 has a base 58 with a circumference and template 56 has a passage 60 with a perimeter substantially complementary to the circumference of base 58 of male die 28. Mass 54 is formed having a diameter sufficiently large to span passage 60 of template 56. With mass 54 spanning passage 60, template 56 is placed between male die 28 and female die 30 such that passage 60 is complementarily aligned with the dies. Thereby, as the dies are pressed together, male die 28 travels through passage 60 of template 56 in order to press the moldable mixture between the dies.

The above method can further include the step of depositing template 56 onto male die 28, such that template 56 becomes positioned about base 58 of male dies 28 while mass 54 independently rests on male die 28. Subsequently, as the dies are pressed together, mass 54 is again pressed between the dies.

The preferred method for mechanically removing the molded article incorporates using template 56. The article is loaded onto the template via the lip of the article by either lifting template 56 or lowering male die 28. When the article is removed from the dies, the article is form stable due to its dried surface. However, the article will still have a wet mixture between its walls and, thus, it will not have reached its maximum strength. In such a condition, the article is strongest in compression along its vertical axis. Accordingly, the benefit of using template 56 is that the force applied for removing the article is applied along the strongest axis of the article, thereby minimizing possible deformation to the article.

### 2. Molding.

The next step in the manufacturing process is pressing the moldable mixture between male die 28 and female die 30 in order to mold the moldable mixture into the desired shape of the article. The pressure exerted by the dies forms the moldable mixture into the desired configuration of the article. Accordingly, the pressure must be sufficient to actually mold the moldable mixture between the dies. Furthermore, it is preferable that the pressure be sufficient to produce an article with a uniform and smooth surface finish.

The amount of pressure applied to the moldable mixture may also affect the strength of the resulting article. Research has found that the strength of the resultant product is increased for mixtures where the particles are closer together. The greater the pressure used to press the moldable mixture between the dies, the closer together the particles are pushed, thereby increasing the strength of the resulting article. That is to say, the less porosity that there is in the moldable mixture, the higher the strength of the resulting article.

As high pressures are applied to moldable mixtures with low concentration of water, the space between the particles is decreased. Thus, the water existing within the mixture becomes more effective in encasing the particles and reducing their friction force. In essence, as pressure is applied to a moldable mixture, the mixture becomes more fluid or workable and, thus, less water needs to be added. In turn, the strength of the resulting product is increased. In application to the present invention, the higher the pressure exerted by the dies, the lower the amount of water that needs to be added to the mixture. This principle of pressure also applies to the injection process.

Although a high pressure is generally desirable, it can also have a negative effect. To produce a lightweight article, low density aggregates (such as perlite or hollow glass spheres) are typically added to the mixture. As the pressure exerted by the dies is increased, these aggregates may be crushed, thereby increasing the density of the aggregate and the resulting article, thereby decreasing the insulative effect of the aggregates.

Accordingly, the pressure applied by the dies should be optimized so as to maximize the strength, structural integrity, and low density of the article or container. Within the present invention, the pressure exerted by the male die and the female die on the moldable mixture is preferably within a range from about 50 psi to about 20,000 psi, more preferably from about 100 psi to about 10,000 psi, and most preferably from about 150 psi to about 2000 psi. However, the amount of pressure will vary depending upon the temperature and time of the molding process.

The step of pressing further includes expelling the air from between the dies when the dies are pressed together. Failure to remove such air can result in air pockets or deformities in the structural matrix of the article. Typically, air between the dies is expelled through the gap distance between the dies as the dies are pressed together.

In an alternative embodiment shown in Figure 2, the dies may have a plurality of vent holes 62 extending through the dies so as to make them permeable. Accordingly, as the dies are pressed together, the air between the dies is expelled through vent holes 62. Vent holes 62 thus prevent air pockets from forming within the cavity which could deform the article.

Vent holes 62 also prevent the creation of a vacuum within the cavity as the dies are separated, by allowing air to return into cavity. Such a vacuum could exert an undue force on the newly formed article, thereby disrupting its structural integrity. Furthermore, vent holes 62 permit the escape of excess steam created by the heating process. Vent holes 62 can exist in either or both of the dies.

The amount of pressure needed to mold the mixture can also be minimized by designing mixtures which expand and flow to fill the mold similar to batter in a waffle iron. Such mixtures can be designed based on the rheology of the mixture, by incorporating air voids, by controlling the temperature of the mixture and/or increasing the water content. Utilizing mixtures capable of expanding and flowing to the conform to the shape of a mold are particularly useful in the production of articles having complex shapes.

### B. The Injection Molding Process.

In contrast to die pressing, injection molding entails positioning the moldable mixture under high pressure into a closed die. After the article has obtained form stability, the die is opened and the article removed and allowed to finish hardening. Injection molding requires the use of an injection unit that positions the mixture in a clamping unit. The injection unit typically comprises a reciprocating screw injector 38 (schematically illustrated in Figure 5) or a two-stage injector 36 (schematically illustrated in Figure 4) as previously discussed with die pressing. Injection takes place at a predetermined speed and pressure to ensure complete filling of the mold.

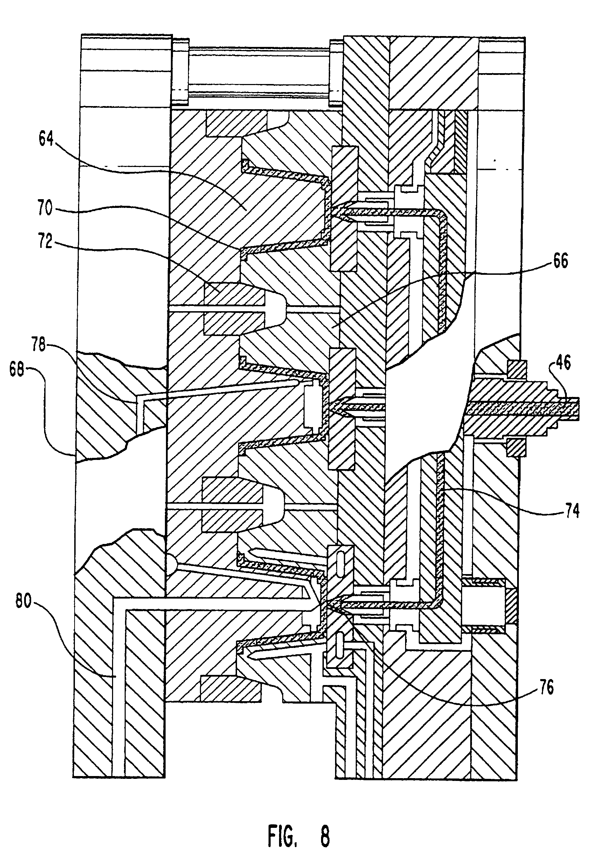

As depicted in Figure 8, the moldable mixture is injected through flow channel 46 into a clamping unit comprising a core 64 being aligned with a cavity 66 having a substantially complementary shape to core 64. As core 64 and cavity 66 are pressed together and held tight by a clamping piston 68, a closed injection molding mold 70 of a desired shape is formed. The clamping unit may form a plurality of closed molds for mass production of a desired article. Locking rings 72 positioned between molds 70 help to align core 64 and cavity 66 as they are pressed together.

Similar to the injection die pressing process, as the mixture is injected, the mixture is forced through a network of flow channels 74 that feed to each closed mold 70 through a gate 76. Air channels 78, also connected to each closed mold 70, permit air to escape as the molds are filled. Once the molds are filled, gates 76 are closed to allow the molded articles to obtain form stability.

To insure consistent quality of the formed article, the clamping unit should be balanced so that it supplies the mixture to each cavity at the same pressure. Flow balance is achieved by ensuring that each flow channel 74 from the injection unit has an equal length and equal number of turns. Molds with up to about 64 cavities operate reliably with this balanced approach.

The injection molding process is most often used for thin walled articles having relatively large length-to-thickness ratios, *e.g.*, thin-walled yogurt and margarine containers. Length is the maximum flow length in the cavity, and thickness is the average wall thickness of the part. Such ratios can be as high as 400:1. To mass produce the articles and to insure that the mold is properly filled and the matrix uniform, the mixture is injected under a pressure in a range between about 500 psi to about 40,000 psi, with about 10,000 psi to about 35,000 psi being preferred, and about 25,000 psi to about 30,000 psi being most preferred. The amount of pressure applied depends in part on the viscosity of the mixture, the higher the viscosity the greater the pressure required.

The same principles, methods, and parameters for removal of air from the mixture, molding the mixture under pressure, imparting form stability to the article, as discussed above are relevant to the injection molding process. For example, as depicted in Figure 8, heating lines 80 can be used to convey heated liquids for heating the moldable mixture in closed molds 70, thereby rapidly imparting form stability to the articles.

Finally, the two basic methods for part ejection are mechanical and air ejection. Mechanical ejection commonly uses stripper rings surrounding each mold core to physically push the parts off the core. Air ejection uses blasts of air to loosen and blow the parts off the cores. Air ejection is the more preferred method because it involves fewer moving parts and thus less maintenance. Also, parts can be made thinner and ejected earlier in the cycle because less sidewall strength is required for air ejection compared to mechanical ejection.

### C. The Blow Molding Process.

Blow molding is a process used to produce hollow articles, primary bottles. Air, or occasionally nitrogen, is used to expand a quantity of moldable mixture called a parison against a female mold cavity. The two fundamental blow molding process that are applicable to the moldable mixture of the present invention include injection blow molding and extrusion blow molding.

### 1. Injection Blow Molding.

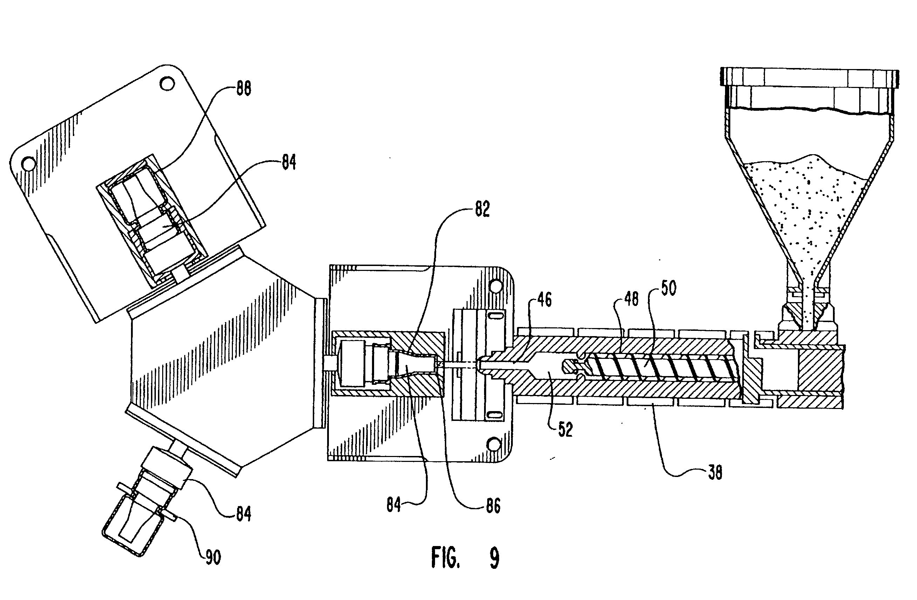

The injection blow molding process is depicted in Figure 9 as being carried out in a three stage process. In the first stage, reciprocating screw injector 38, as previously discussed injects the mixture, through injection passage 46, into a parison cavity 82 and around a core rod 84 positioned therein. The resulting injection-molded "test tube" shaped parison 86 is then transferred on core rod 84 into injection blow molding mold 88 having the desired shape of the article. In stage two, air is blow through core rod 84 expanding parison 86 against the cavity of mold 88. The molded article is then allowed to obtain form stability. Finally, in stage three, the article is removed from mold and subsequently stripped from core rod 84 by a stripper plate 90 positioned about core rod 84.

Injection blow molding is generally used for small bottles, usually less than 1/2 liter capacity. The process is scrap-free with extremely accurate part-weight control and neck-finish detail.

### 2. Extrusion Blow Molding.

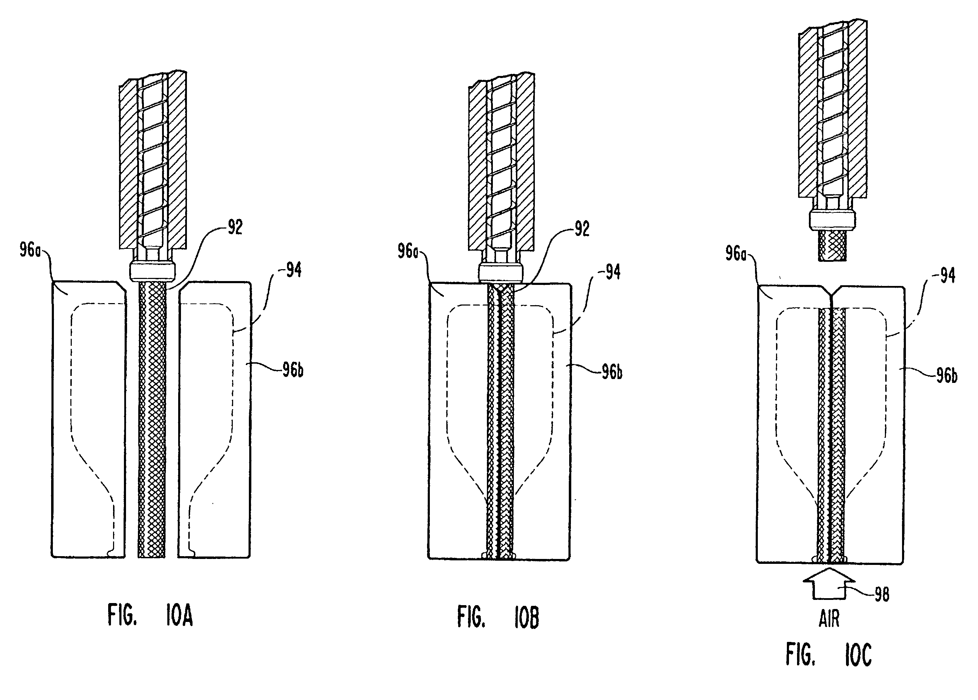

As shown in Figures 10A-F, in extrusion blow molding once the moldable mixture is prepared, the mixture is extruded as a tube 92 into free air. Extruding can be accomplished through a continuous or intermittent extruder as previously discussed depending on the desired manufacturing process. Tube 92, also called a parison, is captured in a cavity 94 between two halves 96a and 96b of an extrusion blow molding mold 96 having a desired shape. A blow pin 98 is then inserted into tube 92 through which air enters and expands tube 92 against the mold cavity 94. Once the mixture is blown into its desired shape, the article is allowed to obtain form stability. The two halves of mold 96 are then separated and the article is removed for hardening. Unlike injection blow molding, flash is a by-product of the process which must be trimmed and reclaimed. Flash is formed when tube 92 is pinched together and sealed by two halves 96 of the mold.

For the moldable mixture of the present invention to function with the above described blow molding processes, the mixture must have a sufficiently high viscosity for a self support parison while at the same time have sufficient elasticity to expand under blowing into the desired shape of the article. As previously discussed, the rheology of the moldable mixture can be microstructurally engineered with the addition of a variety of admixtures to posses the desired properties. Such a mixture will typically have a high concentration of organic binder which functions to increase both stability and elasticity.

The same principle, methods, and parameters for removal of air from the mixture, molding the mixture under pressure, imparting form stability to the article, and removal of the article from the mold as discussed above are relevant to the blow molding processes. For example, as with the other processes previously described, form stability of the blow molded article can be achieved through heating of the dies, various set accelerators, or water deficiency.

### D. The Jiggering Process.

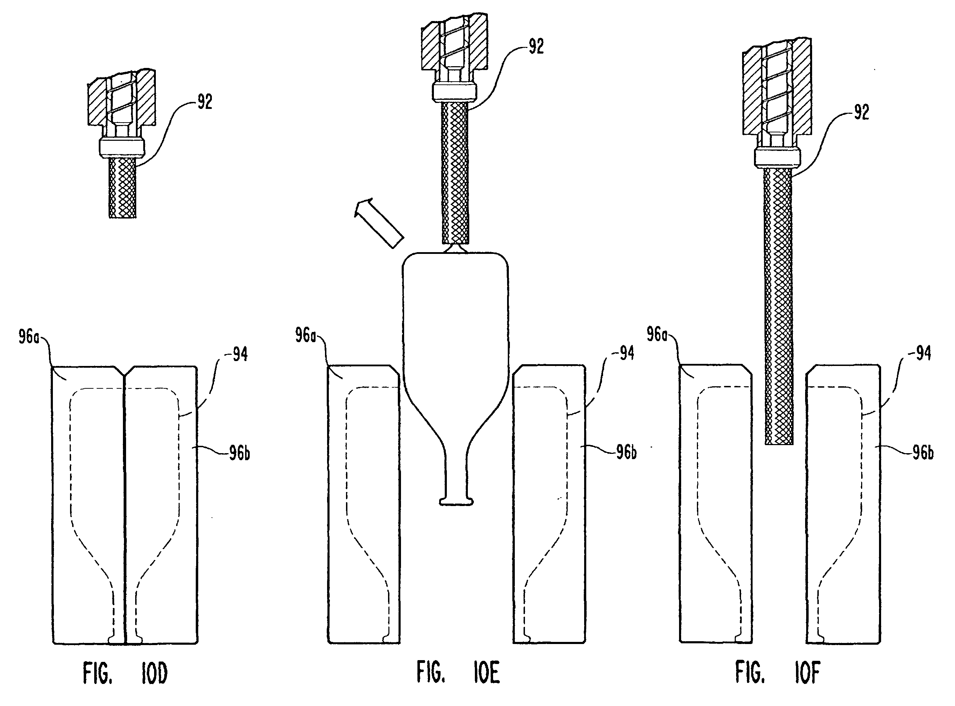

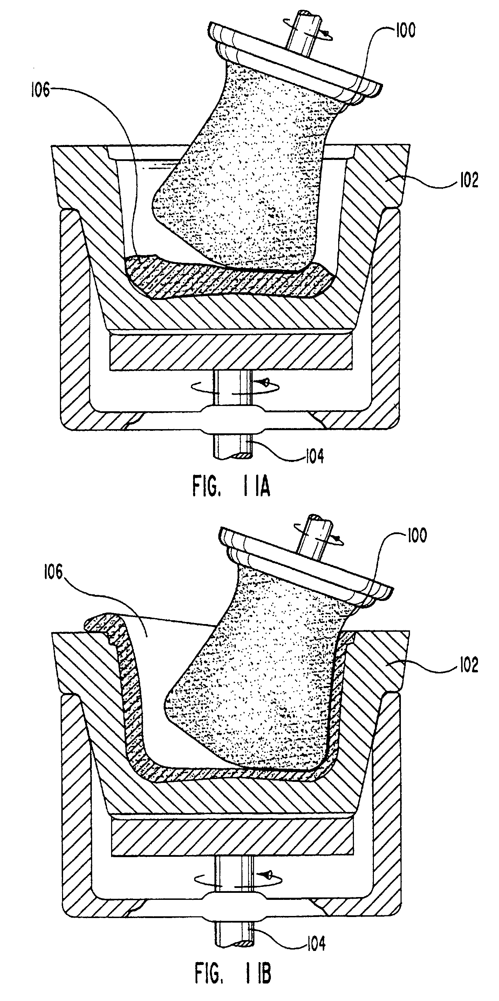

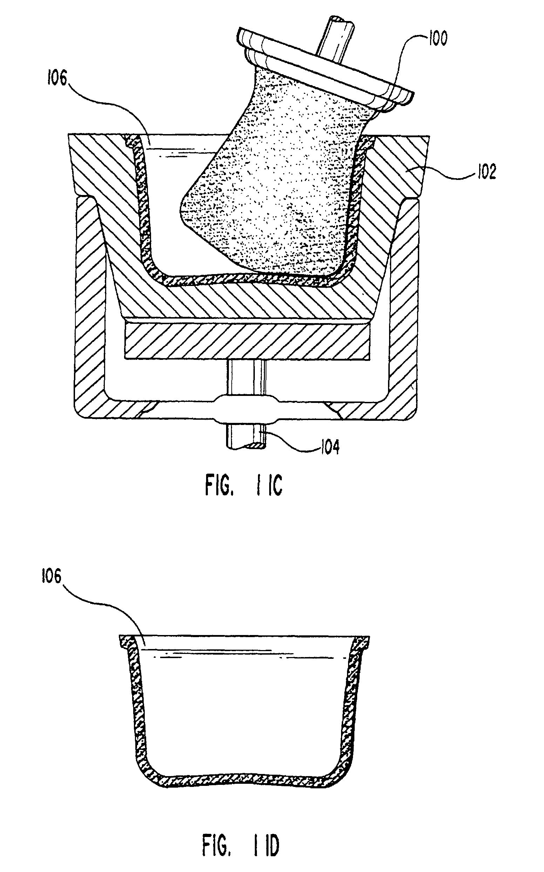

Jiggering is basically a mechanized version of the potter's wheel and is a process used to make open mouthed, symmetrical articles, *e.g.*, bowels, pots, and plates. As depicted in Figures 11A-D, the process requires the use of a roller head 100, jiggering mold 102, and spindle 104. Once the moldable mixture is prepared as previously discussed, an adequate amount of the mixture 106 is fashioned into a disk and positioned at the bottom of mold 102. Fashioning of the mixture 106 into disk is not critical but serves as a uniform object that can be more easily and uniformly molded.

Mixture 106 positioned in mold 102, mold 102 is placed on spindle 104 and rotated thereby. Roller head 100 which is also spinning is then lowered into mold 102 so as to press the moldable mixture 106 against the sides of mold 102. Such a process requires the moldable mixture to have a rheology close to that of clay. Once the material is uniformly dispersed about the surface of mold 102, roller head 100 is removed, any excess material is scraped off from the edge of mold 102, and the molded article is allowed to gain form stability.

In a preferred embodiment, roller head 100 and mold 102 are made of a polished metal so as to produce an article with a smooth finished surface and to help prevent adhesion between the molded mixture and roller head 100 and mold 102. Furthermore, it is also preferred that roller head 100 and mold 102 be capable of being heated, similar to the dye pressing molds, so as to quickly impart form stability to the article while simultaneously creating a steam barrier that limits adhesion of the article to mold 102 and roller head 100. After obtaining form stability, the article can be removed from the mold such as by blowing air between the mold and article or by mechanical means.

The same principles, methods, and parameters for removal of air from the mixture, molding the mixture under pressure, and imparting form stability to the article as discussed above are relevant to the jiggering processes.

### E. Molding Articles From Wet Sheets.

The wet sheet molding process is a two step fashioning process in which the moldable mixture is first molded into a sheet. The sheet may be formed by extruding a moldable mixture through a die having a width and thickness corresponding to the desired dimensions of the sheet. Alternatively, the sheet may be formed by passing a moldable mixture between a pair of rollers. A combination of these two sheet forming processes is often preferable. A fresh sheet is then molded into the desired shape prior to complete hardening or curing of the sheet.

### 1. Extrusion.

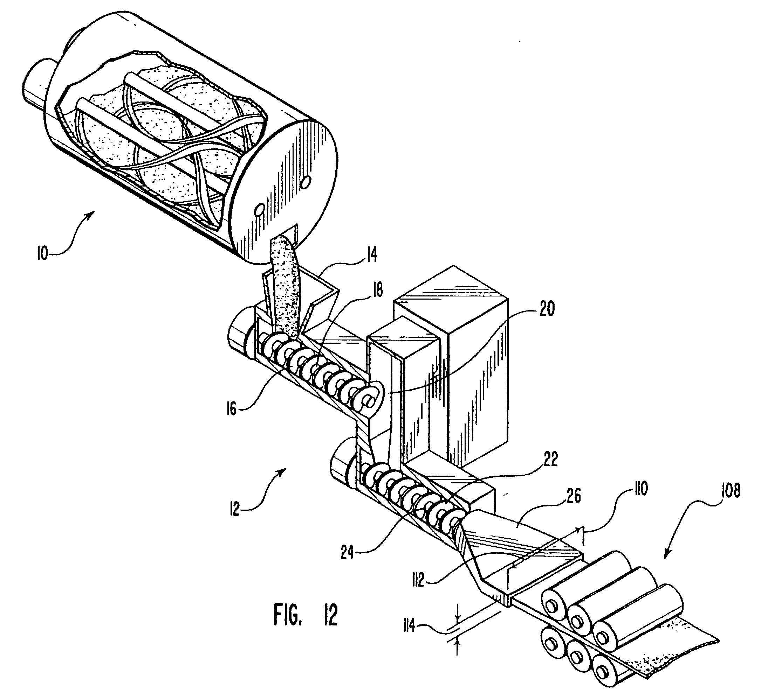

In a preferred embodiment, an appropriate moldable mixture is transported to a sheet forming apparatus comprising an extruder and a set or series of rollers. Reference is now made to Figure 12, which illustrates a currently preferred system including a mixer 10 and twin auger extruder 12, acting in conjunction with reduction rollers 108. In an alternative embodiment, a sheet may be formed by eliminating extruder 12 and feeding the mixture directly between reduction rollers 108. If an extruder is used to form a sheet, the reduction rollers aid in forming a sheet having a more precise thickness.

Figure 12 shows auger extruder 12 having die head 26 with a die slit 110 including a die width 112 and a die thickness 114. The cross-sectional shape of the die slit 110 is configured to create a sheet of a desired width and thickness that will generally correspond to the die width 112 and die thickness 114.

Auger extruder 12 can also be replaced by a piston extruder such as two stage injector 36 or reciprocating screw injector 38 as previously discussed. A piston extruder may be advantageous where greater pressures are required. Nevertheless, due to the highly plastic-like nature of mixtures typically employed in the present invention, it is not generally necessary, or even advantageous, to exert pressures greater than those achieved using an auger extruder. Furthermore, piston extruders are less able than auger extruders in continuously forming a sheet.

Although the preferred width and thickness of the die will depend upon the width and thickness of the particular sheet to be manufactured, the thickness of the extruded sheet will usually be at least twice, and sometime many times, the thickness of the final rolled sheet. The amount of reduction (and, correspondingly, the thickness multiplier) will depend upon the properties of the sheet in question. Because the reduction process helps control fiber orientation, the amount of reduction will often correspond to the degree of desired orientation. In addition, the greater the thickness reduction, the greater the elongation of the sheet. In a typical manufacturing process an extruded sheet with a thickness of about 6 mm may be rolled into a sheet with a thickness between about 0.2 mm and about 0.5 mm.

In addition to narrow die slits to form flat sheets, other die shapes may be used to form other objects or shapes. For example, in some cases it may not be desirable to extrude an extremely wide sheet. To accomplish this, a pipe-shaped object may be extruded and continuously cut and unfolded using a knife located just outside the die head.

The amount of pressure that is applied in order to extrude a moldable mixture will generally depend on the pressure needed to force the mixture through the die head, as well as the desired rate of extrusion. It should be understood that the rate of extrusion should be controlled in order for the rate of sheet formation to correspond to the speed at which the sheet is subsequently passed through the reduction rollers during the reduction step.

It will be understood that an important factor which determines the optimum speed or rate of extrusion is the final thickness of the sheet. A thicker sheet contains more material and will require a higher rate of extrusion to provide the necessary material. Conversely, a thinner sheet contains less material and will require a lower rate of extrusion in order to provide the necessary material.

The ability of the moldable mixture to be extruded through the die head, as well as the rate at which it is extruded, is generally a function of the rheology of the mixture, as well as the operating parameters and properties of the machinery. Factors such as the amount of water, organic binder, dispersant, or the level of initial hydration of the hydraulically settable binder all affect the rheological properties of the mixture. The rate of extrusion may, therefore, be controlled by controlling the mix design and the rate of setting or hardening of the moldable mixture.

As set forth above, adequate pressure is necessary in order to temporarily increase the workability of the moldable mixture in the case where the mixture has a deficiency of water and has a degree of particle packing optimization. As the mixture is compressed within the extruder, the compressive forces bring the particles together, thereby reducing the interstitial space between the particles and increasing the apparent amount of water that is available to lubricate the particles. In this way, workability is increased until the mixture has been extruded through the die head, at which point the reduced pressure causes the mixture to exhibit an almost immediate increase in stiffness and green strength.

In light of each of the factors listed above, the amount of pressure which will be applied by the extruder in order to extrude the hydraulically settable mixture will preferably be within the range from between about 50 kPa to about 70 MPa, more preferably within the range from between about 150 kPa to about 30 MPa, and most preferably within the range from between about 350 kPa to about 3.5 MPa.

The extrusion of a moldable mixture through the die head will orient the individual fibers within the moldable mixture in the lengthwise direction of the extruded sheet. As will be seen hereinbelow, the rolling process will further orient the fibers in the lengthwise or "Y" direction as the sheet is further elongated during the reduction process. In addition, by employing rollers having varying gap distances in the "Z" direction (such as conical rollers) some of the fibers can also be oriented in the "X" direction, *i*.*e*., along the width of the sheet. Thus, it is possible to create a sheet by extrusion, coupled with rolling, which will have bidirectionally oriented fibers.

One of ordinary skill in the art will appreciate that the extrusion step need not formerly employ the use of an "extruder" as the term is used in the art. The purpose of the extrusion step is to provide a continuous, well-regulated supply of hydraulically settable material to the rollers. The extrusion step preferably orients the fibers in the direction of the flow of the material. These may be achieved by other mechanisms know to those skilled in the art to effect the "extrusion" or flow of material through an appropriate opening. The force needed to cause a hydraulically settable mixture to flow may, for example, be supplied by gravity.

### 2. Rolling

Although the articles of the present invention can be directly formed from the extruded sheets, it is preferred to "roll" the extruded sheet by passing it between at least one pair of rollers, the purpose of which is to improve the uniformity and surface quality of the sheet and, in most cases, reduce the thickness of the sheet. In cases where it is desirable to greatly reduce the thickness of the sheet, it may be necessary to reduce the thickness of the sheet in steps, wherein the sheet is passed through several pairs of rollers, each pair having progressively narrower gap distances therebetween.

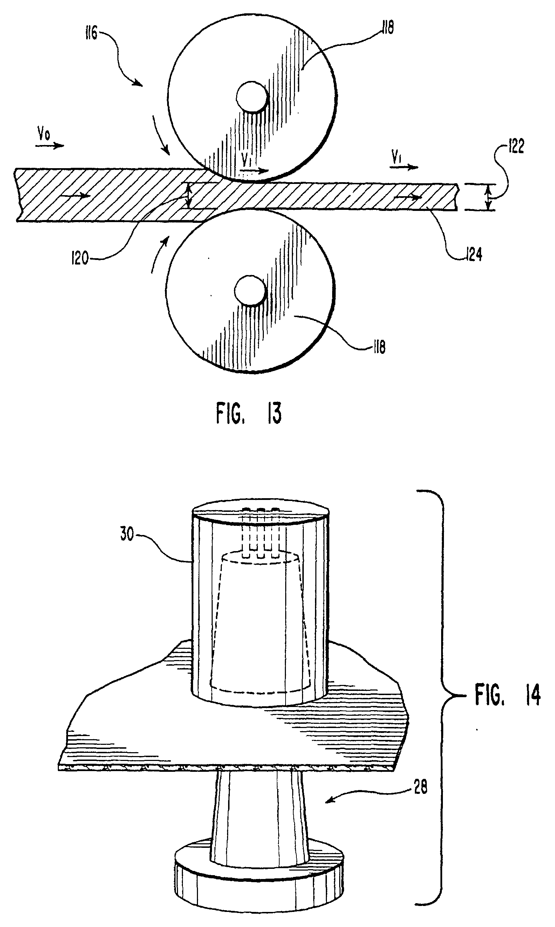

Reference should be made to Figure 12 which shows one embodiment of the present invention in which a series of rollers are employed during the rolling step. The rollers within each of the roller pairs have similar diameters, although in some cases it may be preferable to use smaller diameter rollers in combination with larger diameter rollers. As seen in Figure 13, a set or pair of rollers 116 normally includes two individual rollers 118 positioned adjacent to one another with a predetermined gap distance 120 therebetween. The gap distance 120 between the two individual rollers 118 corresponds to the desired thickness 122 of the reduced sheet 124 after it passes between set of rollers 116.

As the thickness of the sheet is reduced upon passing through a pair of rollers, it will also elongate in the forward moving (or "Y") direction. One consequence of sheet elongation is that the fibers will further be oriented or lined up in the "Y" direction. In this way, the reduction process in combination with the initial extrusion process will create a sheet having substantially unidirectionally oriented fibers in the "Y", or lengthwise, direction.

Another consequence of sheet elongation is that the sheet will "speed up" as it passes between a pair of reduction rollers. Reference is again made to Figure 13 to illustrate that the tangential speed v₁ of the outer surface of the rollers will closely correspond to the speed v₁ of the reduced, elongated sheet as it exits the rollers, not the speed of the sheet as it enters the gap between the rollers.

By way of example, if the sheet thickness is reduced by 50% and assuming there is no widening of the sheet during the reduction process the sheet will elongate to twice its original length. This corresponds to a doubling of the sheet's velocity before it enters the rollers compared to when it exits the rollers. Thus, as in Figure 13, if the sheet thickness is reduced by 50%, then v₁ = 2 x v₀; the velocity doubles from point "a" to point "b." The acceleration of the sheet and the downward pressure of the rollers imparts a large amount of shearing forces on the sheet, which forces can harm the moldable matrix if too great.

The application of an excessively large shearing force can disrupt the integrity of the structural matrix of the sheet, thereby creating flaws within and weakening the sheet. Because of this, the thickness of the sheet should be reduced in steps small enough to prevent undo damage to the sheet. In light of typical production parameters (such as, *e.g.*, minimizing the number of reduction steps, orienting the fibers, and controlling the rheology of the moldable mixture) the reduction in thickness of a sheet will preferably not exceed about 80% during any single reduction step (*i*.*e*., while passing between any one set of rollers).

The diameter of each of the rollers should be optimized depending on the properties of the moldable mixture and the amount of thickness reduction of the sheets. When optimizing the diameter of the rollers two competing interests should be considered. The first relates to the fact that smaller diameter rollers tend to impart a greater amount of shearing force into the sheet as it passes between the rollers. This is because the downward angle of compression onto the sheet (and average acceleration) is on average greater when using smaller rollers than when using larger diameter rollers.

Consequently, from this perspective, larger diameter rollers appear to be advantageous compared to smaller diameter rollers because less shearing forces would be expected to introduce fewer flaws into the structural matrix.

However, the use of larger diameter rollers has the drawback of the moldable material coming into contact with the roller for a greater period of time, thereby resulting in an increase in drying of the sheet during the rolling process in the case where the rollers are heated to prevent adhesion. (Because more of the sheet comes into contact with a larger diameter roller, heating is even more important when using larger diameter rollers to prevent adhesion). While some drying is advantageous, drying the sheet too quickly during the rolling process could result in the introduction of fractures and other flaws within the hydraulically settable matrix. A dryer sheet is less able to conform to a new shape without a rupture in the structural matrix compared to a wetter sheet subjected to the same level of shearing forces. Consequently, from this perspective the use of smaller diameter rollers is advantageous for reducing the drying effect of the reduction rollers.

In light of this, the diameter of the rollers should preferably be optimized and be sufficiently small to prevent overdrying of the material during the rolling process, while also being sufficiently large to reduce the amount of shearing force imparted to the sheet, thereby allowing a greater reduction of sheet thickness during each reduction step. By maximizing the amount of sheet thickness reduction, the number of reducing steps can be minimized.

As set forth above, it is preferable to treat the roller surfaces in order to prevent sticking or adhesion of the sheet to the rollers. One method entails heating the rollers, which causes some of the water within the moldable mixture to evaporate and to create a steam barrier between the sheet and the rollers. Evaporation of some of the water also reduces the amount of water within the mixture, thereby increasing the green strength of the sheet. The temperature of the rollers, however, must not be so high as to dry or harden the surface of the sheet to the point which would create residual stresses, fractures, flaking, or other deformities or irregularities in the sheet. Accordingly, the rollers are preferably heated to a temperature within a range from about 50°C to about 140°C, more preferably from about 70°C to about 120°C, and most preferably from about 85°C to about 105°C.

Generally, the stickiness of the moldable mixture increases as the amount of water in the mixture is increased. Therefore, the rollers should generally be heated to a higher temperature in cases where the mixture contains more water, which is advantageous because sheets containing a higher water content must generally have more of the water removed in order to obtain adequate green strength.

Because heated rollers can drive off significant amounts of water and improve the form stability, the amount of acceptable sheet thickness reduction will generally decrease in each successive reduction step as the sheet becomes drier. This is because a drier, stiffer sheet can tolerate less shear before flaws are introduced into the structural matrix.

In an alternative embodiment, adhesion between the sheets and rollers can be reduced by cooling the rollers to or below room temperature. Heating the mixture in the extruder to a relatively high temperature, for example, and then cooling the sheet surface causes the vaporizing water to condense, which is thought to create a thin film of water between the sheet and the roller. The rollers should be cool enough to prevent the surface of the sheet from adhering to the rollers, but not so cold to cause the sheet to freeze or become so stiff or inflexible that it will fracture or shatter during the rolling process.

Overcooling the material can also greatly retard the hydration reaction, although this may be desirable in some cases. Accordingly, where cooling a heated mixture is relied upon to prevent adhesion of the sheet it is preferable to cool the rollers to a temperature within the range from between about -20°C to about 40°C, more preferably to between about 0°C to about 35°C, and most preferably to between 5°C to about 30°C. Conversely, it will generally be preferable to heat the extruding mixture to a temperature within the range from between about 20°C to about 80°C. The temperature will correlate with the temperature of the rollers.

Another way to reduce the level of adhesion between the rollers and the sheet is to treat the roller surfaces with a nonstick coating such as polished stainless steel, chrome, nickel, or teflon.

### 3. Molding.

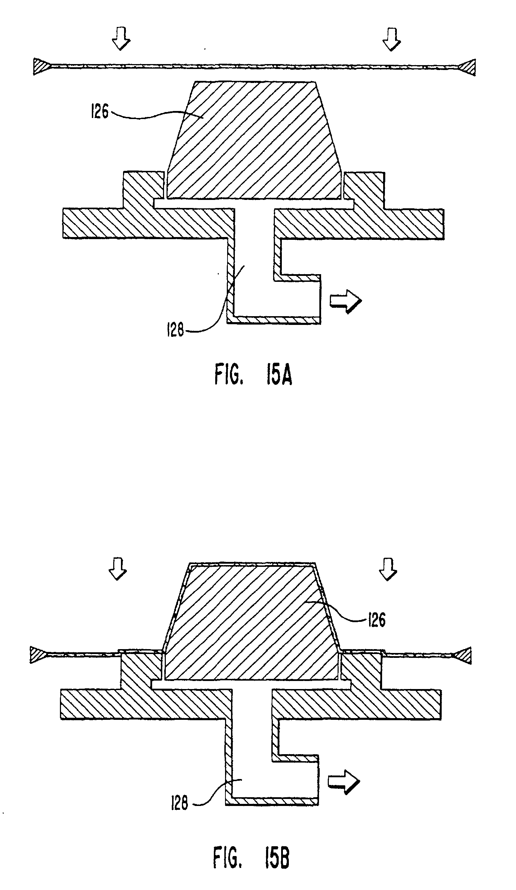

Once the sheet is formed, the next step is to fashion a portion of the sheet into the desired shape of the article. As shown in Figure 14, this process is similar to die pressing in that the sheet is pressed between male die 28 of a desired shape and female die 30 having a substantially complementary shape to male die 28. As a portion of the sheet is pressed between the dies, the mixture is formed into an article having the complementary shape of the dies.

Although solid single piece dies (the male die and the female die each comprising one solid piece) are the preferred dies based on ease and economy, alternative dies include split dies, progressive dies, and collapsible dies as previously discussed.

Just as in the die pressing process, the amount of pressure exerted by the dies onto the sheet serves several functions which must be considered when determining how much pressure to apply. While a sheet of material is used as compared with directly injecting the material, the parameters and the cautions discussed with the die pressing process will generally apply to the wet sheet molding process.

In an alternative method for fashioning the article from the sheet, the various methods of vacuum forming, as commonly used in the plastics industry, can be incorporated. Vacuum forming uses atmospheric pressure (about 14.7 psi) to force the sheet to conform to a mold. Both male and female molds can be used for vacuum forming. The term "vacuum mold" as used in the specification and appended claims is intended to include either or both the male mold and female mold used in vacuum forming.

Drape forming shown in Figures 15A-B uses a male vacuum mold 126 having a vacuum port 128 communicating therewith. The sheet is positioned over the top of mold 126, or mold 126 is placed into the sheet. The air between the sheet and mold 126 is then evacuated through vacuum port 128, contouring the sheet around mold 126. The resulting product is thickest in the center of the part, where the material first touches mold 126. The product is thinnest in high-draw areas around the periphery, which contacts mold 126 last.

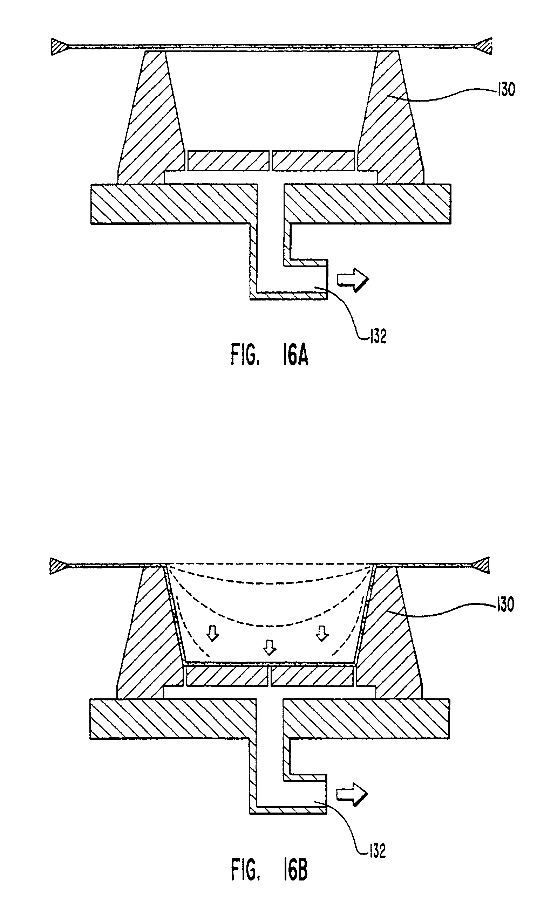

Straight vacuum forming shown in Figure 16A-B uses a female vacuum mold 130 having a vacuum port 132 communicating therewith. The sheet is sealed against the top of female mold 130. The mold cavity is then evacuated through vacuum port 132, and atmospheric pressure pushes the material against the sidewalls of the cavity. This forming technique results in material distribution (thin in the middle and thick around the edges) that is essentially opposite of that obtained when the same part is produced by drape forming on male mold 126.

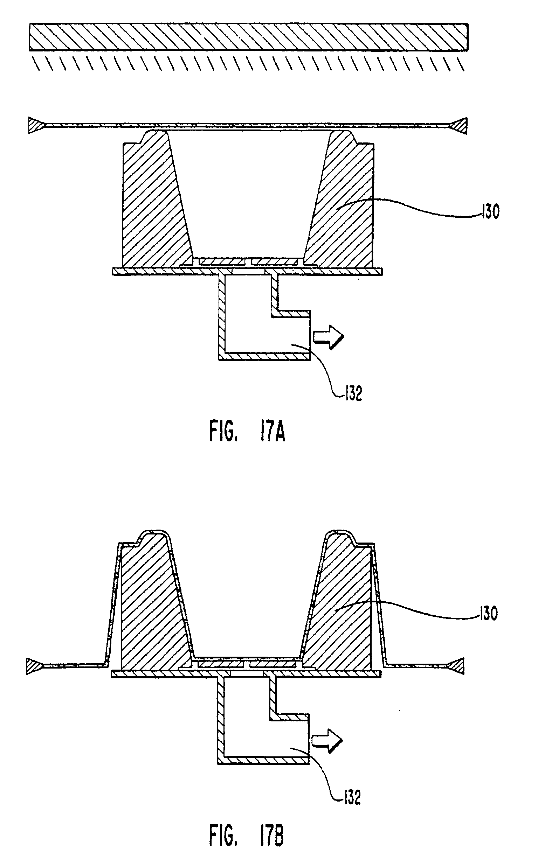

As shown in Figures 17A-B, drape vacuum forming, as opposed to drape forming, is similar to straight vacuum forming except that the edges of the sheet are pressed all the way to the base of female mold 130 before the cavity is evacuated. This provides a better vacuum for the molding process.

Snapback, billow/air slip, and billow drape are multistep vacuum forming techniques designed to improve the wall thickness uniformity of products produced on male molds by prestretching the sheet prior to its contacting the mold. Stretching the sheet freely in air without touching anything allows the material to thin out uniformly. As a result, the sheet's surface area is also increased so that it more closely matches that of the mold.

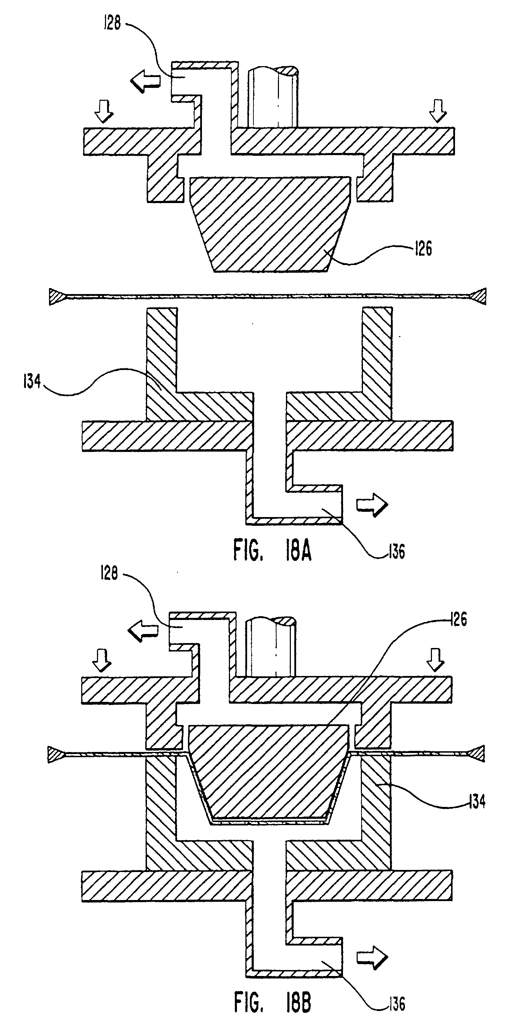

Snapback vacuum forming, as shown in Figures 18A-B, utilizes a vacuum box 134 having a box port 136 in conjunction with male vacuum mold 126. The sheet is sealed against vacuum box 134, and a partial vacuum, sufficient to stretch the sheet a desired amount is applied to vacuum box 134 through box port 136. Male vacuum mold 126 is then pushed into the concave sheet. Vacuum box 134 is vented to the atmosphere and a vacuum is drawn on male vacuum mold 126. The atmosphere pressure then forces the material against male vacuum mold 126.

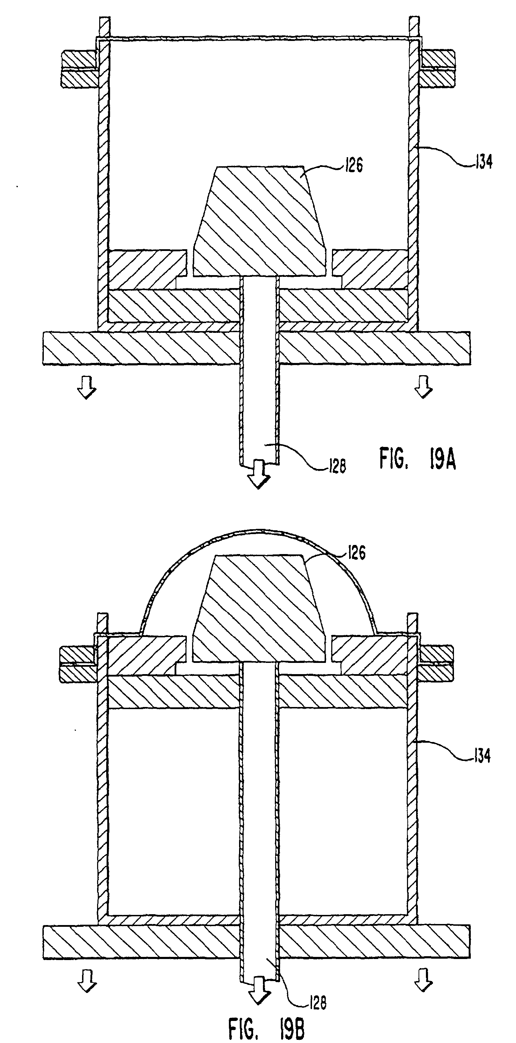

Billow/air-slip vacuum forming, illustrated in Figures 19A-B, utilizes vacuum box 134 with male vacuum mold 126 movably positioned within. The sheet is sealed against vacuum box 134. Box 134 is pressured with compressed air and the sheet billows up to form a bubble that provides the appropriate stretching. Male vacuum mold 126 is pushed up into the convex bubble. Vacuum box 134 and male vacuum mold 126 are then evacuated and the sheet is forced against male vacuum mold 126.

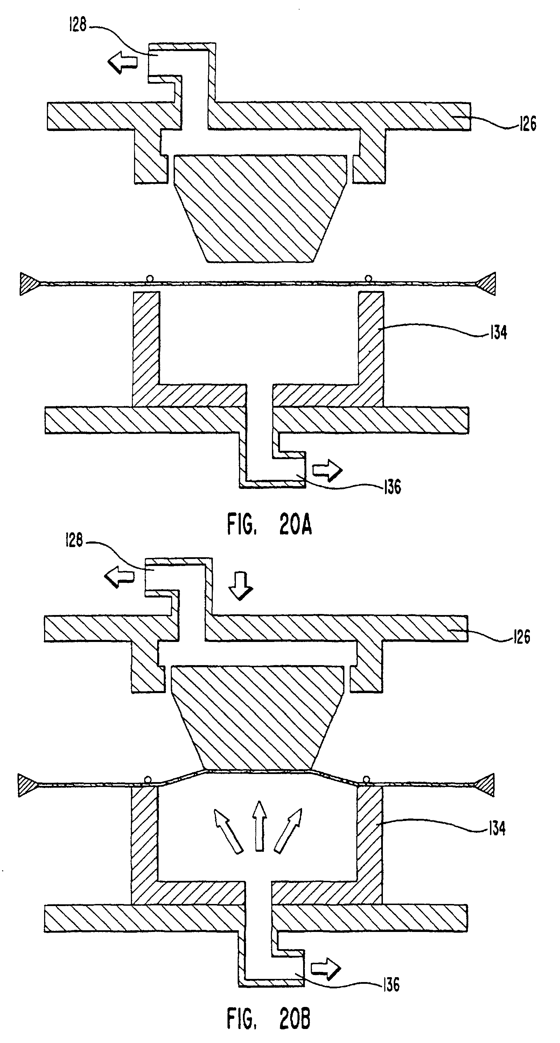

Billow drape vacuum forming is a reverse draw technique that utilizes vacuum box 134 to blow a bubble in the sheet, as shown in Figures 20A-B. Male vacuum mold 126, mounted opposite vacuum box 134, is pushed into the convex bubble. The air in the bubble is vented to the atmosphere in a controlled manner. By matching the amount of air being vented to that being displaced by male vacuum mold 126, the sheet material is wiped or draped against male vacuum mold 126. When male vacuum mold 126 completely penetrates the sheet, a vacuum is applied to male vacuum mold 126 and vacuum box 134 is vented to the atmosphere to complete the forming operation.

Plug-assist and billow/plug-assist/snap back are multistep vacuum forming techniques designed to improve the wall thickness uniformity of parts produced with female molds. They utilize mechanical assists (plugs) to force more material into high dry areas of the part.

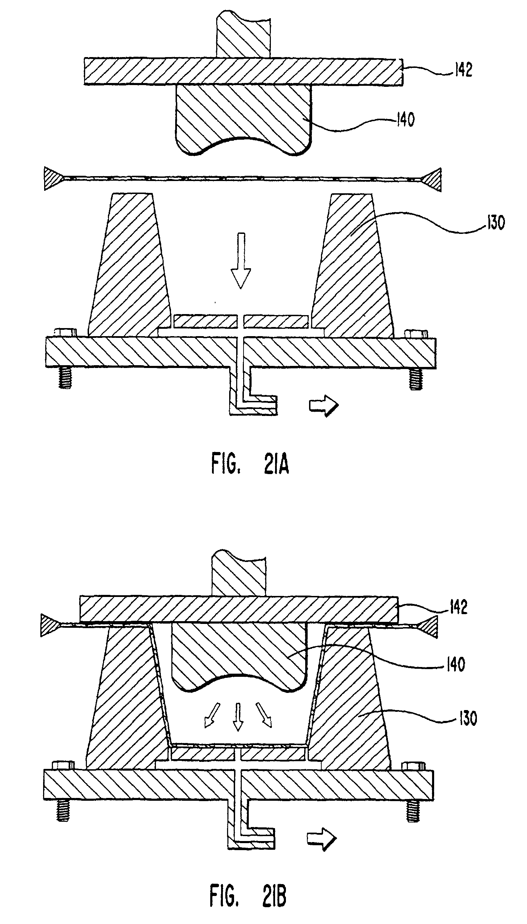

Plug assist vacuum forming, which is shown in Figures 21A-B, is used in conjunction with straight vacuum or drape forming techniques. A plug 140 is mounted on a platen 142 opposite female vacuum mold 130. The sheet is sealed against the female vacuum mold 130, and plug 140 pushes the material into female vacuum mold 130 prior to drawing a vacuum. When the female vacuum mold 130 is evacuated, the material is forced off plug 140 and up against the mold cavity.

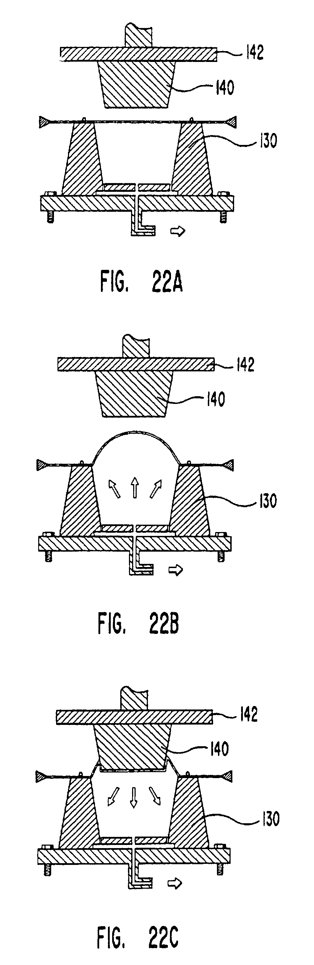

Billow/plug-assist/snap back forming combines several different forming techniques, as shown in Figures 22A-C . The sheet is sealed against female vacuum mold 130. Mold 130 is pressurized to stretch the sheet by blowing a bubble. Plug 140 mounted opposite female vacuum mold 130 is forced into the convex bubble, and controlled venting of the displaced air in the bubble causes the material to be draped over plug 140. When plug 140 is fully extended, female vacuum mold 130 is evacuated and the material is pushed off plug 140 and on to female vacuum mold 130.

Pressure forming uses compressed air in addition to atmospheric pressure. Pressures typically range from about 40 Pa to about 200 Pa. Pressure forming requires special equipment with platens and/or molds in pressure boxes capable of locking up and holding the necessary pressure. Pressure forming can be incorporated into any of the vacuum forming techniques previously described.

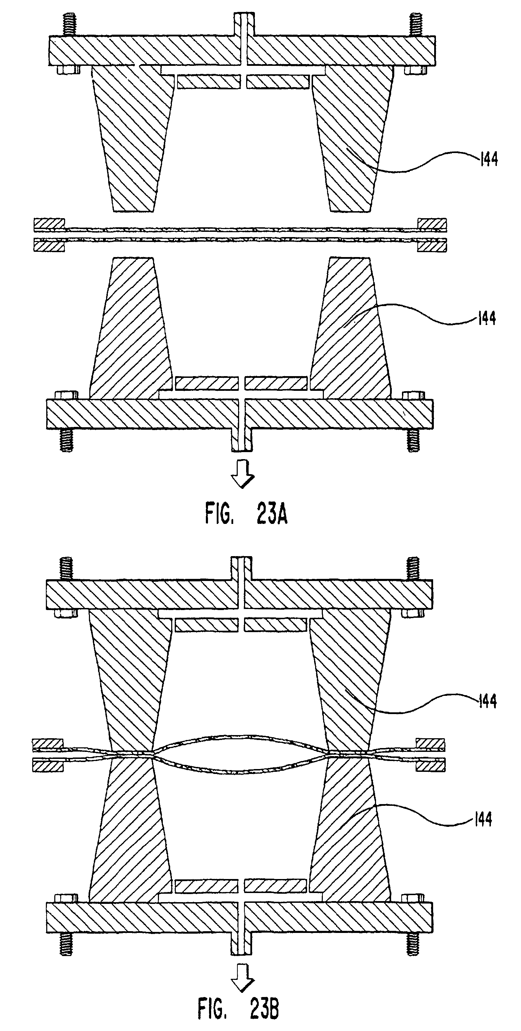

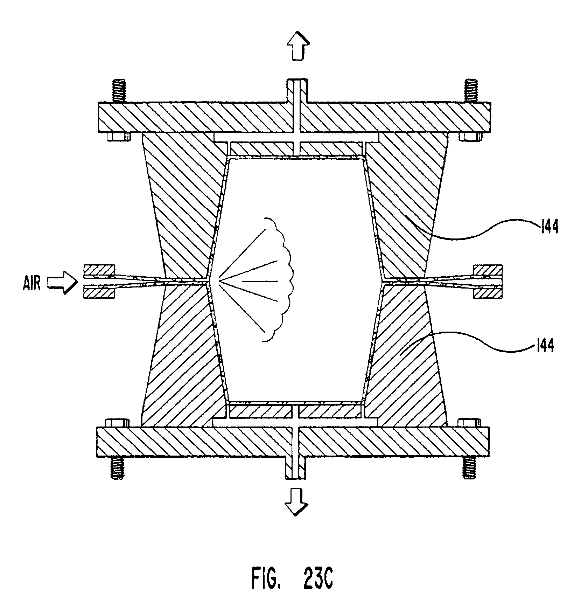

Twin sheet forming process, shown in Figures 23A-C, produces hollow parts. Two sheets are positioned between two female pressure molds 144 with matching perimeters or contact surfaces. The cavity contours of female pressure molds 144 may or may not be identical. Female pressure molds 144 come together and bind the two sheets together where the molds meet. The two sheets may be either pressure formed simultaneously or vacuum formed subsequently utilizing conventional forming techniques.

The term "vacuum forming processes" as used in the appended claims is intended to include pressure forming and twin sheet forming processes in addition to the specifically enumerated vacuum forming techniques. In an alternative embodiment, it may also be beneficial to subsequently press the vacuum shaped article between corresponding shaped solid dies so as to improve the surface finish of the article.

### F. The Dry Sheet Molding Process.

The dry sheet molding process is similar to the wet sheet molding process in that the mixture is first molded into a sheet. However, in the dry sheet molding process, the sheet is substantially dried before formation of the desired article.

### 1. Extrusion and Rolling.

The extrusion and rolling methods used in connection with the "Dry Sheet Molding" process is, in all material aspects, substantially the same as that preferably utilized with the wet sheet molding process. Of course, the use of different processing equipment down the processing line may result in the need to make some modifications to the extrusion process, but such modifications are within the skill of the art in light of the foregoing teachings.

### 2. Drying.

Although the rolling step often results in partial or even substantial drying of the moldable sheet, it will be preferable in the dry sheet molding process to further dry the sheet in order to obtain a sheet with the desired properties of dryness, tensile strength, and toughness. A preferred method of drying the sheet involves the use of a series of large diameter, heated drying rollers, sometimes known in the art as "Yankee" rollers.

In contrast to the reduction rollers, which are generally aligned in pairs of rollers, the drying rollers are individually aligned so that the sheet passes over the surface of each roller individually in sequence. In this way, the two sides of the moldable sheet are alternatively dried in steps. While the sheet passes between the reduction rollers during the rolling step in a generally linear path, the sheet follows a generally sinusoidal path when wrapping around and through the drying rollers during the drying step.

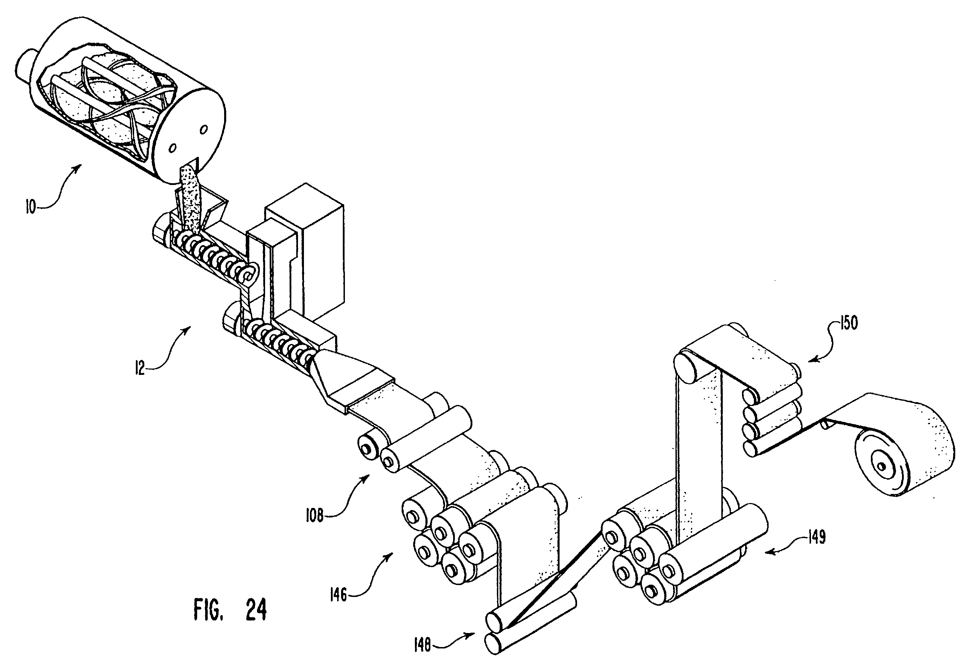

Referring to Figure 24, as the sheet is extruded from twin auger extruder 12, the formed sheet passes through a pair of reduction rollers 108 and then passes over a series of drying rollers 146. The side adjacent to the first drying roller is heated by the drying roller while the other side is exposed to the air. The heated sheet loses water in the form of vapor, which can escape out the sides of the roller or the surface of the sheet opposite the roller. The vapor also provides a nonstick barrier between the sheet and roller. As the sheet continues on its path it is rolled onto a second drying roller where the other side comes into contact with the roller surface and is dried. This process may be continued for as many steps as needed in order to dry the sheet in the desired amount.

The temperature of the drying rollers will depend on a number of factors, including the moisture content of the sheet as it passes over a particular roller. In any event, the temperature of the drying rollers should be less than about 300°C. Although the moldable material should not be heated above 250°C in order to prevent the destruction of the organic constituents (such as rheology-modifying agent or fibers), rollers heated to above this temperature may be used so long as there is adequate water within the mixture which can cool the material as the water vaporizes. Nevertheless, as the amount of water decreases during the drying process, the temperature of the rollers should be reduced to prevent overheating of the material. In some cases, it may be preferable to use infrared drying apparatus in conjunction with the drying rollers.

In some cases, the drying process set forth above will be the final step before the sheet is either used to form the desired article or, alternatively, rolled onto a spool or stacked as sheets until needed. In other cases, particularly where a sheet with a smoother, more paper-like finish is desired, this drying step will be followed by one or more additional steps set forth more fully below, including a compacting step and/or a finishing step. In the case of compaction, it is generally preferable to leave the sheets with some amount of moisture to prevent fracturing of the moldable matrix during the optional compaction step.

### 3. Optional Finishing Processes.

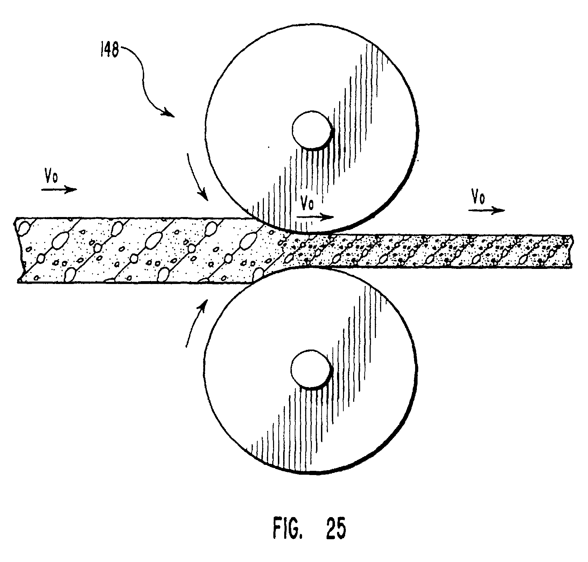

In many cases, it may be desirable to compact the moldable sheet in order to achieve the final thickness, tolerance, and surface finish. In addition, the compaction process can be used to remove unwanted voids within the moldable matrix. Referring to Figure 25, the sheet may optionally pass between a pair of compaction rollers 148 after being substantially dried during the drying process. The compaction process generally yields a sheet with higher density and strength, fewer surface defects, and a smaller thickness. The amount of compressive force of the compaction rollers will be adjusted to correspond to the particular properties of the sheet.

In order to achieve compaction without further elongating the sheet and without disrupting the structural matrix, it is important to control the drying process so that the sheet contains an amount of water within an optimum range. If the sheet contains too much water, the compaction rollers will elongate the sheet in similar fashion as the reduction rollers.

On the other hand, if the sheet contains too little water, the compaction step can fracture the structural matrix, thereby yielding a weaker sheet. Fracture of the structural matrix can diminish the final strength of the sheet even if the fractures are microscopic and not visible to the naked eye.

Because the compaction process (including one or more compaction steps) usually involves a slightly moist sheet, it is usually preferable after the compaction step to further dry the sheet in a manner similar to the drying process outlined above. This optional drying step may be carried out using optional drying rollers 149 (as shown in Figure 24), a drying tunnel, or a combination of the two. Nevertheless, in some cases the sheet may be further processed without a second drying step, such as where the sheet is immediately used to form an article, is scored, or where it is otherwise advantageous to have a slightly moist sheet.

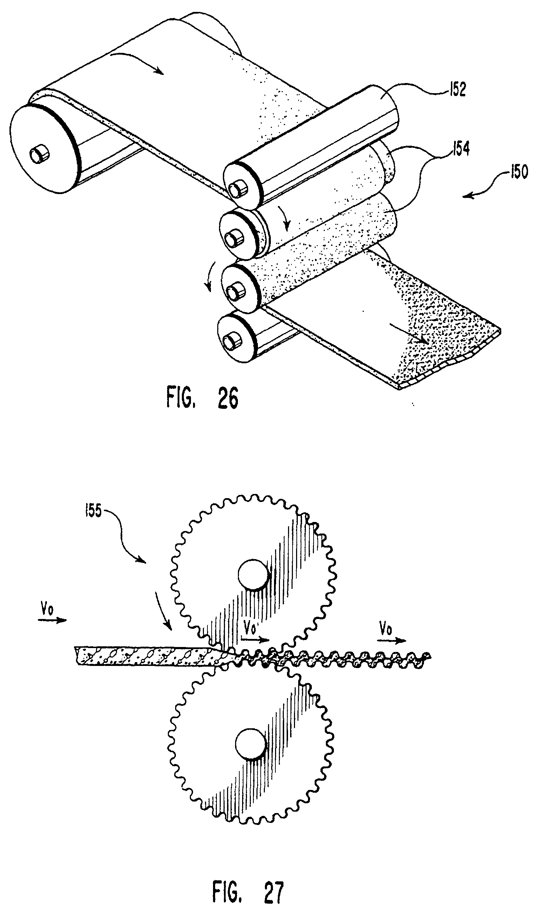

It may also be preferable to further alter the surface of the moldable sheet by passing the sheet between one or more pairs of finishing (or "calendering") rollers 150. For example, in order to create a sheet with a very smooth or glazed surface on one or both sides, the sheet may be passed between a pair of hard and soft rollers (Figure 26). The term "hard roller" refers to a roller 152 having a very polished surface and which leaves the side of the sheet in contact with the hard roller very smooth. The term "soft roller" refers to a roller 154 having a surface capable of creating enough friction between the soft roller 154 and the sheet that it pulls the sheet through the hard and soft roller pair. This is necessary because the hard roller 152 is usually too slick to pull the dry sheet through a pair of hard rollers. Besides, some slippage of the hard roller 152 is advantageous in order to align the particles on the surface of the sheet. The finishing process may be optionally facilitated by spraying water on the sheet surface, and/or by coating the surface with clay, calcium carbonate, or other appropriate coating materials known to one of ordinary skill in the art.

It may also be preferable to process the moldable sheet into a translucent or transparent sheet. One method of decreasing the opacity and forming a translucent or transparent sheet involves passing the sheet between one or more pairs of rollers with sufficient pressure to decrease the air void volume within the sheet resulting in a decreased diffraction of light. Another method involves the method described above of passing a sheet through a pair of hard and soft rollers resulting in a very polished surface. The opacity of sheets can also be decreased by including silica, fiber, and Tylose®. Additionally, combinations of these methods of decreasing the opacity of the sheets can be utilized.

In other embodiments, the finishing rollers can impart a desired texture, such as a meshed or checkered surface. If desired, the rollers can imprint the surface of the sheet with a logo or other design. Special rollers capable of imparting a water mark can be used alone or in conjunction with any of these other rollers.

Once the sheet forming process has been completed, the hardened or semi-hardened sheets can be used immediately on site to manufacture the article in question. Alternatively, they may be stored and then shipped or transported as needed to the site of manufacture as, for example, large rolls 151 (Figure 25) or spools, or as stacks of individual sheets.

### 4. Optional Processing of the Sheets.

Substantially dried sheets prepared according to the methods set forth above may be subjected to additional processing steps, depending on the properties desired for the sheets, which, in turn, depends on the ultimate use intended for the sheets. These optional processes may include lamination, corrugation, scoring, perforation, reping, parchmenting, or a combination thereof.

### (a) Laminating Processes.

A variety of properties can be imparted to the sheet by laminating it. For the purposes of this specification and the appended claims, the terms "laminated sheet" or "laminate" (when used as a noun) shall refer to a sheet having at least two layers with at least one of the layers being a sheet. The terms "laminating material" or "lamina" shall refer to any constituent layer of the laminated sheet, including both a sheet or other material. Laminates having any combination of layers are within the scope of this invention to the extent that one layer of the laminate is a sheet. The laminate can be formed by adding, bonding, or otherwise joining at least two layers together. The thickness of the laminate may vary depending on the nature of intended properties of the laminate.

The laminating material that is bonded, adhered, or otherwise joined to the layer of the laminate comprising a sheet may include another sheet, a material which imparts a desired property to the sheet when the two are laminated together, a material which is described below as a coating or an adhesive, or any combination thereof. Examples of materials which enhance the properties of the sheets include organic polymer sheets, metal foil sheets, ionomer sheets, elastomeric sheets, plastic sheets, fibrous sheets or mats, paper sheets, cellophane sheets, nylon sheets, wax sheets, and metallized film sheets.

Conventional laminators can be utilized to combine a sheet with another layer. Laminates can also be created by coextruding two or more sheets or a sheet with another material. Laminates within the scope of this invention can be formed by bonding a sheet and another layer or layers with or without adhesives. The bond between the sheet and another layer (or between other layers of the laminate) can range from a slight cling to a bond which exceeds the strength of the sheet or the materials being bonded.

Sheets can be bonded without the use of adhesives to another layer as long as the sheet is sufficiently "green" to effectuate an effective bond between the individual laminae. Layers of a laminate comprising water soluble materials may be adhered to a slightly moist or remoistened sheet.

Bonds can be formed with adhesives through many different processes, including wet-bond laminating, dry-bond laminating, thermal laminating and pressure laminating. Useful adhesives include waterborne adhesives (both natural and synthetic), hot-melt adhesives, and solvent-borne adhesives.

Wet-bond laminating of a sheet and another layer involves the use of any liquid adhesive to bond two layers together. Useful natural waterborne adhesives for wet-bond lamination include vegetable starch-based adhesives, protein-based adhesives, animal glue, casein, and natural rubber latex. Useful synthetic waterborne adhesives generally include resin emulsions such as stable suspensions of poly(vinyl acetate) particles in water. Waterborne adhesives are low in odor, taste, color, and toxicity, have a broad range of adhesion, and have excellent aging properties. Thermoplastic polymers are useful hot-melt adhesives that can be applied in a molten state and set to form upon cooling. Hot-melt adhesives generally set quicker than other adhesives. Useful solvent-borne adhesives include polyurethane adhesives, solvent-borne ethylene-vinyl acetate systems and other rubber resins which are pressure sensitive.

It is also within the scope of the present invention to create a laminate by foil stamping. Foil stamping involves the use of heat and pressure to transfer a thin metallic or pigmented coating from a carrier film to the sheet or article surface to obtain patterned decorative effects. This technique can be utilized in combination with embossing to obtain a laminate with a reflective, glossy, raised surface.

### (b) Corrugating Processes.

It may be desirable to corrugate a sheet in a manner similar to corrugated cardboard. This may be accomplished by passing a sheet, preferably in a semi-moist condition, between a pair of corrugation rollers 155 as shown in Figure 27. The moisture content of the sheet should be controlled so that the corrugation process does not damage the moldable matrix. If the sheet is too dry, the corrugation process can damage the moldable matrix, and in some cases may even result in the tearing or splitting of the sheet. Conversely, if the sheet is too moist, the corrugated sheet may lack the green strength necessary to maintain the corrugated shape. Preferably the percent by volume of water in the sheet is between about 1% and 20%, more preferably between about 3% and 15%, and most preferably between about 5% and 10%.

The corrugated sheet can be utilized as a single sheet or it can be combined with other sheets to form laminates as described above. The corrugated sheet can be laminated with a single flat sheet or a sheet formed from other materials, thus resulting in a "single-face" corrugated sheet. Sandwiching a corrugated sheet between two flat sheets results in a "double-face" sheet. Multiple wall corrugated sheets can be created by alternating flat and corrugated layers. Single-face, double-face, and multiple wall corrugated sheets are characterized by relatively low density and relative high stiffness and compressive strength. They can be used wherever articles, such as containers and packaging materials, require such properties.

The strength and flexibility of a single corrugated sheet can be altered by varying the number of corrugations or flutes per liner foot. The flutes per linear foot can be increased to create a more flexible sheet or the flutes can be decreased to obtain a strong sheet with a high degree of cushioning ability. Multiple wall corrugated sheets can also be created with two or more corrugated sheets having different amounts of flutes per linear foot. As with scoring, score cutting, and perforating (which are described more fully below), the individual flutes of the corrugated sheets create locations where the sheet might more naturally bend or fold. However, the sheet is actually much stiffer and stronger in the direction perpendicular to the row of the flutes. Therefore, an article, such as a container or other packaging material, should be constructed so that the corrugated sheet will afford maximum flexibility where needed and maximum stiffness where needed, such as where the article will be stacked.

Coatings which are described in greater detail hereinbelow can also be applied as part of the corrugating process. Coatings, particularly waxes or polyethylene, can be applied with hot roll coaters on the corrugator. Coatings can also be applied by curtain coating the corrugated blank before it is converted into an article. Other useful coating processes involving corrugated sheets include dipping completed articles into coatings, such as waxes, or cascading such coatings through and around the flutes of the corrugated article.

### (c) Scoring and Perforation Processes.

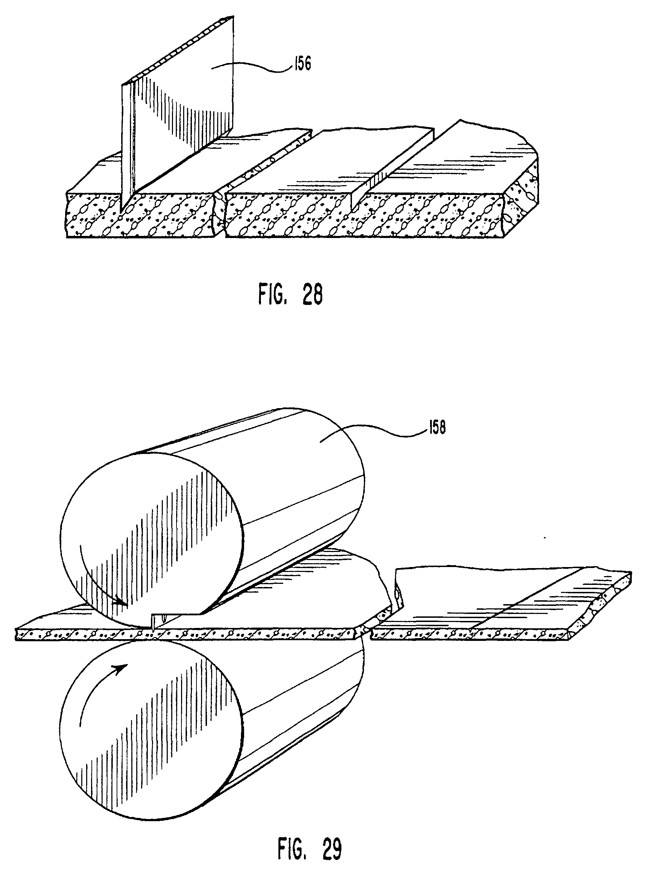

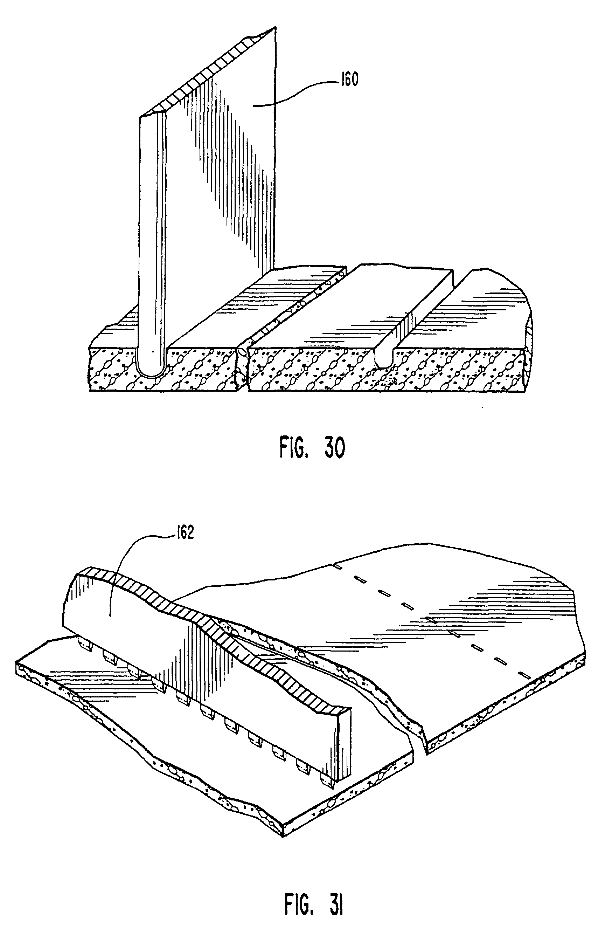

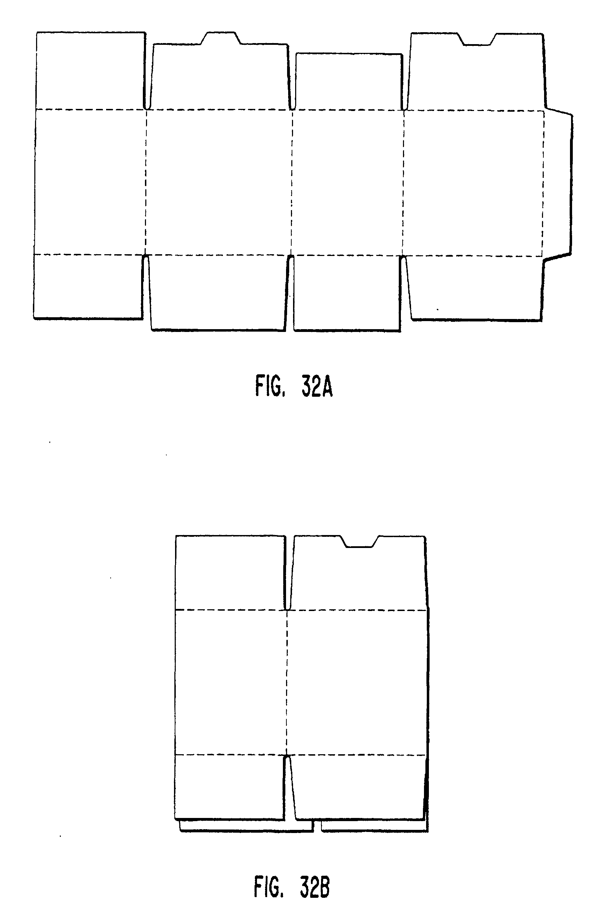

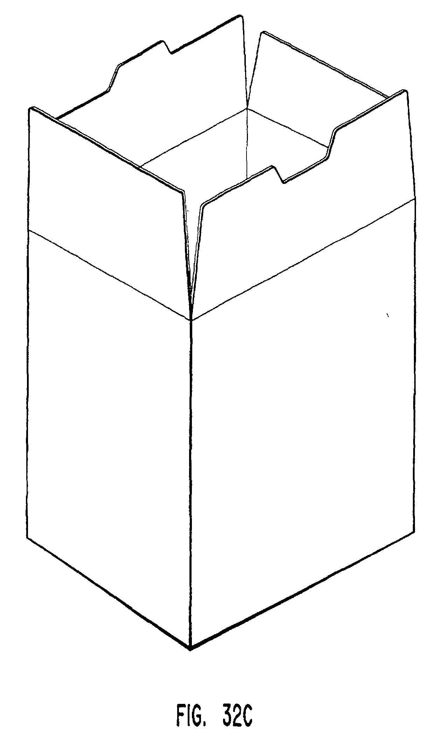

In some cases it may be desirable to alternatively score, score cut, or perforate the sheet in order to define a line upon which the sheet may fold or bend. Score cuts can be made by using a knife blade cutter 156 (Figure 28) mounted on a score press, or it can be accomplished using a continuous die cut roller 158 as shown in Figure 29. Alternatively, a score (not a score cut) may be pressed into the sheet by means of a rounded scoring die or rule 160 as shown in Figure 30. The scoring die or rule can be used alone or in conjunction with a score counter. This scoring rule configuration forces the sheet to deform into the groove of the score counter. Finally, a perforation may be made by means of a perforation cutter 162 depicted in Figure 31.

Where the sheet has a relatively low fiber content (less than 15% by volume of the total solids), it is preferable to score cut rather than score press the sheet. Conversely, where the sheet has a relatively high fiber content (greater than 15% by volume of the total solids), it is preferable to score press rather than score the sheet. Finally, perforations generally work well in sheets of any fiber content.

The purpose of the score, score cut, or perforation is to create a location on the sheet where the sheet can be bent or folded. This creates a "hinge" within the sheet with far greater bendability and resilience than possible with an unscored or unperforated sheet. In some cases multiple score cuts or perforations may be desirable. Scoring or creping can also be utilized to create a more bendable sheet. These techniques can also be utilized to form a hinge.

Cutting a score line or perforation within the sheet creates a better fold line or hinge for a number of reasons. First, it provides a place where the sheet might more naturally bend or fold. Second, cutting a score makes the sheet at the score line thinner than the rest of the sheet, which reduces the amount of lengthwise elongation of the surface while bending the sheet. The reduction of surface elongation reduces the tendency of the moldable matrix to fracture upon being folded or bent. Third, the score cut or perforation allows for a controlled crack formation within the moldable matrix in the event that fracture of the moldable matrix occurs.

It may sometimes be preferable to concentrate more fibers at the location at which the score cut or perforation is made. This can be accomplished by coextruding a second layer of moldable material containing a higher fiber content at predetermined timed intervals to correspond with the location of the score cut or perforation. In addition, fibers can be placed on top of, or injected within, the sheet during the extrusion or rolling processes in order to achieve a higher fiber concentration at the desired location. When scoring corrugated sheets it is generally preferable to score the corrugated sheet in the direction perpendicular to the direction of the flutes.

The sheet will be preferably in a substantially dry or semi-hardened state during the scoring or perforation process. This is desirable to prevent the score or perforation from closing up through the migration of moist material into the score cut. Since scoring generally (and perforation always) involves cutting through a portion of the moldable matrix, the sheet can even be totally dry without the scoring or perforation process harming the sheet. However, in cases where a score is pressed rather than cut into the sheet surface, the sheet should be moist enough to prevent fracture due to the dislocation of the moldable matrix.

The depth of the score cut will generally depend on the type of score, the thickness of the sheet, and the desired degree of bending along the score line. The scoring mechanism should be adjusted to provide for a score of the desired depth. Of course, the die cutter should not be so large as to actually cut through the sheet or render it too thin to withstand the anticipated forces (unless an easily tearable score is desired). Preferably, the score cut should be just deep enough to adequately serve its purpose. A combination of score cuts on alternative sides of the sheet may be preferred in some cases to increase the range of bending motion.

In most cases where a thinner sheet (<1 mm) is being score cut, the cut will have a depth relative to the overall thickness of the sheet that is within the range from between about 10% to about 50%, more preferably within the range from between about 20% to about 35%. In the case of thicker sheets, the score cut will usually be deeper due to the decrease in bendability of the thicker sheet.

It should be understood that the sheets of the present invention will bend away from a score cut or perforation, while bending toward a score that is pressed into the surface of the sheet. That is, the sides of the sheet defined by a score cut or perforation will close together in the side opposite the score cut or perforation. Conversely, like conventional paper or paperboard products, the sides of the hydraulically settable sheet defined by a score pressed into the sheet surface will close together on the side of the score.

### (d) Creping and Parchmenting Processes.

The sheets may alternatively be creped much like conventional paper in order to provide a highly extensible sheet that is capable of absorbing energy at sudden rates of strain. Creped sheets are increasingly important in the production of shipping sacks. Conventional creping is performed either at the wet press section of a paper machine (wet crepe) or on a Yankee dryer (dry crepe). Although the exact parameters of either a wet or dry creping process will differ between the sheets of the present invention and tree paper, one of ordinary skill in the art will recognize how to adjust the creping process in order to obtain creped sheets.

It has been found that the sheets can be treated with strong acids in order to parchment the fibrous surface portion of the sheet matrix. Treating the sheet with, for example, concentrated sulfuric acid causes the cellulosic fibers to swell tremendously and become partially dissolved. In this state, the plasticized fibers close their pores, fill in surrounding voids and achieve more intimate contact between them for more extensive hydrogen bonding. Rinsing with water causes reprecipitation and network consolidation, resulting in fibers that are stronger wet than dry, lint fee, odor free, taste free, and resistant to grease and oils. By combining parchment's natural tensile toughness with extensibility imparted by wet creping, paper with great shock-absorbing capability can be produced.

In the present invention, it can be seen that the parchmenting process would be expected to work better as the fiber content of the sheets is increased. Increased fiber content facilitates the sealing of the pores and increased hydrogen bonding of the fibers. It should be understood, however, that certain acid sensitive aggregates, such as calcium carbonate, should probably not be used where the sheet is to be parchmented.

### V. Manufacturing Articles from Substantially Dry Sheets.

Using the methods set forth above, it is possible to manufacture a wide variety of sheets having greatly varying properties. The sheets may be as thin as about 0.1 mm or less in the case where very thin, flexible, and lightweight sheets are required. The sheets may also as thick as about 1 cm in the case where relatively thick, strong, and stiff sheets are required. In addition, sheets may range in density from as low as about 0.6 g/c m³ to as high as about 2 g/cm³. Generally, higher density sheets are stronger while lower density sheets are more insulative. The exact thickness or density of a particular sheet can be designed beforehand in order to yield a sheet having the desired properties at a cost which allows the sheets to be produced in an economically feasible manner.

The sheets of the present invention may be used in any application where paper or paperboard have been used. In addition, due to the unique properties of the moldable materials, it is possible make a variety of objects that presently require the use of plastics, polystyrene, or even metal. In particular, the sheets of the present invention may be used to manufacture the articles and containers as previously defined.

Fashioning the sheets into an appropriate article of manufacture generally involves cutting appropriate blanks from the sheets and converting the blanks into the desired article of manufacture, including containers. Converting blanks into the desired article can be accomplished by folding, rolling, convoluting, spiral winding, molding, assembling individual blanks, pouch forming, and combinations thereof. The conversion process also may include seaming a portion of the article by applying adhesives, crimping, applying pressure, hermetically sealing, remoistening a portion and applying pressure, stapling, taping, sewing, or combinations thereof. Remoistening the sheet during the fashioning process may help to improve the flexibility and prevent tearing of the sheet.

The disclosed methods of fashioning the sheets of the present invention into articles of manufacture, as well as the specific structural configurations of the articles set forth hereinbelow, are given by way of example only and not by limitation. The scope of this invention incorporates all methods presently known in the art for converting sheets into articles of manufacture, including containers and other packaging materials, made from conventional sheets, such as paper, cardboard, plastic, polystyrene, or metal. It is within the scope of this invention to utilize conventional equipment, automated processes, and semi-automated processes.

Cutting the sheet into the appropriate blank can be accomplished utilizing any means known in the art, such as a knife blade cutter mounted on a press, a continuous die cut roller, a cutting die, and scissor device. Cutting is also useful to create windows in some articles. Cutting is also useful in forming corrugated boxes by removing portions of the sheet to form flaps. This type of cutting is referred to as "slotting."

Seaming the blanks is intended to include bringing at least two portions of a sheet or blank into contact and then joining, merging, combining, connecting, linking, or sealing the portions together by applying adhesives, crimping, applying pressure, hermetically sealing, remoistening the portions and applying pressure, stapling, taping, sewing, or combinations thereof. Seaming can be utilized in conjunction with any of the converting processes, such as folding, convoluting, spiral winding, molding, assembling, or pouch forming.

### A. Folding.

One method of converting a sheet or blank into the desired article involves "folding," which is intended to include bending, doubling over, creating a hinge, creasing, pleating, crimping, gathering, plicating, or creating mechanical interlocking devices from the sheet or blank.

Articles which can be fashioned from sheets or blanks by folding include cartons, boxes, corrugated boxes, hinged "clam-shell" containers (including hinged sandwich containers utilized with fast-food sandwiches, such as hamburgers, and hinged salad containers), dry cereal boxes, milk cartons, fruit juice containers, carriers for beverage containers, ice cream cartons, pleated cups, cone cups, french-fry scoops used by fast-food outlets, fast-food carryout boxes, open ended bags, and envelopes. It may be necessary to score the sheet or blank to aid in folding.

One automated process of converting blanks into articles, such as the sealed-end carton depicted in Figure 32C, begins with loading the blanks into a magazine. The blanks, such as the blank shown in Figure 32A, can be removed one at a time and carried by sets of endless belts to a prebreak station. At the prebreak station, the score lines can be prebroken by stationary curved plows by moving one or more blank panels out of the original plane to prebreak scores.

After the score lines are prebroken, the panels can be laid back down as the blank moves along on the belts. The prebreaking of the score lines assists in converting a blank into a article since the force required to bend a previously bent score is greatly reduced. The blank is then folded and the sides seamed by any seaming method to form an intermediary shell or tube as shown in Figure 32B.

### B. Convoluting.

Another method of converting an sheet or blank into a desired article is "convoluting," which involves rolling a blank into a container or other article having walls which define an inner space. Articles formed by convoluting can have a variety of cross-sections including a circular cross-section, an oval cross-section, a rectangular cross-section with rounded corners, and a rectangular cross-section.

Articles which can be fashioned from sheets or blanks by convoluting include cups, cans, containers for products such as frozen juice concentrate, potato chips, ice cream, salt, detergent, and motor oil, mailing tubes, sheet rolls for rolling materials such as wrapping paper, cloth materials, paper towels, and toilet paper, sleeves, and straws.

Convoluting a blank is generally carried out by rolling or wrapping the blank around a mandrel and then seaming the overlapping ends of the blank. The overlapping ends can be seamed together by any of the previously described methods of seaming. A wide variety of closure means formed from either moldable materials or other materials can be utilized depending on the desired article.

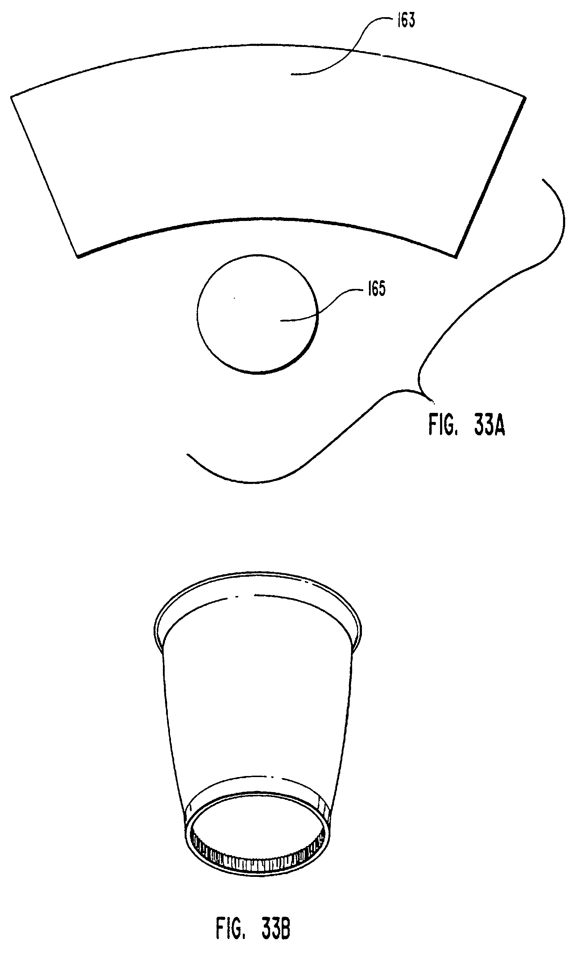

Cups can be formed by any process known in the art, including the general method outlined above for forming convoluted articles. A preferred method for manufacturing a two piece cup within the scope of this invention involves the cutting of two blanks from a sheet, a sidewall blank 163, and a bottom portion blank 165 as depicted in Figure 33A. As depicted in Figure 33B, the sidewall blank is convoluted to form the sidewall of the cup and the bottom portion blank is configured to form the bottom portion of the cup. The convoluted sidewall of the cup is a frustoconical shaped tube and the bottom portion forms a closure means.

The automated process generally consists of the following steps: cutting the sidewall blanks and the bottom portion blanks from a sheet; placing the bottom portion blank on a free end of a mandrel, the blank being releasably retained thereon; wrapping the sidewall blank around the mandrel; overlapping the straight ends of the sidewall blank; seaming or otherwise securing the overlapped ends; seaming or otherwise securing the skirt of the bottom portion blank to the base of the convoluted base of the cup. Additionally, the lip can be formed around the opening of the cup can by a lip forming apparatus.

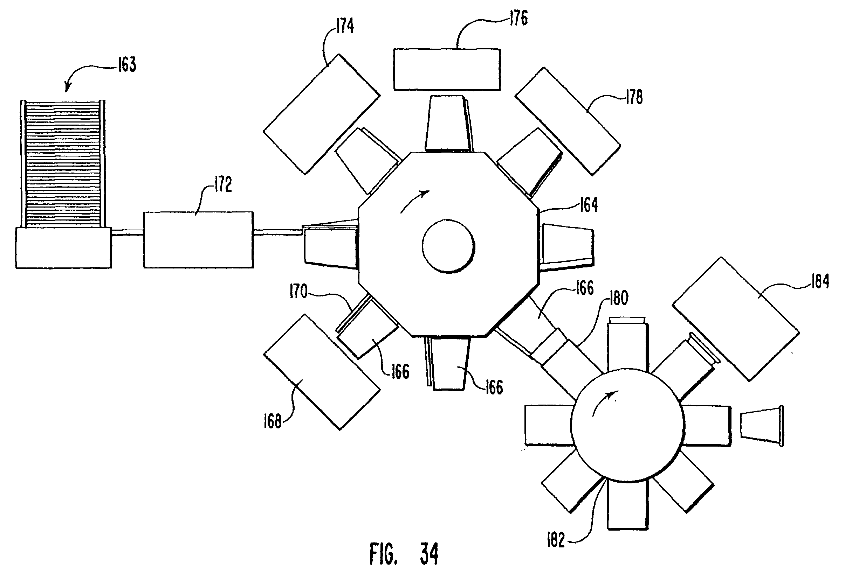

One automated cup forming apparatus shown in Figure 34 involves the operation of a rotating indexable turret 164 having a plurality of mandrels 166. Mandrels 166 extend radially outward from turret 164. One end of mandrel 166 is attached to turret 164 while the other end projects outward and usually has a flat face. The apparatus includes a bottom portion blank feeder 168 which forms the bottom portion blanks and feeds the bottom portion blanks. Bottom portion blank feeder 194 positions bottom portion blank 165 on the flat face of mandrel 166. A sidewall blank feeder 196 feeds sidewall blanks 163 to mandrel 166, after turret 164 indexes mandrel 166 by properly rotating it. A clamp member 170 holds sidewall blank 163 on the mandrel 166 for subsequent forming. Indexing of turret 164 then moves mandrel 166 having sidewall blank 163 to a preparer for seaming 172 which either moistens the ends of sidewall blank 163 to be overlapped, applies an adhesive, or applies a coating such as polyethylene.

Turret 164 is subsequently indexed and sidewall blank convoluter 174 convolutes sidewall blanks 163 around mandrel 166 to form the sidewall of the article. The convoluted sidewall has an opening and a base corresponding to the opening and base of the completed cup. Turret 164 is subsequently indexed to a preparer for bottom forming 176 which either moistens the base and/or the skirt of the bottom portion blank 165, applies an adhesive, or applies a coating. Turret 164 is then indexed to a bottom former 178, which secures the base and the skirt of the bottom portion blank together. After the bottom is formed the cup is ejected and mandrel 166 is indexed to receive bottom portion blank 165 from bottom portion blank feeder 168. The operational cycle is then repeated.

The cup can also be further subjected to additional processing steps such as the formation of a lip around the cup opening. One method of forming a lip entails positioning the cup such that the cup opening extends outward and forming the lip around the opening. In this method, the cup is ejected from mandrel 166 after the bottom of the cup has been formed into one of a plurality of article receiving members 180 which extend radially outward from another indexable turret 182. The ejection of the cup into receiving member 180 positions the cup such that the cup opening extends outwardly instead of the cup base. The lip is subsequently formed by a lip forming device 184 and ejected. Lip forming device 184 may entail complimentary figures on receiving member 180 and a male die which can compress the opening of the cup to form a bead.

### C. Spiral Winding.

Another method of converting an sheet or blank into a desired article is "spiral winding", which is similar to convoluting. Spiral winding involves wrapping an sheet or blank in helical rotations into an article having the form of a tube or cone. Continuous fibers or filament winding may also be used to provide additional strength. A wide variety of closure means, including the closure means described above for use with cups, are operable with articles formed by spiral winding.

### D. Dry Pressing.

Yet another method for converting an sheet or blank into a desired article is "dry pressing", which includes shaping the sheet or blank by applying a lateral force. Articles which can be fashioned by dry pressing sheets or blanks include plates, vending plates, pie plates, trays, baking trays, bowls, breakfast platters, microwaveable dinner trays, "TV" dinner trays, egg cartons, meat packaging platters, dishes, and lids.

The sheet or blank can be dry pressed between a male die of a desired shape and a female die having a substantially complementary shape of the male die. As a blank or a portion of the sheet is pressed between the dies, the sheet is formed into an article having the complementary shape of the dies. Although solid single piece dies (the male die and the female die each comprising one solid piece) are the preferred dies based on ease and economy, alternative dies include split dies, progressive dies, and collapsible dies. This process is similar to the wet sheet molding process except that since the sheet is now dry. As a result, the sheet is far less pliable and cannot expand or flow like a wet sheet.

### E. Assembling.

"Assembling" is yet another method of converting an moldable sheet or blank into an article. Many of the articles fashioned by folding, convoluting, spiral winding, or molding may also involve assembling various blanks or pieces to form the completed articles. Articles fashioned from sheets or blanks, either primarily or entirely, by assembling blanks include rigid setup boxes, carded packaging containers, and liners inserted into containers. Rigid setup boxes formed from sheets are generally not collapsible and may be covered by a thin decorative cover sheet. They include cigar boxes, confectionery boxes, and boxes for cosmetics.

Rigid boxes can be formed by merely cutting appropriate blanks and assembling the blanks together. The blanks may also be scored to permit the folding of the blanks. The corners or portions of the box body blanks and lid blanks can be notched by corner cutters so that when the blanks are assembled, corners can be formed by the sides and bottom of the box body or lid. The corners formed by constructing the blanks can be stayed by placing small, thin stays cut from sheets or other materials and coated with an adhesive around each corner.

Carded packaging containers are particularly useful for visually displaying a product. Carded packaging containers within the scope of this invention can be fashioned by assembling a support card cut from an sheet and a cover formed from either plastic or a translucent sheet. Carded packaging containers can be utilized to package and display many products including food products such as lunch meats, office products, cosmetics, hardware items, and toys. Carded packaging containers involve two varieties, blister packaging containers and skin packaging containers.

### F. Pouch Forming

"Pouch forming" is another method of converting an sheet or blank into a desired article, and involves a process known in the packaging industry as "form/fill/seal." Forming pouches with form/fill/seal techniques permits a continuous operation of forming pouches, filling the pouches with products, and seaming the pouches. Pouch forming is intended to include the continuous formation of series of pouches, filling the pouches with products, closing the pouches by seaming and cutting the pouches apart from each other after the pouch has been formed, filled and closed or after the pouch has been formed. Articles which can be fashioned from sheets and blanks by pouch forming include dried soup pouches, candy wrappers, cereal bags, potato chip bags, powder packaging, tablet pouches, condiment pouches, and cake mix bags.

The operation of forming pouches can be generally accomplished by horizontal, vertical, or two-sheet pouch forming. Horizontal forming, filling, and closing by seaming generally involves folding a continuous sheet in half along its length, seaming the sheet at intervals to form a series of pouches which are then filled and closed. The process begins by advancing a sheet horizontally across a plow assembly which folds the sheet in half. The folded sheet is seamed at intervals into pouches to permit the filling of products into the pouches. The pouches can be filled with products by gravity or other means.

Vertical forming, filling, and seaming generally involves forming a continuous sheet into a tube along its length, seaming the tube at intervals to form a series of pouches, filling the pouches and then closing the pouch by seaming. The sheet is formed into a tube by advancing the sheet vertically over a plow assembly. The tube is then seamed at intervals into pouches and filled in a similar fashion utilized in vertical forming, filling, and closing. The third method involves forming pouches by combining two sheets, at least one of the sheets being a inorganically filled, hydraulically settable, or laminated sheet. The moldable sheet or laminated sheet can be combined with a wide variety of other sheets, including, but not limited to, an inorganically filled sheet, a laminated sheet, a paper sheet, an aluminum foil sheet, cellophane sheet, a plastic sheet, and any laminates of these sheets. The two sheets can be combined vertically or horizontally, each pouch having four seamed sides.

### VI. Examples of the Preferred Methods of Manufacture.

The following examples are presented in order to more specifically teach the methods of forming articles according to the present invention. The examples include various mix designs, including hydraulically settable and organically filled mixtures, used in conjunction with a number of different manufacturing processes in order to create the articles of the present invention.

The first set of examples illustrates the use of a variety of direct molding techniques to manufacture articles from hydraulically settable mixtures.

### Example 1

Cups were formed from a hydraulically settable mixture having the following components:

| | |
|---|---|
| Portland White Cement | 2.0 kg |
| Water | 1.004 kg |
| Perlite | 0.702 kg |
| Tylose® 4000 | 60 g |

The portland cement, Tylose®, and perlite were mixed for about 2 minutes; thereafter, the water was added and the mixture was blended for an additional 10 minutes. The resultant hydraulically settable mixture had a water-to-cement ratio of approximately 0.5. The concentration of cement paste (cement and water) in this mixture was 79.8% by weight, with perlite comprising 18.6%, and the Tylose® being 1.6% by weight of the hydraulically settable mixture.

The resultant hydraulically settable material was molded into the shape of a cup by jiggering. This cup had a wall thickness of 4.5 mm, and would insulate to 65°C, which means that the maximum temperature on the outside of the cup would be 65°C when the cup is filled with hot water (88°C). The cup was designed to have a predetermined bulk density by adding a porous aggregate (in this case perlite).

The hydraulically settable mixture was also pressed into the shape of a cup using a male die and a female die as discussed in the die pressing process. As a result of the pressure applied by the dies, the cup had a slightly higher density and, accordingly, slightly lower insulation capability. However, the cup did posses similar structural and finishing characteristics. Production of the cup using die pressing demonstrates the utility of the mixture in different manufacturing processes.

Another porous aggregate such as calcium silicate microspheres or hollow glass spheres can be used (as seen in later examples). Because porous aggregates have a low specific gravity, they can impart a degree of insulation ability to the material within the articles.

This and later examples demonstrate that it is possible to manufacture a lightweight article from cement which can be designed to have adequate insulation for a particular purpose. Because increasing the insulative effect of the article generally accompanies a reduction in strength, it is preferable to design the material to have only that range of insulation necessary for a given purpose. In addition, later examples will show that the article design can be altered in order to obtain an adequately insulating article without increasing the actual insulating effect of the material within the article.

In this first example, the relatively large wall thickness of the cups resulted from an attempt to make the cups more insulating, not because the thickness was necessary in order for the cup to have adequate strength. However, the resulting hydraulically settable cup had a good surface finish and was easily cast by jiggering and die pressing. While the cup was relatively dense (having a bulk specific gravity of about 1.6), it did demonstrate the concept that a hydraulically settable mixture can be designed to have form stability in the green state and still be molded by conventional means.

### Example 2

Cups were formed by directly molding a hydraulically settable mixture containing the following components:

| | |
|---|---|
| Portland White Cement | 2.0 kg |
| Water | 1.645 kg |
| Perlite | 0.645 kg |
| Tylose® 4000 | 20 g |
| Tylose® FL 15002 | 15 g |
| Cemfill® glass fibers (4.5 mm) | 370 g |

The hydraulically settable mixture was prepared utilizing the procedures set forth with respect to Example 1, except that the fibers were added after mixing the cement, water, Tylose®, and perlite for about 10 minutes. The combined mix was then mixed for an additional 10 minutes. The resultant hydraulically settable mixture had a water-to-cement ratio of approximately 0.82. The concentration of cement paste (cement and water) in this mixture was 77.6% by weight, with perlite comprising 13.7%, the Tylose® 4000 and FL 15002 comprising 0.43% and 0.32%, respectively, and the glass fibers being 7.9% by weight of the hydraulically settable mixture.

The resultant mixture was then alternatively molded into the shape of a cup by jiggering or die pressing. The cups had a good surface finish, like the cups of Example 1, but they also had a higher toughness and fracture energy than the cups of Example 1 because of the addition of the glass fibers. The cups so obtained demonstrated an adequate amount of strength, and did not break when dropped onto a concrete or marble floor from heights of up to 2 meters, as would have been expected when dropping thin-walled hydraulically settable objects from this height.

### Example 3

Cups were formed alternatively by jiggering or die pressing a hydraulically settable mixture containing the following components:

| | |
|---|---|
| Portland White Cement | 4.0 kg |
| Water | 1.179 kg |
| Calcium silicate microspheres | 1.33 kg |
| Tylose® FL 15002 | 30 g |
| Cemfill® glass fibers (4.5 mm; alkali resistant) | 508 g |

The hydraulically settable mixture was prepared utilizing the procedures set forth with respect to Example 2, except that the microspheres were added in place of the perlite. The resultant hydraulically settable mixture had a water-to-cement ratio of approximately 0.29, which is dramatically lower than that of Examples 1 and 2. This demonstrates that depending upon the aggregate system, significantly different water to cement ratios can be designed into the composition. The concentration of cement paste (cement and water) in this mixture was 73.5% by weight, with the microspheres comprising 18.9%, the Tylose® comprising 0.43%, and the glass fibers being 7.2% by weight of the hydraulically settable mixture.

The resulting cups did not have as good a surface finish as Examples 1 and 2, but were lighter. The hydraulically settable mixture could be readily jiggered, die pressed, or extruded into a cup that would insulate hot water to 63°C.

While early prototypes of the present invention, the cups prepared according to Examples 1-3 taught that the concepts tested therein were sound. These examples taught that adding porous, lightweight aggregates to the hydraulically settable mixture alone does not generally result in a material having the same insulation ability as polystyrene. Neither the addition of perlite, nor the calcium silicate microspheres imparted the degree of insulation desired for commercial use with coffee and other hot drinks within the mix designs used in these examples. Therefore, methods of imparting insulation other than by merely adding inorganic materials to the cement matrix were explored.

In the next series of examples, finely dispersed, discontinuous air voids were introduced into the hydraulically settable structural matrix, which had the effect of greatly increasing the insulative ability of the cup.

### Example 4

Cups were formed from a hydraulically settable mixture containing the following components:

| | |
|---|---|
| Portland White Cement | 2.52 kg |
| Water | 1.975 kg |
| Vermiculite | 1.457 kg |
| Vinsol resin | 2.5 g |
| Tylose® 4000 | 25 g |
| Tylose® FL 15002 | 75 g |
| Abaca fiber | 159 g |

The hydraulically settable mixture was prepared by prewetting the abaca fiber (which had been pretreated by the manufacturer with sodium hydroxide so that greater than 85% of the cellulose was α-hydroxycellulose) and then combining the fibers with each of the other components except vermiculite. This mixture was initially mixed for about 10 minutes and then another 10 minutes after the vermiculite was added. The resultant hydraulically settable mixture had a water-to-cement ratio of approximately 0.78. The concentration of cement paste (cement and water) in this mixture was 72.3% by weight, with the vermiculite comprising 23.4%, the Tylose® 4000 and FL 15002 comprising 0.40% and 1.21%, respectively, the vinsol resin (an air entraining agent) comprising 0.04%, and the abaca fibers being 2.6% by weight of the hydraulically settable mixture.

The cup made in Example 4 was cast by jiggering to have a wall thickness of about 2.5 mm, which is substantially thinner than the wall thicknesses obtained for the cups in Examples 1-3. Nevertheless, the hydraulically settable cup of Example 4 was able to insulate down to 62°C (a significant improvement over the earlier cups in light of the reduced wall thickness). The surface finish was very smooth, and the cup had a high toughness and fracture energy. The cup had a capacity of about 390 cc and weighed about 95 g.

The hydraulically settable mixture was also pressed into the shape of a cup by die pressing the hydraulically settable mixture. The resulting cup had similar structural and finishing characteristics with a slightly lower insulating capability as compared to the cup formed by jiggering.

### Example 5

Cups were formed from a hydraulically settable mixture containing the following components:

| | |
|---|---|
| Portland White Cement | 2.52 kg |
| Water | 2.31 kg |
| Vermiculite | 2.407 kg |
| Vinsol resin | 2.5 g |
| Tylose® 4000 | 25 g |
| Tylose® 15002 | 75 g |
| Abaca fiber | 159 g |
| Aluminum (<100 mesh) | 0.88 g |

The hydraulically settable mixture was made utilizing the procedures set forth with respect to Example 4. The resultant hydraulically settable mixture had a water to cement ratio of approximately 0.92. This mixture was readily cast by jiggering and die pressing, even though it had a relatively high water to cement ratio. The concentration of cement paste (cement and water) in this mixture was 64.4% by weight, with the vermiculite comprising 32.1%, the Tylose® 4000 and 15002 comprising 0.33% and 1.0%, respectively, the vinsol resin (an air entraining agent) comprising 0.03%, the abaca fibers being 2.1%, and the amount of aluminum being about 0.01% by weight of the hydraulically settable mixture.

The addition of aluminum resulted in the incorporation of finely dispersed hydrogen bubbles within the hydraulically settable mixture. Hence, the resultant cups were even more lightweight and porous than the cups of Example 4, weighing only 85 g. The cups further had a smooth surface finish and there was no degradation in the toughness, fracture energy, or insulation capability.

### Example 6

Cups were formed from a hydraulically settable mixture containing the following components:

| | |
|---|---|
| Portland White Cement | 2.52 kg |
| Water | 1.65 kg |
| Vermiculite | 1.179 kg |
| Perlite | 0.262 kg |
| Vinsol resin | 5.0 g |
| Tylose® 4000 | 12.5 g |
| Tylose® FL 15002 | 37.5 g |
| Abaca fiber | 159 g |
| Aluminum (<100 mesh) | 1.5 g |

The hydraulically settable mixture was made utilizing the procedures set forth with respect to Example 4. The resultant hydraulically settable mixture had a water-to-cement ratio of approximately 0.65. The concentration of cement paste (cement and water) in this mixture was 71.6% by weight, with the perlite comprising 4.5%, the vermiculite comprising 20.2%, the Tylose® 4000 and 15002 comprising 0.21% and 0.64%, respectively, the vinsol resin (an air entraining agent) comprising 0.086%, the abaca fibers being 2.7%, and the amount of aluminum being about 0.026% by weight of the hydraulically settable mixture. The resulting hydraulically settable cups had properties and characteristics substantially similar to those of the cups made in Example 5.

The cups of Examples 4-6 yielded better results, both in terms of strength and, especially, insulative ability compared to cups in the previous examples. Cups made in Examples 4-6 were able to insulate to 62°C. These examples demonstrate that the incorporation of microscopic air voids can greatly increase the article's insulating ability without appreciably decreasing the strength. They also show that aluminum can be used to generate the air bubbles which are entrained within the hydraulically settable mixture.

These and other experiments have shown that perlite tends to reduce the strength of the article, while imparting the same level of insulation regardless of how the cement paste was either mixed or molded. On the other hand, because vermiculite is plate-shaped, it is advantageous, both in terms of strength and insulation, to align the individual particles along parallel planes within the wall of the article. This may be achieved by jiggering, die pressing, extrusion, or rolling the mixture.

Similarly, in order for the added fibers to be most effective, it has been found advantageous to align them within the hydraulically settable structural matrix as well. This may also be achieved using the above-mentioned molding processes. Such alignment imparts much greater strength and toughness to the resulting articles.

It has also been discovered that where a more viscous hydraulic paste is involved, it takes from between 5 and 10 minutes of mixing to obtain good flocculation of the cement paste and the resulting plastic behavior. In addition, it takes Tylose® about 5 minutes to "react" with or gel in the presence of water in order to impart its thickening effect to the mixture.

### Example 7

An insulating cup was manufactured by directly molding a hydraulically settable mixture that contained the following components:

| | |
|---|---|
| Portland cement | 1.0 kg |
| Hollow Glass Spheres (<1 mm) | 1.1 kg |
| Fiber (Southern Pine) | 0.08 kg |
| Tylose® FL 15002 | 0.1 kg |
| Water | 2.5 kg |

The cement, fiber, Tylose® and water were mixed together for 5 minutes using a high shear mixer. Thereafter, the hollow glass spheres were added and the resulting mixture mixed for an additional 5 minutes in a low shear mixer. The resulting mixture had the consistency of a dough-like material and could be easily molded while retaining its shape while in the green state.

The mixture was molded using a male and female die pair into the shape of a cup. The mold dies where heated to a temperature of 110-130°C to prevent sticking. After demolding the cup was self-supporting in the green state. The green cup was allowed to dry.

The cup had a compressive strength of 1.1 MPa, a tensile strength of 0.8 MPa, and a k-factor of 0.07 W/m·K.

### Example 8

The mix design and molding processes of Example 7 were repeated in every way, except that glass spheres having carefully graded diameters were used in order to increase the particle packing efficiency of the hydraulically settable material. In particular 231 g of fine, 528 g of medium, and 341 g of coarse hollow glass spheres were included, for a total content of 1.1 kg. The average diameter of the hollow glass spheres designated as "fine" was 30 microns; of the "medium" was 47 microns; and of the "coarse" was 67 microns.

The mixture had better workability due to the decrease in interstitial spaces between the particles. The resulting cups had a smoother surface and slightly superior strength characteristics. The k-factor was 0.083 W/m·K (slightly higher than in Example 7) due to the slight decrease in interstitial space and increase in overall density of the material.

### Example 9

The mix design and molding processes of Example 7 were repeated in every way, except that the glass spheres were substituted with 1.1 kg of perlite. The resulting dried molded cup had a compressive strength of 8.0 MPa, a tensile strength of 3.2 MPa, and a k-factor of 0.14 W/m·K. Thus, the use of perlite instead of hollow glass spheres yields a cup with greatly increased tensile and compressive strength, but with a higher level of thermal conductivity.

### Example 10

Any of the compositions set forth in Examples 1-9 are directly molded into cups, plates, bowls, and the like by means of jiggering, die press molding, injection molding, or blow molding. In the latter case, slightly more water is added to form a mixture having lower viscosity. In addition, the compositions are extruded into a variety of articles, including bars, pipes, pencil encasements, multi-cell structures, corrugated sheets, and the like.

### Example 11

A wide variety of articles, including cups, plates, bowls, and breakfast platters were directly molded from an inorganically filled mixture having the following components:

| | |
|---|---|
| Vegetable Starch | 5 kg |
| Calcium Carbonate | 1.25 kg |
| Water | 6.25 kg |
| Magnesium Stearate | 31.5 g |
| Agar gum | 31.5 g |

The inorganically filled mixture was made by gelating the vegetable starch with the water, and thereafter adding the remaining ingredients. The starch was either natural or modified starch derived from potatoes, wheat, or corn. It was found that corn starch gave the strongest final molded article because of its higher film strength.

The mixtures had the consistency of pancake batter and could be poured directly into heated molds (140°C ―240°C) that were coated with a nonstick surface. The heated molds drove off a significant amount of the water, which further helped to reduce sticking between the mixture and the mold surfaces. Within 1-3 minutes the articles could be demolded with complete form stability. The hardened materials had an inorganic content of about 20% by weight of the solid materials (excluding any residual water remaining within the structural matrix).

Because of the expansion of the material by the heated molded the articles were extremely lightweight and had finely dispersed air voids evenly distributed throughout the hardened material. The density of the molded products ranged between 0.1-0.6 g/cm³, with the density increasing as the amount of thermal expansion was decreased. As hotter molds are used, the voids were smaller and more evenly dispersed and the articles could be demolded more quickly. Raising the pH of the mixture yields a higher density product. As the density of the materials decreased, the insulating ability increased, although with a decrease in toughness and strength.

### Example 12

The procedures of Example 11 were repeated in every respect except that the inorganic materials content was increased to about 30%. In particular, the amount of calcium carbonate was increased to 2.14 kg, which required the addition of 7.1 kg water, 36 g magnesium stearate, and 36 g agar gum to maintain the same rheology. The resulting articles exhibited increased toughness without a proportionate increase in density, which fell within the range from about 0.15-0.6 g/cm³.

### Example 13

The procedures of Example 11 were repeated in every respect except that the inorganic materials content was increased to about 40%. In particular, the amount of calcium carbonate was increased to 3.3 kg, which required the addition of 8.3 kg water, 42 g magnesium stearate, and 42 g agar gum to maintain the same rheology. The resulting articles exhibited increased toughness without a proportionate increase in density, which still fell within the range from about 0.2-0.6 g/cm³.

### Examples 14-17

Any of the mix designs set forth in Examples 11-13 were altered by replacing all or part of the calcium carbonate with any of the following:

| Example | Inorganic filler |
|---|---|
| 14 | kaolin clay |
| 15 | montmorilonite clay |
| 16 | mica |
| 17 | fused silica |

Kaolin clay, montmorilonite clay, and mica each work better if a dispersant such as melamine-formaldehyde condensate, naphthalene-formaldehyde condensate, polyacrylic acid, and metaphosphates. These are added in amount within the range from about 1-2% of the solids within the inorganically filled mixture. Polyacrylic acid creates a mixture having thixotropic properties. The use of dispersants allows for a reduced water content, better flowability, and reduced baking time, which allows for a less energy intensive process.

The inorganically filled mixtures made by these examples have strength and weight properties similar to those of the articles of Examples 11-13.

### Example 18

A variety of articles are manufactured from an inorganically filled mixture having 10 kg mica, 3 kg water, 0.5 kg starch, and 50 g magnesium stearate. The inorganically filled mixtures are formed by first gelating the starch and water together and then adding the remaining ingredients to form a mixture having a dough-like consistency. The inorganically filled mixture may be molded into the desired article by die press molding according to the procedures set forth in the die pressing section.

Alternatively, the inorganically filled mixture could also be molded by jiggering, injection molding, or by blow molding (usually with slightly more added water to reduce the viscosity of the mixture in the case of blow molding).

### Examples 19-22

The procedures set forth in Example 18 are repeated in every respect, except that the amounts of starch and magnesium stearate are increased to the following amounts:

| Example | Starch | Mg Stearate |
|---|---|---|
| 19 | 1 kg | 55 g |
| 20 | 2 kg | 60 g |
| 21 | 3 kg | 65 g |
| 22 | 4 kg | 70 g |

Increasing the amount of starch results in a product having increased tensile strength and toughness. In addition, the molded material will have higher strength in the wet, or unhardened, state.

### Examples 23-28

Highly inorganically filled articles were prepared from moldable mixtures that included the following components:

| Example | CaCO₃ | Fiber | Tylose® | Water |
|---|---|---|---|---|
| 23 | 6 kg | 0.25 kg | 0.1 kg | 1.8 kg |
| 24 | 5 kg | 0.25 kg | 0.1 kg | 1.7 kg |
| 25 | 4 kg | 0.25 kg | 0.1 kg | 1.6 kg |
| 26 | 3 kg | 0.25 kg | 0.1 kg | 1.5 kg |
| 27 | 2 kg | 0.25 kg | 0.1 kg | 1.4 kg |
| 28 | 1 kg | 0.25 kg | 0.1 kg | 1.3 kg |

The fiber that was used in each of these examples was southern pine. The water, Tylose® FL 15002, and fibers were first mixed for 10 minutes under high shear in a Hobart kneader-mixer. Thereafter, the calcium carbonate was added to the mixture, which is mixed for an additional 4 minutes under low shear.

The particle packing density of the calcium carbonate in each of these mixtures was about 0.63, and the resulting mixtures had the following percentages by volume of the total solids of inorganic aggregate, respectively: 89.7%, 87.9%, 85.3%, 81.3%, 74.4%, and 59.2%. These correspond to the following percentages by weight of the total solids: 94.5%, 93.5%, 92.0%, 89.6%, 85.1%, and 74.1%. The sheets of Examples 23-28 contained the following amounts of fiber as a percentage by volume of the total solids, respectively: 7.2%, 8.5%, 10.3%, 13.1%, 18.0%, and 28.7%. These amounts would be considerably less if measured in weight percentage.

The moldable mixtures were first extruded using a de-airing auger extruder through a 30 cm x 0.6 cm die to form continuous sheets having corresponding dimensions of width and thickness. The extruded sheet was then passed between a pair of reduction rollers having a gap distance therebetween corresponding to the thickness of the sheet formed. Because calcium carbonate has a low specific surface area these mixtures have a low adhesiveness to the rollers. The sheets formed in these examples had thicknesses of 1.0 mm, 1.25 mm, 1.5 mm, and 1.75 mm. The rolled sheet, still in the wet condition, was then pressed between a male die and a female die into the shape of a bowl.

As less calcium carbonate was used, the tensile strength, flexibility, and molding endurance of the sheet and article increased. However, adding more calcium carbonate yielded a sheet and article with a smoother surface and easier placeability through the rollers, which reduces the amount of internal defects. Increasing the amount of CaCO₃ had the effect of decreasing the porosity of the sheet, which ranged from 37.4% to 70.3% by volume of the final dried sheets.

### Examples 29-34

Highly inorganically filled articles were prepared from moldable mixtures that include the following components:

| Example | CaCO₃ | Fiber | Tylose® | Water | Glass Spheres |
|---|---|---|---|---|---|
| 29 | 1.0 kg | 0.2 kg | 0.1 kg | 2.1 kg | 0.5 kg |
| 30 | 1.0 kg | 0.3 kg | 0.1 kg | 2.1 kg | 0.5 kg |
| 31 | 1.0 kg | 0.4 kg | 0.1 kg | 2.1 kg | 0.5 kg |
| 32 | 1.0 kg | 0.5 kg | 0.1 kg | 2.1 kg | 0.5 kg |
| 33 | 1.0 kg | 0.6 kg | 0.1 kg | 2.1 kg | 0.5 kg |
| 34 | 1.0 kg | 0.7 kg | 0.1 kg | 2.1 kg | 0.5 kg |

The fiber that was used in each of these examples was southern pine. The water, Tylose® FL 15002, and fibers were first mixed for 10 minutes in a Hobart kneader-mixer. Thereafter, the calcium carbonate and hollow glass spheres were added to the mixture, which was mixed for an additional 6 minutes under low shear. The particle packing density of the combined calcium carbonate and hollow glass spheres in each of these mixtures was 0.73, and the resulting mixtures had the following percentages by volume of the total solids of inorganic aggregate, respectively: 88.5%, 85.3%, 82.3%, 79.6%, 77.0%, and 74.5%.

The moldable mixtures were extruded using a de-airing auger extruder through a 30 cm x 0.6 cm die to form continuous sheets having corresponding dimensions of width and thickness. The extruded sheet was then passed between a pair of reduction rollers having a gap distance therebetween corresponding to the thickness of the sheet formed. Because calcium carbonate and glass spheres each have a low specific surface area these mixtures have a low adhesiveness to the rollers. The sheets formed in these examples had thicknesses of 1.0 mm, 1.25 mm, 1.5 mm, and 1.75 mm. The sheet, still in the wet condition, was then pressed between a male die and a female die into the shape of a bowl.

When calcium carbonate particles having an average diameter of 35 microns were used (maximum 100 microns), the resulting sheet and article had a matte surface. However, when much smaller particles are used (98% of them being smaller than 2 microns), the resulting sheet and article had a glossy surface.

Increasing the fiber in the mixture increased the moldability of the sheet and the tensile strength and flexibility of the final hardened article.

### Example 35

Examples 29-34 were repeated in every respect except that 1.0 kg kaolin was substituted for the calcium carbonate. In all other respects the mixtures are prepared in substantially the same manner. Kaolin is essentially a naturally occurring clay in which 98% of the particles are smaller than about 2 microns. The particle packing density of the combined kaolin and hollow glass spheres in each of these mixtures was 0.69, and the resulting mixtures had the following percentages by volume of the total solids of inorganic aggregate, respectively: 88.5%, 85.3%, 82.3%, 79.6%, 77.0%, and 74.5%. The kaolin yielded sheets and articles having a glossy surface finish.

### Examples 36-41

Highly inorganically filled articles are prepared from moldable mixtures that include the following components:

| Example | Finely Ground Granite | Cellulose Fiber | Tylose® FL 15002 | Water | Glass Spheres |
|---|---|---|---|---|---|
| 36 | 1.0 kg | 0.2 kg | 0.1 kg | 2.1 kg | 0.5 kg |
| 37 | 1.0 kg | 0.3 kg | 0.1 kg | 2.1 kg | 0.5 kg |
| 38 | 1.0 kg | 0.4 kg | 0.1 kg | 2.1 kg | 0.5 kg |
| 39 | 1.0 kg | 0.5 kg | 0.1 kg | 2.1 kg | 0.5 kg |
| 40 | 1.0 kg | 0.6 kg | 0.1 kg | 2.1 kg | 0.5 kg |
| 41 | 1.0 kg | 0.7 kg | 0.1 kg | 2.1 kg | 0.5 kg |

The fiber that is used in each of these examples is southern pine. The water, Tylose® FL 15002, and fibers are first mixed for 10 minutes in a Hobart kneader-mixer. Thereafter, the finely ground quartz and hollow glass spheres are added to the mixture, which is mixed for an additional 6 minutes under low shear. The particle packing density of the combined fused silica and hollow glass spheres in each of these mixtures is about 0.73, and the resulting mixtures have the following percentages by volume of the total solids of inorganic aggregate, respectively: 88.5%, 85.3%, 82.3%, 79.6%, 77.0%, and 74.5%.

The moldable mixtures are extruded using a de-airing auger extruder through a 30 cm x 0.6 cm die to form continuous sheets having corresponding dimensions of width and thickness. The extruded sheet is then passed between a pair of reduction rollers having a gap distance therebetween corresponding to the thickness of the sheet formed. The low specific surface area of the glass spheres causes these mixtures to have lower adhesiveness to the rollers. The sheets formed in these examples have thicknesses of 0.85 mm, 1.0 mm, 1.2 mm, and 1.4 mm. The wet sheet is then pressed between a male die and a female die into the shape of a bowl.

Increasing the fiber in the mixture increases the moldability of the sheet and increases the tensile strength and flexibility of the final hardened article.

### Example 42

The compositions of Examples 36-41 are repeated except that 1.0 kg finely ground quartz is substituted for the finely ground granite. In all other respects the mixtures are prepared in substantially the same manner. The particle packing density of the combined finely ground granite and hollow glass spheres in each of these mixtures is about 0.74, and the resulting mixtures have the following percentages by volume of the total solids of inorganic aggregate, respectively: 88.5%, 85.3%, 82.3%, 79.6%, 77.0%, and 74.5%.

Decreasing the amount of aggregate increases the effective amounts of organic binder and fibers. Including more aggregate yields articles which have greater stiffness, are more brittle, and have greater compressive strength. Increasing the amount of fiber and organic binder yields articles which have greater flexibility, toughness, and tensile strength.

### Example 43

The compositions of Examples 36-41 are repeated except that 1.0 kg finely ground basalt is substituted for the finely ground granite. In all other respects the mixtures are prepared in substantially the same manner. The particle packing density of the combined finely ground granite and hollow glass spheres in each of these mixtures is about 0.74, and the resulting mixtures have the following percentages by volume of the total solids of inorganic aggregate, respectively: 88.5%, 85.3%, 82.3%, 79.6%, 77.0%, and 74.5%.

Decreasing the amount of aggregate increases the effective amounts of organic binder and fibers. Including more aggregate yields articles which have greater stiffness, are more brittle, and have greater compressive strength. Increasing the amount of fiber and organic binder yields articles which have greater flexibility, toughness, and tensile strength.

### Examples 44-48

Highly inorganically filled articles were prepared from moldable mixtures that include the following components:

| Example | CaCO₃ | Fiber | Tylose® | Water | Glass Spheres |
|---|---|---|---|---|---|
| 44 | 1.0 kg | 0.2 kg | 0.1 kg | 2.1 kg | 0.0 kg |
| 45 | 1.0 kg | 0.2 kg | 0.1 kg | 2.1 kg | 0.5 kg |
| 46 | 1.0 kg | 0.2 kg | 0.1 kg | 2.1 kg | 1.0 kg |
| 47 | 1.0 kg | 0.2 kg | 0.1 kg | 2.1 kg | 1.5 kg |
| 48 | 1.0 kg | 0.2 kg | 0.1 kg | 2.1 kg | 2.0 kg |

The fiber that was used in each of these examples is southern pine. The water, Tylose® FL 15002, and fibers were first mixed for 10 minutes in a Hobart kneader-mixer. Thereafter, the calcium carbonate and hollow glass spheres were added to the mixture, which was mixed for an additional 6 minutes under low shear. The particle packing density of the combined calcium carbonate and hollow glass spheres in each of these mixtures was about 0.73, and the resulting mixtures had the following percentages by volume of the total solids of inorganic aggregate, respectively: 62.8%, 88.5%, 93.2%, 95.2%, and 96.6%. The densities (expressed as g/cm³) of the resulting articles were 2.0, 0.87, 0.66, 0.57, and 0.52, respectively.

The moldable mixtures were extruded using a de-airing auger extruder through a 30 cm x 0.6 cm die to form continuous sheets having corresponding dimensions of width and thickness. The extruded sheets were then passed between a pair of reduction rollers having a gap distance therebetween corresponding to the thickness of the sheets formed. The sheet was then pressed between a male die and a female die to form a bowl. Because calcium carbonate and glass spheres each have a low specific surface area these mixtures had a low adhesiveness to the rollers and dies. The sheets formed in these examples had thicknesses of 0.5 mm, 0.8 mm, 1.0 mm, and 1.2 mm.

Alternatively, the hydraulically settable mixture were extruded into a variety of articles, including bars, cylindrical rods, pipes, hollow bars, multi-cell structures, and the like. The extruded articles were form stable immediately or very shortly after being extruded.

### Examples 49-53

Flexible, cushioning articles are formed from inorganically filled mixtures containing 2.0 kg water, 0.1 kg Tylose® FL 15002, and 2% abaca fibers by volume of the mixture, along with the following quantities of plastic spheres:

| Example | Plastic Spheres |
|---|---|
| 49 | 1.12 kg |
| 50 | 0.9213 kg |
| 51 | 0.7225 kg |
| 52 | 0.5238 kg |
| 53 | 0.3251 kg |

The "plastic spheres" are made from polypropylene and have average particle sizes less than 100 microns and an average density of 0.02 g/cm³. The inorganically filled mixtures are made by first mixing together the water, Tylose®, and fibers under high shear conditions for 5 minutes and then mixing the plastic spheres into the mixture under low shear conditions. The resulting inorganically filled mixture is extruded through a die and then passed between a pair of rollers to form sheets that are 5 mm thick. The sheets are then pressed, while in a wet condition, between a male die and a female die to form a bowl shaped packaging container. The inorganically filled articles are very flexible and relatively strong in comparison to similar materials made from polystyrene.

Alternatively, the hydraulically settable mixture were extruded into a variety of articles, including bars, cylindrical rods, pipes, hollow bars, multi-cell structures, and the like. The extruded articles were form stable immediately or very shortly after being extruded. These packaging materials can be physically compressed without crumbling, even when subjected to forces that are greater than forces normally experienced by polystyrene materials.

### Examples 54-57

Flexible inorganically filled articles are made according to Examples 49-53, except that the amount of abaca fibers in the inorganically filled mixture are increased to the following amounts, as measured by volume percent:

| Example | Abaca Fiber |
|---|---|
| 54 | 4% |
| 55 | 6% |
| 56 | 8% |
| 57 | 10% |

The resulting inorganically filled articles made therefrom have substantially the same densities and flexibilities as those in Examples 49-53, but with increasing tensile strengths as the amount of abaca fiber is increased.

### Examples 58-61

Hydraulically settable plates were formed by passing, through a pair of rollers, various hydraulically settable mixtures containing hollow glass spheres (diameter <100 microns) as the aggregate. The components for each example was as follows:

| Example | Cement | Water | Tylose® FL 15002 | Glass Spheres |
|---|---|---|---|---|
| 58 | 4 kg | 2.18 kg | 200 g | 445 g |
| 59 | 3 kg | 1.85 kg | 150 g | 572 g |
| 60 | 2 kg | 1.57 kg | 100 g | 857 g |
| 61 | 1 kg | 1.55 kg | 100 g | 905 g |

The hydraulically settable mixtures were prepared by first combining the hydraulic cement, Tylose®, and water together using a high shear mixer for 5 minutes. Thereafter, the glass spheres were added and mixed for 5 minutes using a low shear mixer. The resultant hydraulically settable mixtures in Examples 58-61 had water to cement ratios of approximately 0.55, 0.62, 0.79, and 1.58, respectively. Even with the high water to cement ratio of Example 61, the hydraulically settable mixture was form stable in the green state and readily moldable. The percentage by weight of the glass spheres in each of Examples 58-61 was 6.5%, 10.3%, 18.9%, and 25.3%, respectively. These materials were extremely lightweight, having densities in the range from about 0.25 to 0.5.

The mixture was formed into a wet sheet using the methods set forth above, and then pressed between male and female dies to form concave plates, bowls, and platters. These articles were found to be very lightweight and highly insulating. In addition, the containers were found to have a very low specific heat as evidenced by the ability to remove them by hand after placing them in a hot oven.

### Examples 62-65

The hydraulically settable mixtures of Examples 58-61 were altered by adding varying amounts of abaca fiber, which were blended in during the high shear mixing step.

| Example | Corresponding Example | Amount of Abaca fiber |
|---|---|---|
| 62 | 58 | 149 g |
| 63 | 59 | 152 g |
| 64 | 60 | 180 g |
| 65 | 61 | 181 g |

The resultant percentage by weight of the abaca fibers in Examples 62-65 was 2.1%, 2.7%, 3.8%, and 4.8%, respectively. These hydraulically settable materials were as lightweight and insulative as those made in Examples 58-61, but were much tougher and had a higher fracture energy. In addition, adding more fibers made the products more bendable, as in articles having hinged flaps or other closure mechanisms. Hence, the use of these abaca fibers, as well as other types of fibers, is particularly desirable in situations where such characteristics are desirable.

### Examples 66-68

Plates and cups composed of hydraulically settable mixtures of these examples were prepared according to the procedures, and using the components, of Example 58 (*i*.*e*., 4 kg of portland white cement is used) with the exceptions that aluminum powder (<100 mesh) and NaOH were added to the hydraulically settable mixtures in the following amounts and the resultant molded plates were heated to about 80°C for 30-60 minutes:

| Example | Aluminum | NaOH |
|---|---|---|
| 66 | 4 g | 21.9 g |
| 67 | 6 g | 34.7 g |
| 68 | 8 g | 34.7 g |

The NaOH was added to the hydraulically settable mixture to activate the aluminum by establishing a pH in the preferable range of about 13.1-13.8. The porosity of the hydraulically settable mixture was increased, the bulk density was decreased, insulation capability was increased, and the plates and cups were more lightweight. The rate and extent of the reaction of aluminum metal can be altered by adjusting the amount of aluminum and heat that are added. As more of each is added, the material becomes lighter, fluffier and softer, making good cushioning material.

It is important to note that shrinkage cracks were not observed in the plates of Examples 66-68, even though the hydraulically settable mixtures were heated and much of the water was driven off rapidly.

### Examples 69-71

Hydraulically settable plates were formed by passing a hydraulically settable mixture between a pair of rollers to form a sheet and then pressing the sheet between a pair of dies to form the plates, the hydraulically settable mixtures containing the components for each example as follows:

| Example | Aluminum | NaOH | Abaca Fibers |
|---|---|---|---|
| 69 | 10.0 g | 22.3 g | 60 g |
| 70 | 15.0 g | 22.3 g | 60 g |
| 71 | 22.5 g | 22.3 g | 60 g |

In each of these examples, there was 4 kg of portland white cement, 1.4 kg of water, and 40 g of Tylose® FL 15002. The hydraulically settable mixtures were prepared by mixing together the cement, water, and fibers together for 10 minutes in a high energy mixer, after which the Tylose® was added and the mixture mixed under low shear for an additional 5 minutes. Thereafter, the aluminum and NaOH were mixed in under low shear. Like the hydraulically settable mixtures of Examples 66-68, these materials are extremely lightweight and are very insulative because of the amount of air that was incorporated into the hydraulically settable mixtures. However, the hydraulically settable mixtures of these examples have increased toughness and fracture energy because of the addition of the fibers.

### Examples 72-75

Hydraulically settable plates were formed by passing a hydraulically settable mixture between a pair of rollers to form a sheet and then pressing the sheet between a pair of die to form the plates, the hydraulically settable mixtures containing the components for each example as follows:

| | Glass Spheres | | | | |
|---|---|---|---|---|---|
| Example | Fine | Medium | Coarse | Aluminum | NaOH |
| 72 | 133 g | 317 g | 207 g | 4.0 g | 19.7 g |
| 73 | 133 g | 317 g | 207 g | 6.0 g | 31.2 g |
| 74 | 133 g | 317 g | 207 g | 8.0 g | 31.2 g |
| 75 | 133 g | 317 g | 207 g | 0.0 g | 0 g |

In each of these examples, there was 4 kg of portland white cement and 1.96 kg of water; hence, the water to cement ratio was 0.49. The amount of Tylose® FL 15002 was 200 g and the amount of abaca fibers was 60 g. The hydraulicaliy settable mixtures were prepared substantially according to the procedures set forth in Examples 62-65, with the exception that hollow glass spheres having three different diameters were used. All of the glass balls were less than one millimeter. (Example 75, however, does not incorporate aluminum and NaOH.)

The percentage by weight of the total amount of glass balls in each of the hydraulically settable mixtures of Examples 72-75 was 2.1%.

The hydraulically settable mixtures were also pressed into the shape of a cup using male and female molds. The cups had similar properties as the plates and demonstrate the viability of molding the hydraulically settable mixture into the shape of a container.

These materials were extremely lightweight (density < 0.7 g/cm³) and were very insulative because of the amount of air and the effective packing of the glass balls incorporated into the mixtures. The hydraulically settable mixtures of these examples demonstrated the value of packing the aggregates in order to maximize their effect in the resultant composition. While the hydraulically settable mixture of Example 75 is a good composition for many circumstances, its insulative capabilities are not as great as the hydraulically settable mixtures of Examples 72-74.

### Examples 76-79

Hydraulically settable plates were formed by passing a hydraulically settable mixture between a pair of rollers to form a sheet and then pressing the sheet between a pair of die to form the plates, the hydraulically settable mixtures containing the components for each example as follows:

| | Glass Spheres | | | | |
|---|---|---|---|---|---|
| Example | Fine | Medium | Coarse | Aluminum | NaOH |
| 76 | 171 g | 394 g | 267 g | 3.0 g | 16.7 g |
| 77 | 171 g | 394 g | 267 g | 4.5 g | 26.6 g |
| 78 | 171 g | 394 g | 267 g | 6.0 g | 26.6 g |
| 79 | 171 g | 394 g | 267 g | 0.0 g | 0 g |

In each of these examples, there was 3 kg of portland white cement and 1.67 kg of water; hence, the water to cement ratio was 0.56. Tylose® FL 15002 and abaca fibers were added to each mixture in amounts of 150 g and 60 g, respectively. The percentage by weight of the total amount of glass spheres in each of the hydraulically settable mixtures of Examples 76-79 was 3.4%. Otherwise, the hydraulically settable mixtures in these examples were prepared substantially according to the procedures of

### Examples 72-75.

The materials that were made in these examples are extremely lightweight and very insulative because of the amount of air and the effective packing of the glass spheres incorporated into the mixtures. The hydraulically settable mixtures of these examples show the value of packing the aggregates in order to maximize their effect in the resultant composition. While the hydraulically settable mixture of Example 79 is a good composition for many circumstances, it does not demonstrate the same insulative capabilities as the hydraulically settable mixtures of Examples 76-78.

The plates of Examples 76-79 are lighter and more insulating than the corresponding plates of Examples 72-75. However, these plates have less strength than those with greater amounts of cement.

### Examples 80-83

Hydraulically settable plates were formed by passing a hydraulically settable mixture between a pair of rollers to form a sheet and then pressing the sheet between a pair of die to form the plates, the hydraulically settable mixtures containing the components for each example as follows:

| | Glass Spheres | | | | |
|---|---|---|---|---|---|
| Example | Fine | Medium | Coarse | Aluminum | NaOH |
| 80 | 257 g | 591 g | 400 g | 2.0 g | 14.2 g |
| 81 | 257 g | 591 g | 400 g | 3.0 g | 22.5 g |
| 82 | 257 g | 591 g | 400 g | 4.0 g | 22.5 g |
| 83 | 257 g | 591 g | 400 g | 0.0 g | 0 g |

In each of these examples, there was 2 kg of portland white cement and 1.41 kg of water; hence, the water to cement ratio was 0.71. Tylose® FL 15002 and abaca fibers were added to each mixture in amounts of 100 g and 60 g, respectively. The percentage by weight of the total amount of glass spheres in each of the hydraulically settable mixtures of Examples 80-83 was 6.8%. Otherwise, the hydraulically settable mixtures were prepared substantially according to the procedures of Examples 72-75.

The materials that were made in these examples are extremely lightweight and very insulative because of the amount of air and the effective packing of the glass spheres incorporated into the mixtures. The hydraulically settable mixtures of these examples show the value of packing the aggregates in order to maximize their effect in the resultant composition. While the hydraulically settable mixture of Example 83 is a good composition for many circumstances, it does not demonstrate the same insulative capabilities as the hydraulically settable mixtures of Examples 80-82.

The plates of Examples 80-83 are even lighter and more insulating than the corresponding plates of Examples 76-79. However, these plates have less strength that those with greater amounts of cement.

### Examples 84-87

Hydraulically settable plates were formed by passing a hydraulically settable mixture between a pair of rollers to form a sheet and then pressing the sheet between a pair of die to form the plates, the hydraulically settable mixtures containing the components for each example as follows:

| | Glass Spheres | | | | |
|---|---|---|---|---|---|
| Example | Fine | Medium | Coarse | Aluminum | NaOH |
| 84 | 271 g | 624 g | 422 g | 1.0 g | 14.3 g |
| 85 | 271 g | 624 g | 422 g | 1.5 g | 22.6 g |
| 86 | 271 g | 624 g | 422 g | 2.0 g | 22.6 g |
| 87 | 271 g | 624 g | 422 g | 0.0 g | 0 g |

In each of these examples, there was 1 kg of portland white cement and 1.42 kg of water; hence, the water to cement ratio was 1.42. Tylose® FL 15002 and abaca fibers were added to each mixture in amounts of 100 g and 60 g, respectively. The hydraulically settable mixtures were prepared substantially according to the procedures of Examples 72-75. Even though the water to cement ratio of these hydraulically settable mixtures was very high, they were readily extruded and cast by jiggering.

The percentage by weight of the total amount of glass spheres in each of the hydraulically settable mixtures of Examples 84-87 was 9.7%.

These materials are extremely lightweight and are very insulative because of the amount of air and the effective packing of the glass spheres incorporated into the mixtures. The hydraulically settable mixtures of these examples show the value of packing the aggregates in order to maximize their effect in the resultant composition. While the hydraulically settable mixture of Example 87 is a good composition for many circumstances, it does not demonstrate the same insulative capabilities as the hydraulically settable mixtures of Examples 84-86.

The plates of Examples 84-87 are still more insulating and lighter than the corresponding plates of Examples 80-83. However, these plates have less strength than those with greater amounts of cement.

### Examples 88-89

Hydraulically settable mixtures containing the following components were used to mold sheets:

| Example | Cement | Water | Tylose® FL 15002 | Abaca Fibers | Surfactant |
|---|---|---|---|---|---|
| 88 | 10 kg | 23.0 kg | 300 g | 200 g | 300 g |
| 89 | 10 kg | 20.0 kg | 300 g | 200 g | 300 g |

In these examples, microfine cement was utilized to make the sheets. The hydraulically settable mixtures were made by mixing the components for about 10 minutes in a high energy mixer of the type discussed above, which is available from E. Khashoggi Industries. This high energy and high speed mixer introduced significant amounts of air into the hydraulically settable mixtures; this air was entrained within the hydraulically settable mixture by use of the surfactant and stabilized by the Tylose®.

The resulting hydraulically settable mixtures were passed between a pair of rollers and formed into thin sheets (1 mm). The sheets were then scored, folded into the shape of a cereal box, and glued together using adhesive techniques known in the art. These products were alternatively hardened by passing them through a heat tunnel, which helped to remove excess water and to increase their green strength.

### Examples 90-91

Hydraulically settable mixtures containing the following components were used to make hydraulically settable sheets:

| Example | Cement | Water | Tylose® FL 15002 | Graphite Fibers | Surfactant |
|---|---|---|---|---|---|
| 90 | 4.23 kg | 8.1 kg | 120 g | 260 g | 135 g |
| 91 | 10.0 kg | 20.0 kg | 300 g | 300 g | 300 g |

The mixing procedures and type of hydraulic cement that were used were the same as in Examples 88 and 89. However, due to the graphite fibers, the mixture was not as easily foamed and was not as lightweight and insulative as materials containing no graphite fibers. The resulting hydraulically settable mixtures were passed between a pair of rollers and formed into thin sheets (1 mm), which were folded into the shape of a cereal box and glued together using adhesive techniques known in the art. These products were alternatively hardened by passing them through a heat tunnel, which helped to remove excess water and to increase their green strength.

The resulting hydraulically settable materials were also highly insulative and had a low bulk specific gravity in the range of about 0.25-0.4.

### Example 92

A hydraulically settable plate was formed from a hydraulically settable mixture using the procedure set forth in Example 90, with the exception that about 1.2 kg of glass spheres was added to the "foamed" mixture of cement, water, and Tylose®. The resultant plate had an insulative ability not significantly different from standard polystyrene foam plates. The plate of this example was placed in an oven for three hours at 150°C and could still be removed with bare fingers.

The follow examples relate to hydraulically settable compositions used to manufacture dry sheets, which are then fashioned into the desired article.

### Example 93

Thin hydraulically settable sheets were formed by molding a hydraulically settable mixture which included the following:

| | |
|---|---|
| Portland White Cement | 1.0 kg |
| Water | 2.5 kg |
| Tylose® FL 15002 | 200 g |
| Hollow Glass Spheres (<100 microns) | 1.0 kg |
| Abaca Fiber | 5% by volume |

The hydraulically settable mixture was made by prewetting the abaca fiber (which was pretreated by the manufacturer so that greater than 85% of the cellulose is α-hydroxycellulose) and then adding the excess water and the fibers to a mixture of Tylose® and portland cement. This mixture was mixed at relatively high speed for about 10 minutes, and then at a relatively slow speed for 10 minutes after the hollow glass spheres were added. The resulting hydraulically settable mixture had a water to cement ratio of approximately 2.5.

This mixture was passed between a pair of rollers and formed into thin sheets of about 1 mm in thickness. Wet sheets were scored and then folded in an attempt to create a box. However, there was a fair amount of splitting and a box with sufficient strength and integrity could not be formed.

Thereafter, sheets were first allowed to harden and then were scored, folded into the shape of a box, and glued together by adhesive means well known in the paper art. The amount of splitting at the fold was negligible, which demonstrated that it is preferable to score and then fold the thin sheets after they have been allowed to harden or solidify somewhat. The thin sheets were formed into a box that had the shape, look and weight of a dry cereal box used presently as manufactured from cardboard stock.

### Example 94

The dried sheets formed in Example 93 were cut into the appropriate shape, rolled to form a cup, and glued using adhesive means known in the art. Examples 93 and 94 demonstrate that it is possible to make boxes, cups, or other containers of similar shape which are presently made from cardboard, paper, or plastic.

The following examples demonstrate that flexible hydraulically settable materials having high toughness and strength can be manufactured. They are useful in containment applications where cushioning and flexibility are important criteria.

### Examples 95-99

Flexible sheets were formed from hydraulically settable mixtures containing the following:

| Example | Plastic Spheres | Cement | Water | Tylose® |
|---|---|---|---|---|
| 95 | 0.12 kg | 1.0 kg | 2.0 kg | 0.1 kg |
| 96 | 0.1213 kg | 0.8 kg | 2.0 kg | 0.1 kg |
| 97 | 0.1225 kg | 0.6 kg | 2.0 kg | 0.1 kg |
| 98 | 0.1238 kg | 0.4 kg | 2.0 kg | 0.1 kg |
| 99 | 0.1251 kg | 0.2 kg | 2.0 kg | 0.1 kg |

The "plastic spheres" are made from polypropylene and have average particle sizes less than 100 microns and an average density of 0.02 g/cm³. The hydraulically settable mixtures were mixed and then formed into sheets according to the procedure set forth in Example 93. The hydraulically settable sheets were relatively strong and very flexible compared to previous mix designs. The compressive strength of the plate made according to Example 95 was 2 MPa and the tensile strength was 1 MPa. The surprising feature is that the compressive and tensile strengths are of the same magnitude, which is very unusual for most cement products. Usually the compressive strength is far greater than tensile strength. As less cement is added, the compressive and tensile strengths decrease in increments, with the plate of Example 99 having a tensile strength of 0.5 MPa.

These packaging materials could be physically compressed without crumbling like their nonflexible, hydraulically settable counterparts in earlier examples, even when subject to forces that were greater than forces normally experienced by styrofoam containment materials. The flexible hydraulically settable materials were alternatively extruded into the shape of rectangular shaped bars, which more dramatically demonstrated the degree of flexibility made possible by this mixture.

The densities of the hydraulically settable packaging materials made in these examples ranged between 0.1 and 0.6 g/cm³, with the density decreasing as less cement is used.

### Examples 100-104

Flexible hydraulically settable container materials were made according to Examples 95-99, except that prewet-ted abaca fibers were added to the hydraulically settable mixture in the following amounts, as measured by unit volume:

| Example | Abaca Fiber |
|---|---|
| 100 | 2% |
| 101 | 4% |
| 102 | 6% |
| 103 | 8% |
| 104 | 10% |

The fibers were well-dispersed throughout the hydraulically settable mixture using a high shear mixer. The resulting hydraulically settable plates and rectangular bars made therefrom had substantially the same densities and flexibilities as those in Examples 95-99, but with increasing tensile strengths as the amount of abaca fiber was increased. The tensile strengths of the materials formed herein ranged up to 5 MPa.

### Example 105

Hydraulically settable containers are formed using any of the compositions and procedures set forth in Examples 95-104, except that the plastic balls are concentrated near the surface of the hydraulically settable mixture, yielding a molded material in which the plastic balls are concentrated at or near the surfaces of the final hardened product. The container formed thereby has a higher concentration of plastic balls near the surface of the cement matrix where flexibility is more important, and virtually no plastic balls in the center of the packaging material where flexibility is less important. The advantage of this is greater flexibility at the surfaces with the same amounts or less of plastic balls in the overall compositions. At the same time, the rigidity of the center of the container walls makes them as durable and tough as the more rigid containers above.

The next set of examples utilizes hydraulically settable mixtures which have a relatively high specific gravity, but which are formed into solid objects, such as multi-cell structures, that have a high amount of intrastructural space. This reduces the bulk specific gravity of the final product so that it is more lightweight, yet very strong and durable.

### Example 106

A multi-cell packaging structure is extruded from a hydraulically settable mixture including the following:

| | |
|---|---|
| Portland White Cement | 4.0 kg |
| Fine Sand | 6.0 kg |
| Water | 1.5 kg |
| Tylose® FL 15002 | 200 g |

The hydraulically settable mixture is formed by mixing the ingredients together for 10 minutes using a high speed mixer to obtain a very homogeneous mixture. The hydraulically settable mixture is then extruded to form a multi-cell structure which has very high compressive strength. Because of the multi-cell structure, the cured material is very lightweight with a block density of only 1.02 g/cm³. Moreover, the cured material had a compressive strength of about 75 MPa. Depending upon the amount of space within the multi-cell structure, the block density can easily range anywhere from between 0.5 to 1.6 g/cm³.

These materials can be used to form very strong, yet lightweight walls of a vareity of articles, including packaging and cushioning materials and containers.

### Examples 107-109

Hydraulically settable mixtures are formed according to Example 106, except that abaca fiber is included within the hydraulically settable mixture in the following amount, as measured by volume percent of the hydraulically settable mixture:

| Example | Abaca Fiber |
|---|---|
| 107 | 1% |
| 108 | 2% |
| 109 | 3% |

The resulting multi-cell structures have high strength, both in the green state and after they are cured, due to the reinforcing effect of the multi-cell structure. The multi-cell structures formed in these examples are more ductile than in Example 106, while the compressive strengths would be expected to be even greater. These materials can be used to form very strong, yet relatively lightweight walls of larger food and beverage packaging containers.

### Examples 110-112

Hydraulically settable mixtures are formed according to Example 106, except that fiberglass is included within the hydraulically settable mixture in the following amount, as measured by volume percent of the hydraulically settable mixture:

| Example | Fiberglass |
|---|---|
| 110 | 1% |
| 111 | 2% |
| 112 | 3% |

The resulting multi-cell structures have high strength, both in the green state and after they are cured, due to the reinforcing effect of the multi-cell structure. The multi-cell structures formed in these examples are more ductile than in Example 106, while the compressive strengths would be expected to be even greater. These materials can be used to form very strong, yet relatively lightweight walls of larger food and beverage packaging containers.

### Example 113

Using any of the foregoing compositions, corrugated hydraulically settable sheets containing a fluted inner structure sandwiched between two flat sheets are formed. The flat outer sheets are formed by calendering a sheet of the material into a flat sheet of the appropriate thickness. The corrugated, or fluted inner sheet (which is similar to the fluted or corrugated inner sheet of an ordinary cardboard box) is formed by passing either a hardened or remoistened flat hydraulically settable sheet of the appropriate thickness through a pair of rollers with intermeshing corrugated surfaces or teeth.

Glue is applied to the surfaces of the corrugated sheet, which is then sandwiched between two flat sheets and allowed to harden.

### Example 114

Using any of the foregoing compositions, the hydraulically settable mixture is pressed or molded into the shape of a carton. Depending on the composition, the carton will exhibit high strength, durability, flexibility, low weight, and/or low density.

### Example 115

Using any of the foregoing compositions, the hydraulically settable mixture is molded into the shape of a crate. This can be carried out by extruding a multi-cell structure or corrugated sheet, or by molding any other appropriate structure of adequate strength. Depending on the composition, the crate will exhibit high strength, durability, flexibility, low weight, and/or low density.

### Example 116

Using any of the foregoing compositions, the hydraulically settable mixture is molded or pressed into the shape of a lid. Depending on the composition, the lid will exhibit high strength, durability, flexibility, low weight, and/or low density.

### Example 117

Using any of the foregoing compositions, the hydraulically settable mixture is molded into the shape of a partition. Depending on the composition, the partition will exhibit high strength, durability, flexibility, low weight, and/or low density.

### Example 118

Using any of the foregoing compositions, the hydraulically settable mixture is molded into the shape of a liner. Depending on the composition, the liner will exhibit high strength, durability, flexibility, low weight, and/or low density.

### Example 119

Using any of the foregoing compositions, the hydraulically settable mixture is molded into the shape of a box. This may be carried out by extrusion, and/or calendering, and/or score cutting, and/or folding. Depending on the composition, the box will exhibit high strength, durability, flexibility, low weight, and/or low density.

### Example 120

Using any of the foregoing compositions, the hydraulically settable mixture is blow molded into the shape of a bottle. Depending on the composition, the bottle will exhibit high strength, durability, flexibility, low weight, and/or low density.

### Example 121

Using any of the foregoing compositions, the hydxaulically settable mixture is molded into the shape of a utensil. Depending on the composition, the utensil will exhibit high strength, durability, flexibility, low weight, and/or low density.

### Examples 122-139

Food and beverage containers were manufactured from hydraulically settable sheets of varying thicknesses formed from a hydraulically settable mixture containing the following components:

| | |
|---|---|
| Portland Cement | 1.0 kg |
| Perlite | 0.5 kg |
| Mica | 0.5 kg |
| Fiber (Southern pine) | 0.25 kg |
| Tylose® FL 15002 | 0.2 kg |
| Water | 2.5 kg |

The portland cement, mica, fiber, Tylose®, and water were mixed together in a high shear mixer for 5 minutes, after which the perlite was added and the resulting mixture mixed for an additional 5 minutes in a low shear mixer. The hydraulically settable mixture was then placed into an auger extruder and extruded through a die having an opening in the shape of a slit. Continuous sheets were extruded which had a width of 300 mm and a thickness of 6 mm.

The sheets were thereafter passed between one or more pairs of reduction rollers in order to obtain sheets having final thicknesses of 0.2 mm, 0.3 mm, 0.4 mm and 0.5 mm, respectively. The rollers had a diameter of 17 cm and were made of stainless steel coated with polished nickel to aid in preventing the hydraulically settable mixture from sticking to the rollers. In addition, the rollers were heated to a temperature of 110°C to further prevent sticking between the mixture and the rollers.

In order to obtain sheets having the desired thickness, the extruded sheets were reduced in steps by using reduction roller pairs having progressively smaller gap distances between the rollers. The sheet thicknesses were reduced as follows:
6 mm ==> 2 mm ==> 0.5 mm ==> 0.4 mm
or 0.3 mm
or 0.2 mm

A combination of the extrusion process and the calendering process yielded sheets with substantially unidirectionally oriented fibers along the length (or direction of elongation) of the sheet. Because of this, the sheets had higher tensile strength in the lengthwise direction (10-12 MPa) compared to the widthwise direction (5-6 MPa).

The hardened hydraulically settable sheets were finished, coated, and then formed into a number of different food and beverage containers. For example, a "cold cup" (such as those in which cold soft drinks are dispensed at fast food restaurants) was made by cutting an appropriate shape from a sheet, rolling the shape into the shape of a cup, adhering the ends of the rolled sheet using conventional water-based glue, placing a disc at the bottom of the cup and then crimping the bottom of the rolled wall portion in order to hold the bottom in place, and curling the rim of the cup to strengthen the rim and create a smoother drinking surface. Sheets having thicknesses of 0.3 mm and 0.4 mm were used.

The amount of deflection when applying a constant force 1 inch below the rim was comparable to conventional paper cups. The uncoated hydraulically settable cups did not leak when an aqueous solution containing methylene blue and 0.1 % surfactant was placed inside the cup for 5 minutes. Of course, any leakage that may occur could be prevented by an appropriate coating.

A "clam shell" container (such as those presently used in the fast food industry to package hamburgers) was made by cutting an appropriate shape from a sheet, score cutting the sheet to form the desired fold lines, folding the sheet into the shape of a clam shell container, and adhering the ends of the folded sheet (using both adhesive and interlocking flap means) to preserve the integrity of the container. Sheets having thicknesses of 0.4 mm and 0.5 mm were used.

The sheet was found to more easily bend or close together on the side of the sheet opposite the score cut. It should be noted that normal scores in conventional materials generally allow the sheet to more easily bend or close together on the side of the score. The resulting clam shell containers exhibited comparable or superior insulating ability compared to paper clam shells.

A french fry container (such as those used to serve cooked french fries in the fast food industry) was made by cutting an appropriate shape from a sheet, score cutting the sheet to form the desired fold lines, folding the sheet into the shape of a french fry container, and adhering the ends of the folded sheet using adhesive means to preserve the integrity of the container. Sheets having thicknesses of 0.25 mm, 0.3 mm, 0.35 mm, 0.4 mm, 0.45 mm, and 0.5 mm were used to make the french fry containers.

A frozen food box (such as those used by supermarkets to package frozen foods such as vegetables or french fries) was made by cutting an appropriate shape from a sheet, score cutting the sheet to form the desired fold lines, folding the sheet into the shape of a frozen food box, and adhering the ends of the folded sheet using adhesive means to preserve the integrity of the box. Sheets having thicknesses of 0.25 mm, 0.3 mm, 0.35 mm, 0.4 mm, 0.45 mm, and 0.5 mm were used to make the frozen food boxes.

A cold cereal box was made by cutting an appropriate shape from a sheet, score cutting the sheet to form the desired fold lines, folding the sheet into the shape of a cold cereal box, and adhering the ends of the folded sheet using adhesive means to preserve the integrity of the cereal box. Sheets having a thickness of 0.3 mm were used.

A straw was made by rolling a piece of a 0.25 mm sheet into the form of a straw and adhering the ends together using adhesion means known in the art. In making the straw, as in making each of the containers set forth above, it was advantageous to remoisten the sheet somewhat in order to temporarily introduce a higher level of flexibility into the sheet. This minimized splitting and tearing of the sheet. Nevertheless, the straw could be rolled and crimped without the remoistening of the sheet without visible tearing and splitting.

The containers were found to break down in the presence of water over time, with 1 day being the average time of disintegration. The excess waste material that was trimmed from the sheets when making the containers was easily recycled by simply breaking it up and mixing it back into the hydraulically settable mixture.

The various containers that were made are set forth as follows, including the thickness of the sheet used to make each container:

| Example | Container | Sheet Thickness |
|---|---|---|
| 122 | cold cup | 0.3 mm |
| 123 | cold cup | 0.4 mm |
| 124 | clam shell | 0.4 mm |
| 125 | clam shell | 0.5 mm |
| 126 | french fry box | 0.25 mm |
| 127 | french fry box | 0.3 mm |
| 128 | french fry box | 0.35 mm |
| 129 | french fry box | 0.4 mm |
| 130 | french fry box | 0.45 mm |
| 131 | french fry box | 0.5 mm |
| 132 | frozen food box | 0.25 mm |
| 133 | frozen food box | 0.3 mm |
| 134 | frozen food box | 0.35 mm |
| 135 | frozen food box | 0.4 mm |
| 136 | frozen food box | 0.45 mm |
| 137 | frozen food box | 0.5 mm |
| 138 | cold cereal box | 0.3 mm |
| 139 | drinking straw | 0.25 mm |

### Example 140

The hydraulically settable sheets used to manufacture the containers in Examples 122-139 could be printed using conventional printing presses used to print conventional paper sheets. The ink was able to dry as fast or faster compared to when using conventional paper sheets. The printed sheets could then be formed into any of the containers listed above the same as without being printed.

### Example 141

A printed hydraulically settable sheet obtained in Example 140 was formed into the shape of a cup according to the procedure set forth in Example 122, except that the top rim was treated with a mineral oil lubricant prior to the step of curling the top of the cup. Nevertheless, as above, curling was possible without mineral oil. The cup had all of the necessary properties of weight, strength, and water resistance for commercial use in the fast food industry, as well as including identifying information.

### Example 142

Clam shell containers were made using the sheets made according to Examples 122-139. The sheets were tested to determine the optimum score cut depth which would allow for the easiest bend, while at the same time leaving a hinge with the highest strength and resilience. Score depths ranging between 20% to 50% were tested, with a score depth of 25% yielding the best results. In addition, it was found that thicker sheets (0.4-0.5 mm) gave a better score and yielded a stronger, more rigid clam shell container.

### Example 143

A clam shell was made using the sheets of Examples 122-139, except that a triple reverse hinge was used. That is, a series of three score cuts were cut into the outer side of the claim shell container. Because this decreased the distance that each individual score line had to bend, the resulting hinge could be opened and closed more times without breaking compared to a single score cut hinge.

### Example 144

Cold cups made according to Examples 122 and 123 were passed through a commercial wax coating machine, whereby a uniform layer of wax was applied to the surface. The layer of wax completely sealed the surface of the cup to moisture and rendered it watertight.

### Example 145

Cold cups made according to Examples 122 and 123 were coated with an acrylic coating using a fine spraying nozzle. As did the wax in Example 144, the layer of acrylic coating completely sealed the surface of the cup to moisture and rendered it watertight. However, the acrylic coating had the advantage that it was not as visible as the wax coating. Because a thinner acrylic coating was possible, the cup looked almost as if it were uncoated. The glossiness of the cup could be controlled by using different types of acrylic coatings.

### Example 146

Cold cups made according to Examples 122 and 123 were coated with a commercially used melamine coating using a fine spraying nozzle. As in Examples 144 and 145, the layer of melamine coating completely sealed the surface of the cup to moisture and rendered it watertight. However, the melamine coating was also less visible and could be applied in a thinner coat compared to the wax coating. The glossiness of the cup could be controlled by using different types of melamine coatings.

### Example 147

Cold cups made according to Examples 123 and 123 were coated with a totally environmentally sound coating consisting of a mixture of hydroxymethylcellulose plasticized with polyethylene glycol. This coating completely sealed the surface of the cup to moisture and rendered it watertight. However, the surface looked even more natural and less glossy as compared to cups coated with wax, acrylic, or melamine.

### Examples 148-151

Clam shell containers made according to Examples 124 and 125 were alternatively coated with the same coating materials used to coat the cold cups in Examples 144-147. The results were substantially identical to those achieved with the coated cups.

| Example | Coating Material |
|---|---|
| 148 | wax |
| 149 | acrylic |
| 150 | melamine |
| 151 | plasticized hydroxymethylcellulose |

### Examples 152-155

French fry containers made according to Examples 126-131 were alternatively coated with the same coating materials used to coat the cold cups in Examples 144-147. The results were substantially identical to those achieved with the coated cups.

| Example | Coating Material |
|---|---|
| 152 | wax |
| 153 | acrylic |
| 154 | melamine |
| 155 | plasticized hydroxymethylcellulose |

### Examples 156-159

Frozen food containers made according to Examples 132-137 were alternatively coated with the same coating materials used to coat the cold cups in Examples 144-147. The results were substantially identical to those achieved with the coated cups.

| Example | Coating Material |
|---|---|
| 156 | wax |
| 157 | acrylic |
| 158 | melamine |
| 159 | plasticized hydroxymethylcellulose |

### Examples 160-163

Cold cereal boxes made according to Example 138 were alternatively coated with the same coating materials used to coat the cold cups in Examples 144-147. The results were substantially identical to those achieved with the coated cups.

| Example | Coating Material |
|---|---|
| 160 | wax |
| 161 | acrylic |
| 162 | melamine |
| 163 | plasticized hydroxymethylcellulose |

### Examples 164-167

Drinking straws made according to Example 139 are alternatively coated with the same coating materials used to coat the cold cups in Examples 144-147. The results are substantially identical to those achieved with the coated cups with regard to the outer surface of the straws, although it is more difficult to adequately coat the inside of the straw in this manner.

| Example | Coating Material |
|---|---|
| 164 | wax |
| 165 | acrylic |
| 166 | melamine |
| 167 | plasticized hydroxymethylcellulose |

### Example 168

The same mix design set forth in Examples 122-139 was used to manufacture sheets of varying thickness between 0.25 mm and 0.5 mm. The mixing, extrusion, and calendering processes were in every way the same. Dry sheets of each thickness were cut into circular shapes and formed into a paper plate using a commercial mechanical press fitted with a progressive die used to make such plates out of paper stock. The details of the stamped hydraulically settable plates stood out perfectly and were substantially similar in shape, strength and appearance compared to conventional paper plates. However, the hydraulically settable plates were found to be more rigid than conventional paper plates and, hence, posses more structural integrity when food is placed on or within the plates.

### Example 169

Dry sheets obtained in Example 168 were first wetted to contain 5% additional water by weight of the initially dry sheet before they were pressed into plates (keeping in mind that the apparently "dry" sheets contain water within the hydraulically settable structural matrix even when they feel dry and posses maximum stiffness). The added water helped the sheets become more flexible (*i*.*e*., higher elongation before rupture) which resulted in a plate that had a better impression and detail compared to conventional paper plates formed by the same process. The press was heated to 200°C and the extra water evaporated during the very short press time (<1 sec) through vent holes in the heated mold, yielding a dry product of higher stiffness than paper.

### Example 170

Dry sheets obtained in Example 168 were first wetted to contain 10% additional water by weight of the initially dry sheet before they were pressed into plates. The added water helped the sheets become even more flexible, although the impressions and detail were comparable to the results of Example 169. As a result of adding extra water, the molding took a little more time in order to drive off the extra water and form a plate that was substantially dry. It was found that the molding time could be reduced by increasing the temperature of the mold. The final product was stiffer than comparable paper plates.

### Example 171

Dry sheets obtained in Example 168 were first wetted to contain 20% additional water by weight of the initially dry sheet before they were pressed into plates. The added water helped the sheets become even more flexible than the sheets in Example 170 to the point where the molding process could be classified as a wet sheet molding process rather than dry sheet stamping. The resulting product was superior to a paper stamping process because there were no fold lines whatsoever in the pressed material. The final product was stiffer than comparable paper plates.

### Example 172

Dry sheets obtained in Example 168 were first wetted to contain 30% additional water by weight of the initially dry sheet before they were pressed into plates. The added water helped the sheets become slightly more flexible than the sheets in Example 171, although the molding process and results were similar. The resulting product was superior to a paper stamping process because there were no fold lines whatsoever in the pressed material. Because of the extra water, the molding process took a little longer than when less water was used to moisten the sheets. Heating the molds to a higher temperature was found to reduce molding times. The final product was stiffer than comparable paper plates.

### Example 173

The processes of Examples 168-172 were repeated in every way except that a commercial acrylic coating was applied to one side of the sheets prior to their being pressed into plates as above. In the case where a sheet was remoistened, the water was sprayed on the side opposite the side onto which the coating was placed. The coating provided the plates with a glossier surface and rendered them more water resistant.

### Example 174

The processes of Examples 168-172 were repeated in every way except that a commercial polyethylene coating was applied to one side of the sheets prior to their being pressed into plates as above. In the case where a sheet was remoistened, the water was sprayed on the side opposite the side onto which the coating was placed. The coating provided the plates with a glossier surface and rendered them more water resistant.

### Examples 175-181

The processes set forth in Examples 168-174 were repeated except that the sheets were pressed into the shape of a bowl using a conventional press used to manufacture disposable paper bowls from paper stock. The hydraulically settable bowls had a diameter of 15 cm and a depth of 3 cm. Because of the deeper impression and greater degree of bending and deformation necessary to form a bowl from a flat sheet, sheets having an added moisture content less than 10% yielded some defects. However, the use of at least 10% added water gave a good product with better impressions, no folding and a smoother surface compared to bowls made from paper.

| Example | Added Water | Coating |
|---|---|---|
| 175 | 0% | none |
| 176 | 5% | none |
| 177 | 10% | none |
| 178 | 20% | none |
| 179 | 30% | none |
| 180 | variable | acrylic |
| 181 | variable | polyethylene |

### Examples 182-188

The molding processes set forth in Examples 168-174 were repeated except that the sheets were pressed into the shapes of a two part breakfast platter, including a top and bottom half. The top half had a length of 20 cm and a depth of 3.5 cm, while the bottom half had a length of 21 cm and a depth of 1.0 cm. Sheets having a thickness of 0.8 mm were used, yielding pieces which each weighed between 12-15 g. Although they were as similar in weight compared to existing breakfast platters used in the fast food industry, they were less flimsy.

The top and bottom halves were complementary in size and could be interlocked together to form a closed container using tabs on the sides of the top half and slots in the sides of the bottom half. The product was flexible enough that nonshattering failure occurred when crushed. Those that were coated exhibited a synergistic effect between the coating and the hydraulically settable structural matrix, wherein the product became stronger, tougher and more elastic before rupture due to the high elongation of the elastomeric coating.

| Example | Added Water | Coating |
|---|---|---|
| 182 | 0% | none |
| 183 | 5% | none |
| 184 | 10% | none |
| 185 | 20% | none |
| 186 | 30% | none |
| 187 | variable | acrylic |
| 188 | variable | polyethylene |

### Example 189

A two-part breakfast platter was manufactured using the mix design set forth in Examples 182-188, except that instead of drying and then rewetting the calendered sheet a wet sheet was directly molded into the shape of the breakfast platter. The wet sheet was readily molded and resulted in very few surface and structural defects. The breakfast platter made in this example had a thickness of 0.5 mm and possessed similar weight and insulation properties as the platter made in the previous examples.

Containers set forth above were placed in a microwave oven and tested for microwave compatibility; that is, they were tested to determine whether the containers themselves, or the food items within them, become hot when container and food were exposed to microwave radiation. Although the containers may have been expected to absorb some of the radiation and become hot in light of the water tied up within the hydraulically settable structural matrix, in fact, the containers themselves remained cool. Because of the low dielectric constant of the material, all of the energy was found to go into the food not the container.

For the same reason, steam which may have condensed onto the surface of the container during initial stages of the microwaving were found to quickly revaporize under further microwaving. Therefore, when the food container was opened, no condensed steam was found on the surface of the container after the microwave process. Any excess steam comes out when the container is opened, leaving food which looks and tastes better. This is in sharp contrast to polystyrene containers which tend to accumulate large amounts of condensed steam on the container surfaces, thereby rendering a "soggier," and hence less desirable, food product. In addition, polystyrene containers often melt if the food is heated too long.

The specific heats of the hydraulically settable materials of the present invention are relatively low, being about 0.9 J/g·K and having a low thermal constant within the range of 0.06-014 W/m·K. This allows for less thermal conductance from the food to the container during the microwave process. It was possible, therefore, to in all cases remove the container from the microwave without burning the hands. After the container was removed from the microwave oven it slowly warmed (by absorbing some of the heat within the food) but never became too hot to touch.

### Example 190

Flat paper-like sheets suitable for manufacturing a wide variety of food and beverage containers were manufactured from a hydraulically settable mixture containing the following:

| | |
|---|---|
| Portland Cement | 1.0 kg |
| Perlite | 0.3 kg |
| Hollow Glass Spheres (< 0.1 mm) | 0.8 kg |
| Mica | 0.5 kg |
| Fiber (Southern pine) | 0.25 kg |
| Tylose® FL 15002 | 0.2 kg |
| Water | 2.6 kg |

The cement, mica, fiber, Tylose®, and water were mixed together in a high shear mixer for 5 minutes, after which the perlite and hollow glass spheres were added and the resulting mixture mixed using low shear. The mixture was extruded using an auger extruder and a die into a sheet 30 cm wide and 0.6 cm thick. The sheet was passed successively between pairs of heated rollers in order to reduce the thickness of the sheet to between 0.1 mm and 2 mm.

As a result of the lower specific surface area of the glass spheres (200-250 m²/kg) compared to perlite, the mixture of Example 190 yielded a product with a more uniform thickness and improved surface finish compared to the mix design of Examples 122-139. The reduced specific surface area of the aggregates reduced the amount of moisture that was removed when contacting the heated calendering rollers. The material, therefore, remains more moldable, retains the optimum rheology, and results in less microdefects and more uniformity during the calendering process.

### Example 191

The sheets made according to Example 190 were cut, rolled, and glued into 10 oz. drinking cups using a commercial paper cup manufacturing machine. The cups were alternatively coated with a wax coating in order to render them more waterproof.

### Example 192

The mix design and molding processes of Examples 122-139 were repeated in every way except that the mica was substituted with 0.5 kg kaolin. The sheets made using this alternative mix design yielded sheets that had a glossier surface than where mica was used. The glossier surface resulted from the alignment of the smaller kaolin particles within the sheet surface when the sheet was successively passed between a pair of calendering rollers, which also acted like a pair of smoothing rollers.

### Example 193

The mix design and molding process of Example 192 were repeated in every way except that 1.0 kg of kaolin was used. The sheets that were molded using this increased amount of kaolin had a smoother surface finish than when only 0.5 kg kaolin was used.

### Example 194

The mix design and molding process of Example 192 were repeated in every way except that 1.5 kg of kaolin was used. The sheets that were molded using this increased amount of kaolin had a smoother surface finish than when only 0.5 kg or 1.0 kg of kaolin was used. However, the increase in kaolin yield a more brittle sheet. In addition, drying defects due to the increased specific surface area were somewhat problematic when passing the sheet between the reduction rollers.

### Example 195

The mix design and molding processes of Examples 122-139 were repeated in every way except that the perlite was excluded and the amount of mica was increased to 1.5 kg. The resulting sheets made using this alternative mix design had a smoother finish. However, the hydraulically settable structural matrix was more dense and more brittle. In addition, there was an increase in drying defects. The sheets could be rolled into cups but with minor surface defects in the form of cracks. Also curling of the top was less successful than in Examples 122 and 123.

### Example 196

The mix design and molding processes of Examples 122-139 were repeated in every way except that the amount of perlite was increased to 1.0 kg. The resulting sheets and containers made therefrom had a slightly lower density but also slightly lower strength and toughness.

### Example 197

The mix design and molding processes of Examples 122-139 were repeated in every way except that the amount of perlite was increased to 0.75 kg. The resulting sheets and containers made therefrom had a slightly lower density but also slightly lower strength and toughness. However, the strength characteristics were somewhat better than when 1.0 kg of perlite was used, as in Example 196.

### Example 198

The mix design and molding processes of Examples 122-139 were repeated in every way except that the amount of perlite was reduced to 0.25 kg. The resulting sheets and containers made therefrom had a higher fiber content, slightly higher density, but had greater strength and toughness.

### Example 199

The mix design and molding processes of Examples 122-139 were repeated in every way except that perlite was eliminated from the mix design altogether. The resulting sheets and containers made therefrom had a slightly higher density, but had greater strength and toughness.

The following examples relate to tests that were performed in order to optimize the mix designs that would yield products having the preferred performance criteria. Although only sheets were made in the remaining test examples, it will be understood to one of ordinary skill in the art how such sheets could be formed into appropriate food or beverage containers using any of the methods (including the examples) set forth within the Specification. In addition, many of the mix designs could also have application in either direct molding or wet sheet molding of food or beverage containers.

### Examples 200-205

Hydraulically settable sheets having a thickness of 0.4 mm were manufactured according to the processes set forth in Examples 122-139 from a hydraulically settable mixture containing the following components:

| | |
|---|---|
| Portland Cement | 1.0 kg |
| Perlite | variable |
| Mica | 0.5 kg |
| Tylose® FL 15002 | 0.2 kg |
| Fiber (Southern pine) | 0.25 kg |
| Water | variable |

The effect of adding varying amounts of perlite was studied to determine the effect on the properties of the material, particular the strength properties of the hardened sheet. Because of the water-absorbing behavior of perlite, it was necessary to decrease the amount of water as the amount of perlite was decreased in order to maintain the same level of rheology and workability. The amount of perlite and water for each example was as follows:

| Example | Perlite | Water |
|---|---|---|
| 200 | 0.5 kg | 2.15 kg |
| 201 | 0.4 kg | 2.05 kg |
| 202 | 0.3 kg | 1.85 kg |
| 203 | 0.2 kg | 1.65 kg |
| 204 | 0.1 kg | 1.50 kg |
| 205 | 0.0 kg | 1.40 kg |

The extrusion and calendering processes had the effect of longitudinally orienting the fibers in a substantially unidirectional manner. Therefore, the sheets possessed a "strong" and a "weak" direction. The sheets were tested for tensile strength in the two directions, designated as 0° for the strong direction and 90° for the weak direction. In addition, for each sheet, the level of elongation before failure was measured and Young's Modulus of elasticity.

The sheets were also tested for strength in the intermediate, or 45°, direction although only exemplary results for tests in this direction are given. The tensile strength, elongation, and Young's modulus of the sheets in the 45° direction generally fell between those measured in the strong and weak directions, although as a general rule they were closer to the same properties measured in the weak direction. The results are set forth as follows:

| Example | Strength (MPa) | | Elongation (ΔL/L) | | Modulus(MPa) | |
|---|---|---|---|---|---|---|
| | 0° | 90° | 0° | 90° | 0° | 90° |
| 200 | 10.67 | 5.18 | 1.57% | 0.66% | 2297 | 1375 |
| 201 | 11.2 | 5.33 | 2.38% | 1.25% | 2156 | 1559 |
| 202 | 13.45 | 6.27 | 2.22% | 1.00% | 2956 | 1548 |
| 203 | 16.06 | 7.73 | 3.05% | 1.01% | 3006 | 1674 |
| 204 | 17.91 | 10.0 | 1.38% | 0.98% | 3375 | 2605 |
| 205 | 13.87 | 6.76 | 1.03% | 0.48% | 3058 | 2434 |

These examples demonstrate that as the amount of perlite was decreased (which increased the concentration of fiber), the tensile strength, elongation, and Young's modulus all increased, except after the amount of perlite was reduced below a certain amount. Both the tensile strength and the Young's modulus continued to increase until the perlite was left out altogether, as in Example 205. However, the ability of the material to elongate increased as the perlite was decreased, until less than 0.2 kg was used, after which the elongation dropped considerably. Reducing the amount of perlite beyond a certain point in this mix design results in an increased amount of defects in the sheets, which decreases the strength, elongation, and elasticity of the sheets.

However, in general, as the amount of perlite is decreased, the concentrations of fiber, rheology modifying agent, and hydraulic cement are increased, which would be expected to add to the tensile strength. In addition, increasing the concentration of cement would add to the stiffness (modulus) while negatively affecting the elongation ability of the product.

Another interesting point is that the ratio of tensile strength in the strong and weak directions was only about 2:1 in these sheets, whereas in paper products the ratio is typically 3:1.

While the sheets tested above were substantially dry, sheets made according to Examples 200-205 were further dried in an oven in order to obtain a sheet of maximum dryness. The further drying of the sheets was performed in order to portray a more accurate picture of the strength and other properties of the sheets under constant conditions. Depending on the mix designs, humidity during the test procedures, or other variables, the sheets would be expected to absorb or retain a certain amount of moisture. The strength, elongation, and modulus of elasticity results for the further dried sheets are set forth as follows:

| Example | Strength (MPa) | | Elongation (ΔL/L) | | Modulus (MPa) | |
|---|---|---|---|---|---|---|
| | 0° | 90° | 0° | 90° | 0° | 90° |
| 200 | 14.01 | N/A | 1.53% | N/A | 2559 | N/A |
| 201 | 13.6 | 6.23 | 1.34% | 1% | 1799 | 2071 |
| 202 | 16.81 | 8.11 | 1.76% | 1.08% | 2659 | 1587 |
| 203 | 19.32 | 8.91 | 1.82% | 1.16% | 4002 | 1609 |
| 204 | 20.25 | 11.23 | 1.41% | 0.63% | 3448 | 1536 |
| 205 | 17.5 | N/A | 0.81% | N/A | 3457 | N/A |

As shown by these examples, totally drying the sheets decreases the elongation somewhat, whereas the strength and modulus of elasticity are increased. These examples therefore teach that where increased strength and stiffness are important, the sheet should be totally dry. Where increased elongation is important, the elongation may be controlled with the humidity of the sheet.

### Examples 206-210

Hydraulically settable sheets having a thickness of 0.4 mm were manufactured according to the processes set forth in Examples 122-139 from a hydraulically settable mixture containing the following components:

| | |
|---|---|
| Portland Cement | 1.0 kg |
| CaCO₃ (talc) | variable |
| Tylose® FL 15002 | 0.20 kg |
| Fiber (Southern pine) | 0.25 kg |
| Water | variable |

The effect of adding varying amounts of talc was studied to determine the effect on the properties of the material, particular the strength properties of the hardened sheet. Because of the reduced water-absorbing behavior of talc compared to perlite, it was not necessary to decrease the amount of water by the same level as the amount of talc was decreased in order to maintain the same level of rheology and workability. The amount of CaCO₃ and water for each example was as follows:

| Example | CaCO₃ | Water |
|---|---|---|
| 206 | 5.0 kg | 2.25 kg |
| 207 | 4.0 kg | 2.15 kg |
| 208 | 3.0 kg | 2.05 kg |
| 209 | 2.0 kg | 2.00 kg |
| 210 | 1.0 kg | 1.96 kg |

The strength, elongation, and Young's modulus of each of the totally dry sheets formed from the different mix designs are set forth as follows:

| Example | Strength (MPa) | | Elongation (ΔL/L) | | Modulus (MPa) | |
|---|---|---|---|---|---|---|
| | 0° | 90° | 0° | 90° | 0° | 90° |
| 206 | 11.59 | N/A | N/A | N/A | N/A | N/A |
| 207 | 16.16 | N/A | 0.72% | N/A | 4638 | N/A |
| 208 | 14.82 | 5.22 | 0.97% | 0.42% | 4521 | 3521 |
| 209 | 20.43 | 8.26 | 1.11% | 0.56% | 4301 | 2773 |
| 210 | 18.43 | 7.98 | 1.13% | 0.51% | 3902 | 3320 |

The use of talc yields sheets with a smoother, more defect-free surface as well as a more homogeneous microstructure compared to where perlite is used.

### Examples 211-217

Hydraulically settable sheets having a thickness of 0.4 mm were manufactured according to the processes set forth in Examples 122-139 from a hydraulically settable mixture containing the following components:

| | |
|---|---|
| Portland Cement | 1.0 kg |
| Perlite | 0.5 kg |
| Mica | 0.5 kg |
| Tylose® FL 15002 | variable |
| Fiber (Southern pine) | 0.25 kg |
| Water | variable |

The level of Tylose® was altered in order to determine the effect of increasing amounts of Tylose® within the hydraulically settable mixture. Increasing the amount of Tylose® within the mixture required the addition of more water in order to dissolve the Tylose® and maintain similar rheology and workability.

| Example | Tylose® | Water |
|---|---|---|
| 211 | 0.1 kg | 2.25 kg |
| 212 | 0.3 kg | 2.75 kg |
| 213 | 0.4 kg | 3.00 kg |
| 214 | 0.5 kg | 3.25 kg |
| 215 | 0.6 kg | 3.50 kg |
| 216 | 0.7 kg | 3.75 kg |
| 217 | 0.8 kg | 4.0 kg |

The tensile strength and elongation properties increased up to a point as more Tylose® was added, while the Young's modulus fluctuated. The results of testing oven dried sheets made using the various mix designs are as follows:

| Example | Strength (MPa) | | Elongation (ΔL/L) | | Modulus (MPa) | |
|---|---|---|---|---|---|---|
| | 0° | 90° | 0° | 90° | 0° | 90° |
| 211 | N/A | N/A | N/A | N/A | N/A | N/A |
| 212 | 13.84 | 7.25 | 1.41% | 0.75% | 2954 | 1692 |
| 213 | 16.43 | 7.9 | 1.9% | 0.83% | 2400 | 2075 |
| 214 | 21.31 | 11.58 | 3.64% | 1.06% | 3347 | 2370 |
| 215 | 16.11 | 10.35 | 1.84% | 1.13% | 2816 | 1797 |
| 216 | 15.73 | 9.56 | 1.81% | 0.93% | 2690 | 1851 |
| 217 | 18.86 | 10.33 | 2.35% | 1.45% | 2790 | 1570 |

As illustrated, increasing the concentration of Tylose® will generally tend to increase the tensile strength, modulus, and elongation before rupture. A higher elongation ability would be expected to aid in curling the rim of a cup formed from a sheet, while increasing the strength of the sheet at a score cut. However, as the concentration of Tylose® is increased above a certain amount, the material becomes less workable and more defects are introduced within the structural matrix, which would be expected to reduce the strength, modulus, and elongation of the sheet. Nevertheless, the amount of defects (and resulting strength properties) can be improved by optimizing the calendering process.

### Example 218

Based on the understanding that tensile strength and elongation generally increase as both the amount of fiber and Tylose® is increased within a mix design, a mix design was made which maximized both. The hydraulically settable mixture included the following components:

| | |
|---|---|
| Portland cement | 1.0 kg |
| Water | 2.2 kg |
| Perlite | 0.1 kg |
| Fiber (Southern pine) | 0.25 kg |
| Tylose® FL 15002 | 0.5 kg |

The mixture was extruded and then passed between a series of pairs of rollers into a sheet having a thickness of 0.4 mm. The totally dried sheet was found to have superior strength and elongation properties. The tensile strength was tested as 39.05 MPa in the strong direction and 18.86 MPa in the weak direction; the elongation was 1.97% in the strong direction and 1.23% in the weak direction; and the modulus of elasticity was 3935 in the strong direction and 2297 in the weak direction, which is comparable to normal paper.

### Examples 219-223

Hydraulically settable sheets having a thickness of 0.4 mm were manufactured according to the processes set forth in Examples 122-139 from a hydraulically settable mixture containing the following components:

| | |
|---|---|
| Portland Cement | 1.0 kg |
| Hollow glass spheres (4000 psi) | variable |
| Tylose® FL 15002 | 0.2 kg |
| Fiber (Southern pine) | 0.25 kg |
| Water | variable |

The effect of adding varying amounts of hollow glass spheres was studied to determine the effect on the properties of the material, particular the strength properties of the hardened sheet. Although glass spheres do not absorb large amounts of water, less water was required to maintain the same rheology as the amount of glass spheres was decreased because of the corresponding decrease in interparticulate space. The amounts of glass spheres and water for each example are as follows:

| Example | Glass Spheres | Water |
|---|---|---|
| 219 | 0.5 kg | 1.6 kg |
| 220 | 0.4 kg | 1.45 kg |
| 221 | 0.3 kg | 1.40 kg |
| 222 | 0.2 kg | 1.35 kg |
| 223 | 0.1 kg | 1.25 kg |

The strength, elongation, and Young's modulus of each of the totally dry sheets formed from the different mix designs are set forth as follows:

| Example | Strength (MPa) | | Elongation (ΔL/L) | | Modulus (MPa) | |
|---|---|---|---|---|---|---|
| | 0° | 90° | 0° | 90° | 0° | 90° |
| 219 | 10.34 | 3.69 | 2.2% | 1.52% | 1166 | 620 |
| 220 | 11.1 | 4.79 | 2.02% | 1.49% | 1446 | 677 |
| 221 | 12.38 | 5.71 | 1.58% | 1.15% | 1800 | 870 |
| 222 | 14.52 | 6.89 | 1.5% | 1.1% | 1935 | 1220 |
| 223 | 19.45 | 9.66 | 1.54% | 0.96% | 2660 | 1741 |

As seen with glass spheres, the modulus of elasticity is much lower while the elongation is fairly high compared to other mix designs. The sheets are therefore more pliable and elastic. The sheets formed in Examples 219-223 were highly thermally insulating, with k-factors ranging from 0.08-0.14 W/m·K.

### Examples 224-227

Hydraulically settable sheets having a thickness of 0.4 mm were manufactured according to the process set forth in Examples 122-139 from a hydraulically settable mixture containing the following components:

| | |
|---|---|
| Portland Cement | 1.0 kg |
| Perlite | 0.5 kg |
| Mica | variable |
| Tylose® FL 15002 | 0.2 kg |
| Fiber (Southern pine) | 0.25 kg |
| Water | variable |

The effect of adding varying amounts of mica was studied to determine the effect on the properties of the material, particular the strength properties of the hardened sheet. Because of the water-absorbing behavior of mica, it was necessary to increase the amount of water as the amount of mica was increased in order to maintain the same level of rheology and workability. The amounts of mica and water were each examples are as follows:

| Example | Mica | Water |
|---|---|---|
| 224 | 1.0 kg | 2.7 kg |
| 225 | 1.5 kg | 2.9 kg |
| 226 | 2.0 kg | 3.0 kg |
| 227 | 2.5 kg | 3.2 kg |

The strength, elongation, and Young's modulus of each of the totally dry sheets formed from the different mix designs are set forth as follows:

| Example | Strength (MPa) | | Elongation (ΔL/L) | | Modulus (MPa) | |
|---|---|---|---|---|---|---|
| | 0° | 90° | 0° | 90° | 0° | 90° |
| 224 | 9.92 | 4.61 | 0.825% | 0.652% | 2127 | 1257 |
| 225 | 9.37 | 5.3 | 0.71% | 0.49% | 3079 | 2188 |
| 226 | 11.14 | 4.05 | 0.79% | 0.314% | 3100 | 1520 |
| 227 | 11.41 | 4.76 | 0.58% | 0.32% | 2693 | 1282 |

Increasing the concentration of mica increases the strength of the sheets while reducing their elongation ability. Sheets containing larger amounts of mica became very brittle.

### Examples 228-233

A paper-like sheet was manufactured from a hydraulically settable mixture having the following components:

| | |
|---|---|
| Portland white cement | 500 g |
| Calcium Carbonate | 500 g |
| Hollow Glass Spheres | 500 g |
| Hardwood Fibers | 500 g |
| Tylose® FL-15002 | 300 g |
| Water | variable |

P38 hollow glass spheres having a compressive strength of 4000 psi made by 3M were used. The amount of water that was used depended on the desired rheology and ranged between 1800-2300 g, which yielded mixtures having a water content of about 50% by weight. As more water was included, the yield stress and viscosity of the mixture decreased, making it more plastic and easily molded or extruded, although the initial form stability also decreased. The optimal amount of water depended on the molding process being used, including the extruder die thickness, roller nip, and roller temperature. The amount of water used was as follows:

| Example | Water |
|---|---|
| 228 | 1800 g |
| 229 | 1900 g |
| 230 | 2000 g |
| 231 | 2100 g |
| 232 | 2200 g |
| 233 | 2300 g |

The hydraulically settable mixtures were formed into sheets according to the procedures set forth in Examples 122-139. Alternatively, the mixtures passed directly between a pair of extruding rollers and, optionally, between one or more pairs of reduction rollers to form a sheet of the desired thickness. The sheets were partially dried by heating the rollers to temperatures ranging between 80°C and 95°C. Higher roller temperatures were appropriate for those mix designs having a higher initial water content. Heating the rollers also reduced sticking by forming a steam barrier between the sheet and the rollers.

The sheets were more thoroughly dried by rolling them around a series of drying rollers heated to a temperature in the range from 150°C to 250°C. Thereafter the sheets were finished by passing them between fast moving calendering rollers, which polished the surface of the sheet. Even after the sheets were "dried" completely (where the sheet felt completely dry) they contained approximately 12% water by weight of the sheet.

Because portland white cement, calcium carbonate, and glass spheres were used as the inorganic components, the resulting sheets were very white just like conventional paper. They were extremely flexible and could be used in most applications where paper would be used. They could be used as paper sheets or as stock material for the manufacture of a wide variety of articles, including container and, more specifically, food and beverage containers.

### Example 234

Using any of the mix designs set forth above, a hydraulically settable mixture is made by substituting gypsum hemihydrate for the hydraulic cement in roughly the same quantity by weight. The hydraulically settable mixture will have a faster setting time but will generally result in sheets having similar strength, elongation, and stiffness properties.

### Example 235

Using any of the mix designs set forth above, a hydraulically settable mixture is made by substituting calcium oxide for the hydraulic cement. The hydraulically settable mixture will have a slower setting time due to the slower reaction between calcium oxide and carbon dioxide, but will generally result in sheets having similar strength, elongation, and stiffness properties. However, by removing much of the water within the mixture during or after the molding process, a level of quickly attained green strength will be possible.

### Example 236

A hydraulically settable mixture is made having the following components:

| | |
|---|---|
| Gypsum hemihydrate | 1.0 kg |
| Perlite | 0.5 kg |
| Tylose® | 0.075 kg |
| Fiber | 0.25 kg |
| Water | 2.6 kg |

The gypsum, Tylose®, Fiber, and Water are mixed together in a high shear mixer for 3 minutes; after which the perlite is added and mixed in a low shear mixer for an additional 3 minutes.

The mixture is extruded into a sheet having a thickness of 6 mm and then calendered in steps in order to reduce the thickness of the sheets to a final thickness ranging between 0.25 mm to 0.5 mm.

These sheets are readily formed into an appropriate food or beverage container using any appropriate procedure set forth in this Specification. The strength properties are comparable to containers made using hydraulic cement and may be useful in the place of, *e*.*g*., paper, cardboard, or polystyrene containers.

### Example 237

Any of the hydraulically settable mix designs using hydraulic cement is altered to include about 25% gypsum hemihydrate by weight of the hydraulic cement. The gypsum acts as a water absorbing component (or internal drying agent) and results quicker form stability. The strength properties of containers formed therefrom are comparable to mixtures not including gypsum.

### Example 238

A set accelerator is included within any of the above mix designs, resulting in a hydraulically settable mixture that will more quickly achieve form stability. The final strength of the material will be comparable to materials in which a set accelerator is not used.

### Example 239

Waste hydraulically settable containers and other articles were composted along with waste food. After 4 weeks, the containers were completely broken down and resulted in good compost.

### Example 240

Waste inorganically filled containers and other articles were composted along with waste food. After 4 weeks, the containers were completely broken down and resulted in good compost.

### VII. Summary.

From the foregoing, it will be appreciated that the present invention provides improved compositions, methods, and systems for manufacturing hydraulically settable and inorganically filled articles that can be formed into a variety of objects presently formed from paper, cardboard, polystyrene, metal, glass, or plastic.

The present invention also provides compositions, methods, and systems which yield hydraulically settable and inorganically filled articles which have properties similar to those of paper, cardboard, polystyrene, metal, glass, and plastic. Such compositions can be formed into a variety of containers and other objects using the same or similar manufacturing apparatus and techniques as those presently used to form such objects from paper, cardboard, polystyrene, metal, glass, or plastic.

The present invention further provides compositions, methods, and systems for manufacturing hydraulically settable and inorganically filled articles which do not result in the generation of wastes involved in the manufacture of paper, cardboard, plastic, metal, glass, or polystyrene materials. Further, such articles, as well as containers or other objects made therefrom, are readily degradable into substances which are commonly found in the earth.

In addition, the present invention provides compositions, methods, and systems which make possible the manufacture of sheets, containers, and other objects at a cost comparable to and even superior to existing methods of manufacturing paper or polystyrene products.

Finally, the present invention provides compositions, methods, and systems for mass producing hydraulically settable and inorganically filled articles which can rapidly be formed and substantially dried within a matter of minutes from the beginning of the manufacturing process.

The present invention may be embodied in other specific forms without departing from its spirit or essential characteristics. The described embodiments are to be considered in all respects as illustrative only and not restrictive. The scope of the invention is, therefore, indicated by the appended claims rather than by the foregoing description. All changes which come within the meaning and range of equivalency of the claims are to be embraced within their scope.

## Claims

1. A molded article of manufacture having an inorganically filled matrix formed by removing a substantial quantity of water by evaporation from an inorganically filled mixture, the inorganically filled mixture comprising:
water;
a water-dispersible organic polymer binder;
an inorganic aggregate having a concentration in a range from about 20% to about 95% by weight of total solids in the mixture; and
a fibrous material,
wherein the fibrous material is substantially homogeneously dispersed throughout the inorganically filled matrix, wherein the inorganically filled matrix has a thickness in a range from about 0.01 mm to about 1 cm and degrades after prolonged exposure to water, **characterised in that** the inorganically filled mixture is substantially free of hydraulic cement.

2. An article as claimed in claim 1, in which the inorganic aggregate has a concentration in a range from about 20% to about 50% by weight of total solids in the inorganically filled mixture.

3. An article as claimed in claim 1, in which the inorganic aggregate comprises a plurality of different aggregate materials.

4. An article as claimed in claim 1, in which the inorganic aggregate comprises a lightweight aggregate which reduces the density and increases the insulation ability of the inorganically filled matrix, preferably at least one of perlite, vermiculite, hollow glass spheres, porous ceramic spheres, expanded clay, lightweight expanded geologic materials, pumice, or microspheres.

5. An article as claimed in claim 1, in which the inorganic aggregate is at least one of clay, gypsum, calcium carbonate, mica, silica, alumina, metals, sand, gravel, sandstone, or limestone.

6. An article as claimed in claim 1, in which the inorganically filled matrix includes an organic aggregate, preferably at least one of seeds, starches, gelatins, polymers, cork, plastic spheres, or agar materials.

7. An article as claimed in claim 1, in which the fibrous material has a concentration in a range from about 0.2% to about 50% by volume of total solids in the inorganically filled mixture, preferably from about 1% to about 30% by volume of total solids in the inorganically filled mixture, especially from about 5% to about 20% by volume of total solids in the inorganically filled mixture.

8. An article as claimed in claim 1, in which the fibrous material comprises organic fibers, preferably at least one of hemp, cotton, bagasse, abaca, flax, southern pine, or southern hardwood fibers.

9. An article as claimed in claim 1, in which the fibrous material comprises inorganic fibers, preferably at least one of glass, silica, ceramic, graphite, metal fibers, or rock wool.

10. An article as claimed in claim 1, in which the fibrous material comprises individual fibers having an aspect ratio of at least 100:1.

11. An article as claimed in claim 1, in which the organic binder comprises a cellulose-based polymer, preferably at least one of methylhydroxyethylcellulose, hydroxymethylethylcellulose, carboxymethylcellulose, methylcellulose, ethylcellulose, hydroxyethylcellulose, or hydroxyethylpropylcellulose.

12. An article as claimed in claim 1, in which the organic binder comprises a starch-based polymer, preferably at least one of amylopectin, amylose, seagel, starch acetates, starch hydroxyethyl ethers, ionic starches, long-chain alkylstarches, dextrins, amine starches, phosphate starches, or dialdehyde starches.

13. An article as claimed in claim 1, in which the organic binder comprises a protein-based material, preferably at least one of prolamine, collagen, gelatin, glue, or casein.

14. An article as claimed in claim 1, in which the organic binder comprises a polysaccharide gum, preferably at least one of alginic acid, phycocolloids, agar, gum arabic, guar gum, locust bean gum, gum karaya, or gum tragacanth.

15. An article as claimed in claim 1, in which the organic binder comprises a synthetic organic polymer, preferably at least one of polyvinyl pyrrolidone, polyethylene glycol, polyvinyl alcohol, polyvinylmethyl ether, polyacrylic acids, polyacrylic acid salts, polyvinylacrylic acids, polyvinylacrylic acid salts, polyacrylimides, polylactic acid, ethylene oxide polymers, synthetic clay, or latex.

16. An article as claimed in claim 1, in which the organic binder has a concentration in a range from about 1% to about 50% by volume of total solids in the inorganically filled mixture.

17. An article as claimed in claim 1, in which the organic binder and fibrous material have a combined concentration in a range from about 5% to about 60% by volume of total solids in the inorganically filled mixture.

18. An article as claimed in claim 1, in which the inorganically filled mixture further includes a dispersant, preferably at least one of sulfonated naphthalene-formaldehyde condensate, sulfonated melamine-formaldehyde condensate, lignosulfonate, or polyacrylic acid.

19. An article as claimed in claim 1, in which the inorganically filled matrix includes a discontinuous, nonagglomerated phase of finely dispersed voids.

20. An article as claimed in claim 1, in which the inorganically filled matrix has a thickness in a range between about 0.1 mm to about 3 mm.

21. An article as claimed in claim 1, in which the matrix has a density in a range from about 0.1 g/cm³ to about 1.5 g/cm³.

22. An article as claimed in claim 1, in which the matrix has a tensile strength to bulk density ratio in a range from about 2 MPa-cm³/g to about 200 MPa-cm³/g, preferably from about 3 MPa-cm³/g to about 50 MPa-cm³/g.

23. An article as claimed in claim 1, in which the article comprises a sheet.

24. An article as claimed in claim 1, in which the article comprises a container, preferably a box, a crate, a bag, a tube, a cup, a clam shell, a carton, a french fry container, a plate, a bowl, a corrugated box, or a lid.

25. An article as claimed in claim 1, in which the article further includes a coating, preferably at least one of melamine, polyvinyl chloride, polyvinyl alcohol, polyvinyl acetate, polyacrylate, a polyamide, hydroxypropylmethylcellulose, polyethylene glycol, an acrylic, a polyurethane, polylactic acid, polyhydroxybutyrate-hydroxy-valerate copolymer, a starch, soybean protein, polyethylene, a wax, an elastomer, a biodegradable polymer, sodium silicate, calcium carbonate, kaolin, or ceramic.

26. An article as claimed in claim 25, wherein the coating is applied as a laminate to the form stable molded article.

27. A method for manufacturing an article having an inorganically filled matrix comprising the steps of:
mixing together a water-dispersible organic polymer binder, an inorganic aggregate in an amount in a range from about 20% to about 95% by weight of total solids, water, and a fibrous material to form a moldable mixture,
molding the moldable mixture in a heated mold in order to remove at least a portion of the water by evaporation and yield a form stable molded article; and
removing the form stable molded article from the mold, wherein the inorganically filled matrix has a thickness of less than about 2cm, **characterised in that** the moldable mixture is substantially free of hydraulic cement.

28. A method as claimed in claim 27, in which the mixing step includes combining an air entraining agent into the mixture in order to incorporate a discontinuous phase of air voids into the moldable mixture, the air entraining agent preferably comprising a surfactant.

29. A method as claimed in claim 27, in which the components are added in a ratio such that the moldable mixture has a yield stress in a range between about 5 kPa to about 5 mPa.

30. A method as claimed in claim 27, in which the mixing step is carried out using a high shear mixer.

31. A method as claimed in claim 27, in which the mixing step and at least part of the molding step are carried out using a twin auger extruder.

32. A method as claimed in claim 27, in which the molding step is performed by a process selected from the group consisting of die press molding, injection molding, blow molding, jiggering, wet sheet molding, and dry sheet molding.

33. A method as claimed in claim 27, in which the heated mold has a temperature in a range from about 50°C to about 250°C.

34. A method as claimed in claim 27, in which the molding step is carried out in a time period less than about 30 seconds and the molded article achieves form stability within this time period.

35. A method as claimed in claim 27, in which the method yields an article selected which is a box, a crate, a bag, a tube, a cup, a clam shell, a carton, a french fry container, a plate, a bowl, or a lid.

36. A method as claimed in claim 27, in which the molding step includes the use of at least one die selected from the group consisting of a split die, progressive die, and a collapsible die.

37. A method as claimed in claim 27, in which the molding step includes:
positioning the mixture between a male die of a desired shape and a female die having a configuration substantially complementary to the shape of the male die, the male die having a top and a base, the base having a circumference;
pressing the mixture between the male die and the female die to mold the mixture into the desired shape of the article; and
removing the male die and the female die from the article when the molded article has achieved form stability so as to be self-supporting independent from the male die and the female die.

38. A method as claimed in claim 37, in which the step of positioning the mixture includes:
inserting the male die partially into the female die in a complementary fashion until a gap distance between the male die and the female die is formed; and
injecting the mixture between the male die and the female die.

39. A method as claimed in claim 38, in which the mixture is injected between the male die and the female die through an inlet pout on one of the dies.

40. A method as claimed in claim 27, in which the molding step includes:
injecting the mixture into a mold having a configuration corresponding to the desired shape of the article, the mixture being injected at a pressure sufficient to fill the mold; and
removing the article from the mold when the molded article has achieved form stability so as to be self-supporting independent from the mold.

41. A method as claimed in claim 27, in which the molding step includes:
injecting the mixture into a parison cavity and about a core rod positioned therein;
positioning the core rod with the mixture positioned thereon into a blow molding mold having a desired shape of the article of manufacture;
blowing air through the core rod to expand the mixture within the blow molding mold, thereby forming the mixture into the desired shape of the article; and
removing the blow molding mold from the article when the molded article has achieved form stability so as to be self-supporting independent from the blow molding mold.

42. A method as claimed in claim 27, in which the molding step includes:
extruding the mixture into the shape of a tube;
capturing the tube between an extrusion blow molding mold having two halves and walls that define a cavity corresponding to the desired shape of the article;
inserting a blow pin into the tube captured in the mold;
blowing air through the blow pin to expand the mixture against the walls of the mold, thereby forming the mixture into the desired shape of the article; and
removing the mold from the article by separating the two halves when the molded article has achieved form stability so as to be self-supporting independent from the mold.

43. A method as claimed in claim 27, in which the molding step includes forming the mixture into a sheet and then forming the sheet into an article by molding.

44. A method as claimed in claim 43, in which the sheet is molded into the article by a vacuum forming process, preferably at least one of drape forming, straight vacuum forming, drape vacuum forming, snapback vacuum forming, billow/air-slip vacuum forming, billow drape vacuum forming, plug assist vacuum forming, billow/plug-assist/snap back forming and twin sheet forming.

45. A method as claimed in claim 43, in which the sheet forming step comprises passing the mixture between a pair of rollers.

46. A method as claimed in claim 45, in which the rollers are heated to a temperature in a range from about 60°C to about 140°C.

47. A method as claimed in claim 27, further comprising the step of fixing print to the dried article.

48. A method as claimed in claim 27, further comprising the step of applying a coating material to the hardened article, preferably at least one of melamine, polyvinyl chloride, polyvinyl alcohol, polyvinyl acetate, a polyacrylate, a polyamide, hydroxypropylmethylcellulose, polyethylene glycol, an acrylic, a polyurethane, polylactic acid, polyhydroxybutyrate-hydroxyvalerate copolymer, a starch, soybean protein, polyethylene, a wax, an elastomers, a biodegradable polymer, sodium silicate, calcium carbonate, kaolin, or ceramic.

49. A method as claimed in claim 27, in which the article has a thickness in a range between about 0.05 mm to about 3 mm.

## Patentansprüche

1. Geformter Gegenstand mit einer anorganisch gefüllten Matrix, gebildet durch Entfernung einer wesentlichen Wassermenge aus einem anorganisch gefüllten Gemisch, wobei das anorganisch gefüllte Gemisch umfasst:
Wasser;
ein wasserdispergierbares organisches Polymerbindemittel;
ein anorganisches Aggregat mit einer Konzentration im Bereich von etwa 20 bis etwa 95 Gew.-%, bezogen auf die Gesamtfeststoffe in dem Gemisch; und
ein faserförmiges Material,
wobei das fasserförmige Material im Wesentlichen homogen innerhalb der anorganisch gefüllten Matrix dispergiert ist, wobei die anorganisch gefüllte Matrix eine Dicke im Bereich von etwa 0,01 mm bis etwa 1 cm besitzt und sich nach verlängerter Einwirkung von Wasser zersetzt, **dadurch gekennzeichnet, dass** das anorganische gefüllte Gemisch im Wesentlichen frei ist von hydraulischem Zement.

2. Gegenstand nach Anspruch 1, wobei das anorganische Aggregat eine Konzentration im Bereich von etwa 20 bis etwa 50 Gew.-%, bezogen auf die Gesamtfeststoffe in dem anorganisch gefüllten Gemisch, besitzt.

3. Gegenstand nach Anspruch 1, wobei das anorganische Aggregat eine Vielzahl unterschiedlicher Aggregatmaterialien umfasst.

4. Gegenstand nach Anspruch 1, wobei das anorganische Aggregat ein Aggregat mit leichtem Gewicht, welches die Dichte verringert und die Isolierfähigkeit der anorganisch gefüllten Matrix erhöht, bevorzugt mindestens eines von Perlit, Vermiculit, hohlen Glaskügelchen, porösen Keramikkügelchen, expandiertem Ton, expandierten geologischen Materialien mit leichtem Gewicht, Bimsstein oder Mikrokügelchen umfasst.

5. Gegenstand nach Anspruch 1, wobei das anorganische Aggregat mindestens eines ist von Ton, Gips, Calciumcarbonat, Glimmer, Siliciumdioxid bzw. Silica, Aluminiumoxid, Metallen, Sand, Kies, Sandstein oder Kalkstein.

6. Gegenstand nach Anspruch 1, wobei die anorganisch gefüllte Matrix ein organisches Aggregat, bevorzugt mindestens eines von Samen, Stärken, Gelatinen, Polymeren, Kork, Kunststoffkügelchen oder Agarmaterialien umfasst.

7. Gegenstand nach Anspruch 1, wobei das faserförmige Material eine Konzentration im Bereich von etwa 0,2 bis etwa 50 Vol-%, bezogen auf die Gesamtfeststoffe in dem anorganisch gefüllten Gemisch, bevorzugt von etwa 1 bis etwa 30 Vol.-%, bezogen auf die Gesamtfeststoffe in dem anorganisch gefüllten Gemisch, insbesondere von etwa 5 bis etwa 20 Vol.-%, bezogen auf die Gesamtfeststoffe in dem anorganisch gefüllten Gemisch, besitzt.

8. Gegenstand nach Anspruch 1, wobei das faserförmige Material organische Fasern, bevorzugt mindestens eine von Hanf-, Baumwolle-, Bagasse-, Abaka-, Flachs-, südlicher Kiefer- oder südlichen Hartholz-Fasern umfasst.

9. Gegenstand nach Anspruch 1, wobei das faserförmige Material anorganische Fasern umfasst, bevorzugt mindestens eines von Glas, Siliciumdioxid bzw. Silica-, Keramik-, Graphit-, Metallfasern oder Steinwolle umfasst.

10. Gegenstand nach Anspruch 1, wobei das faserförmige Material individuelle Fasern mit einem Dimensionsverhältnis von mindestens 100:1 umfasst.

11. Gegenstand nach Anspruch 1, wobei das organische Bindemittel ein Polymer auf Cellulosebasis, bevorzugt mindestens eines von Methylhydroxyethylcellulose, Hydroxymethylethylcellulose, Carboxymethylcellulose, Methylcellulose, Ethylcellulose, Hydroxyethylcellulose oder Hydroxyethylpropylcellulose umfasst.

12. Gegenstand nach Anspruch 1, wobei das organische Bindemittel ein Polymer auf Stärkebasis, bevorzugt mindestens eines von Amylopectin, Amylose, Meergel, Stärkeacetaten, Stärkehydroxyethylethern, ionischen Stärken, langkettigen Alkylstärken, Dextrinen, Aminstärken, Phosphatstärken oder Dialdehydstärken umfasst.

13. Gegenstand nach Anspruch 1, wobei das organische Bindemittel ein Material auf Proteingrundlage, bevorzugt mindestens eines von Prolamin, Collagen, Gelatine, Leim oder Casein umfasst.

14. Gegenstand nach Anspruch 1, wobei das organische Bindemittel einen Polysaccharidgummi, bevorzugt mindestens einen von Alginsäure, Phykokolloiden, Agar, Gummi arabicum, Guargummi, Johannisbrotgummi, Karayagummi oder Tragantgummi umfasst.

15. Gegenstand nach Anspruch 1, wobei das organische Bindemittel ein synthetisches organisches Polymer, bevorzugt mindestens eines von Polyvinylpyrrolidon, Polyethylenglykol, Polyvinylalkohol, Polyvinylmethylether, Polyacrylsäuren, Polyacrylsäuresalzen, Polyvinylacrylsäuren, Polyvinylacrylsäuresalzen, Polyacrylimiden, Polymilchsäure, Ethylenoxidpolymeren, synthetischem Ton oder Latex umfasst.

16. Gegenstand nach Anspruch 1, wobei das organische Bindemittel eine Konzentration im Bereich von etwa 1 bis etwa 50 Vol.-%, bezogen auf die Gesamtfeststoffe in dem anorganisch gefüllten Gemisch, besitzt.

17. Gegenstand nach Anspruch 1, wobei das organische Bindemittel und das faserförmige Material eine gemeinsame Konzentration im Bereich von etwa 5 bis etwa 60 Vol.-%, bezogen auf die Gesamtfeststoffe in dem anorganisch gefüllten Gemisch, besitzt.

18. Gegenstand nach Anspruch 1, wobei das anorganisch gefüllte Gemisch weiter ein Dispersionsmittel, bevorzugt mindestens eines aus sulfoniertem Naphthalin-Formaldehyd-Kondensat, sulfoniertem Melamin-Formaldehyd-Kondensat, Lignosulfonat oder Polyacrylsäure enthält.

19. Gegenstand nach Anspruch 1, wobei die anorganisch gefüllte Matrix eine diskontinuierliche, nichtagglomerierte Phase von fein verteilten Poren enthält.

20. Gegenstand nach Anspruch 1, wobei die anorganisch gefüllte Matrix eine Dicke im Bereich zwischen etwa 0,1 mm bis etwa 3 mm besitzt.

21. Gegenstand nach Anspruch 1, wobei die Matrix eine Dichte im Bereich von etwa 0,1 g/cm³ bis etwa 1,5 g/cm³ besitzt.

22. Gegenstand nach Anspruch 1, wobei die Matrix ein Zugfestigkeit-zu-Schüttdichte-Verhältnis im Bereich von etwa 2 MPa-cm³/g bis etwa 200 MPa-cm³/g, bevorzugt von etwa 3 MPa-cm³/g bis etwa 50 MPa-cm³/g, besitzt.

23. Gegenstand nach Anspruch 1, wobei der Gegenstand eine Folie bzw. eine Platte umfasst.

24. Gegenstand nach Anspruch 1, wobei der Gegenstand einen Behälter, bevorzugt eine Schachtel, eine Kiste, eine Tasche bzw. einen Beutel, ein Rohr, eine Tasse, eine Muschelschale, einen Karton, einen Behälter für Pommes frites, eine Platte, eine Schüssel, einen Kasten bzw. Karton, der gewellt ist, oder einen Deckel umfasst.

25. Gegenstand nach Anspruch 1, wobei der Gegenstand weiter einen Überzug, bevorzugt aus mindestens einem Melamin, Polyvinylchlorid, Polyvinylalkohol, Polyvinylacetat, Polyacrylat, Polyamid, Hydroxypropylmethylcellulose, Polyethylenglykol, Acrylsäure, Polyurethan, Polymilchsäure, Polyhydroxybutyrat-Hydroxyvalerat-Copolymer, Stärke, Sojabohnenprotein, Polyethylen, Wachs, Elastomerem, biozersetzbarem Polymeren, Natriumsilicat, Calciumcarbonat, Kaolin, oder Keramik umfasst.

26. Gegenstand nach Anspruch 25, wobei der Überzug als Laminat unter Bildung eines stabilen geformten Gegenstands aufgetragen wird.

27. Verfahren zur Herstellung eines Gegenstands mit einer anorganisch gefüllten Matrix, umfassend die Stufen:
gemeinsames Vermischen eines wasserdispergierbaren organischen Polymerbindemittels, eines anorganischen Aggregats in einer Menge im Bereich von etwa 20 bis etwa 90 Gew.-%, bezogen auf die Gesamtfeststoffe, Wasser und eines faserförmigen Materials unter Bildung eines verformbaren Gemisches, Verformen des verformbaren Gemisches in einer erwärmten Form zur Entfernung von mindestens einem Teil des Wassers durch Verdampfen, und Bildung eines formstabil geformten Körpers und Entfernung des formstabil geformten Körpers aus der Form, wobei die anorganisch gefüllte Matrix eine Dicke von weniger als 2 cm besitzt, **dadurch gekennzeichnet, dass** das geformte Gemisch im Wesentlichen frei ist von hydraulischem Zement.

28. Verfahren nach Anspruch 27, wobei die Mischstufe die Kombination eines Mittels zum Einschluss von Luft in das Gemisch zur Einarbeitung einer diskontinuierlichen Phase von Luftporen in das verformbare Gemisch umfasst und wobei das Lufteinschlussmittel bevorzugt ein grenzflächenaktives Mittel umfasst.

29. Verfahren nach Anspruch 27, wobei die Komponenten in einem solchen Verhältnis zugegeben werden, dass das formbare Gemisch eine Fließspannung im Bereich von etwa 5 kPa bis etwa 5 mPa besitzt.

30. Verfahren nach Anspruch 27, wobei die Mischstufe unter Verwendung einer Mischvorrichtung mit hoher Scherkraft durchgeführt wird.

31. Verfahren nach Anspruch 27, wobei die Mischstufe und mindestens ein Teil der Verformungsstufe unter Verwendung eines Doppel-Schneckenextruders durchgeführt werden.

32. Verfahren nach Anspruch 27, wobei die Verformungsstufe gemäß einem Verfahren, ausgewählt aus der Gruppe bestehend aus einem Pressverfahren, einem Spritzgießverfahren, einer Blasverformung, in einer Drehverformung, Nassfolienverformung und Trockenfolienverformung, durchgeführt wird.

33. Verfahren nach Anspruch 27, wobei die erwärmte Form eine Temperatur im Bereich von etwa 50°C bis etwa 250°C besitzt.

34. Verfahren nach Anspruch 27, wobei die Verformungsstufe während einer Zeitdauer von weniger als 30 Sekunden durchgeführt wird und der verformte Gegenstand Formstabilität innerhalb dieser Zeitdauer annimmt.

35. Verfahren nach Anspruch 27, wobei das Verfahren einen Gegenstand ergibt, ausgewählt aus einer Schachtel, einer Kiste, eine Tasche bzw. einem Beutel, einem Rohr, einer Muschelschale, einem Karton, einem Behälter für Pommes frites, einer Platte, einer Schüssel oder einem Deckel.

36. Verfahren nach Anspruch 27, wobei die Verformungsstufe mindestens ein Formwerkzeug, ausgewählt aus der Gruppe bestehend aus einem geteilten Formwerkzeug, progressiven Formwerkzeug und einem klappbaren Formwerkzeug, umfasst.

37. Verfahren nach Anspruch 27, wobei die Verformungsstufe umfasst:
Einfüllen des Gemisches zwischen ein positives Formwerkzeug der gewünschten Form und ein negatives Formwerkzeug mit der Konfiguration, die im Wesentlichen komplementär zu der Form des positiven Formwerkzeugs ist, wobei die positive Form einen oberen und einen Grundteil enthält, wobei der Grundteil einen Kreisumfang besitzt;
Pressen des Gemisches zwischen das positive Formwerkzeug und das negative Formwerkzeug zur Formung des Gemisches in die gewünschte Form des Gegenstandes; und
Entfernung des positiven Formwerkzeugs und des negativen Formwerkzeugs von dem Gegenstand, wenn der geformte Gegenstand Formstabilität angenommen hat, so dass er sich selbst trägt, unabhängig vom positiven Formwerkzeug und dem negativen Formwerkzeug.

38. Verfahren nach Anspruch 37, wobei die Stufe der Einfüllung des Gemisches umfasst:
Einsetzen des positiven Formwerkzeugs in das negative Formwerkzeug in komplementärer Weise, bis ein Spalt zwischen dem positiven Formwerkzeug und dem negativen Formwerkzeug gebildet ist; und
Injizieren des Gemisches zwischen das positive Formwerkzeug und das negative Formwerkzeug.

39. Verfahren nach Anspruch 38, wobei das Gemisch zwischen das negative Formwerkzeug und das positive Formwerkzeug durch ein Einlassteil an einem der Formwerkzeuge injiziert wird.

40. Verfahren nach Anspruch 27, wobei die Verformungsstufe umfasst:
Injizieren des Gemisches in eine Form mit einer Konfiguration entsprechend der gewünschten Form des Gegenstandes, wobei das Gemisch bei einem Druck injiziert wird, der ausreicht, die Form zu füllen; und
der Gegenstand aus der Form entfernt wird, wenn der geformte Gegenstand Formstabilität angenommen hat, so dass er unabhängig von der Form sich selbst trägt.

41. Verfahren nach Anspruch 27, wobei die Verformungsstufe umfasst:
Injizieren des Gemisches in einen Vorform-Hohlraum und um einen darin positionierten Kernstab;
Positionieren des Kernstabs, der in dem Gemisch positioniert ist, in eine Blasformungsform mit der gewünschten Form des herzustellenden Gegenstandes;
Einblasen von Luft durch den Kernstab zur Expandierung des Gemisches innerhalb der Blasformungsform, wobei das Gemisch in die gewünschte Form des Gegenstandes geformt wird; und
Entfernen der Blasformungsform von dem Gegenstand, wenn der geformte Gegenstand Formstabilität erreicht hat, so dass er sich selbst trägt, unabhängig von der Blasformungsform.

42. Verfahren nach Anspruch 27, wobei die Formungsstufe umfasst:
Extrudieren des Gemisches in die Form eines Schlauchs;
Legen des Schlauches zwischen eine Extrusionsblasverformungsform mit zwei Hälften und Wänden, die einen Hohlraum, entsprechend der gewünschten Form des Gegenstands definieren;
Einsetzen eines Blasstifts in den Schlauch, der in der Form gehalten wird;
Einblasen von Luft durch den Blasstift zum Expandieren des Gemisches gegen die Wände der Form, wobei das Gemisch zu der gewünschten Form des Gegenstands gebildet wird; und
Entfernen der Form von dem Gegenstand durch Trennung der beiden Hälften, wenn der geformte Gegenstand die Formstabilität erreicht hat, so dass er sich selbst, unabhängig von der Form, tragen kann.

43. Verfahren nach Anspruch 27, wobei die Verformungsstufe Bildung des Gemisches zu einer Folie und dann Verformung der Folie zu dem Gegenstand durch Verformen umfasst.

44. Verfahren nach Anspruch 43, wobei die Folie in den Gegenstand durch Vakuum-Verformungsverfahren, bevorzugt mindestens eins der Folgenden verformt wird: Streckformen, Vakuumtiefziehen, Vakuumstreckformen, Snapback-Vakuumformen, Wellen/Luft-Gleit-Vakuumverformung, Wellen-Streck-Vakuumverformung, Vakuumformung mit Kolbenunterstützung, Wellen/Kolben-unterstützte Snapback-Verformung und Doppelfolien-Folienverformung.

45. Verfahren nach Anspruch 43, wobei die Stufe bei der Folienbildung das Durchleiten des Gemisches zwischen einem Walzenpaar umfasst.

46. Verfahren nach Anspruch 45, wobei die Walzen auf eine Temperatur im Bereich von etwa 60°C bis etwa 140°C erhitzt werden.

47. Verfahren nach Anspruch 27, wobei zusätzlich eine Stufe des Fixierdrucks des getrockneten Gegenstands durchgeführt wird.

48. Verfahren nach Anspruch 27, wobei ein Überzugsmaterial auf den gehärteten Gegenstand, mindestens eines von Melamin, Polyvinylchlorid, Polyvinylalkohol, Polyvinylacetat, Polyacrylat, Polyamid, Hydroxypropylmethylcellulose, Polyethylenglykol, Acryl, Polyurethan, Polymilchsäure, Polyhydroxybutyrat-Hydroxyvalerat-Copolymer, Stärke, Sojabohnenprotein, Polyethylen, Wachs, Elastomeren, biozersetzbarem Polymer, Natriumsilicat, Calciumcarbonat, Kaolin oder Keramik angewendet wird.

49. Verfahren nach Anspruch 27, wobei der Gegenstand eine Dicke im Bereich von etwa 0,05 mm bis etwa 3 mm besitzt.

## Revendications

1. Article moulé de fabrication, ayant une matrice chargée de manière inorganique, formé en éliminant une quantité substantielle d'eau par évaporation d'un mélange chargé de manière inorganique, le mélange chargé de manière inorganique comprenant :
de l'eau ;
un liant polymère organique hydrodispersible ;
un agrégat inorganique ayant une concentration dans une plage allant d'environ 20% à environ 95% en poids de matières solides totales dans le mélange ; et
un matériau fibreux,
dans lequel le matériau fibreux est dispersé d'une manière substantiellement homogène à travers la matrice chargée de manière inorganique,
dans lequel la matrice chargée de manière inorganique a une épaisseur dans la plage allant d'environ 0,01 mm à environ 1 cm et se dégrade après une exposition prolongée à l'eau, **caractérisé en ce que** le mélange chargé de manière inorganique est substantiellement exempt de ciment hydraulique.

2. Article selon la revendication 1, **caractérisé en ce que** l'agrégat inorganique a une concentration dans une plage allant d'environ 20% à environ 50% en poids de matières solides totales dans le mélange chargé de manière inorganique.

3. Article selon la revendication 1, **caractérisé en ce que** l'agrégat inorganique comprend une pluralité de différents matériaux d'agrégat.

4. Article selon la revendication 1, **caractérisé en ce que** l'agrégat inorganique comprend un agrégat léger qui réduit la densité et augmente la capacité d'isolation de la matrice chargée de manière inorganique, avec, de préférence au moins l'un des perlite, vermiculite, sphères de verre creuses, sphères de céramique poreuses, argile expansée, matériaux géologiques expansés légers, pierre ponce ou micro sphères.

5. Article selon la revendication 1, **caractérisé en ce que** l'agrégat
inorganique est au moins un agrégat de l'un des
argile, gypse, calcium, carbonate, mica, silice, alumine, métaux, sable, gravier, grès ou calcaire.

6. Article selon la revendication 1, **caractérisé en ce que** la matrice chargée de manière inorganique comprend un agrégat organique, de préférence au moins l'un des graines, amidons, gélatines, polymères, liège, sphères en matière plastique ou matériaux d'agar-agar.

7. Article selon la revendication 1, **caractérisé en ce que** le matériau fibreux a une concentration dans une plage allant d'environ 0,2 % à environ 50% en volume des matières solides totales dams le mélange chargé de manière inorganique, de préférence d'environ 1% à environ 30% en volume des matières solides totales dans le mélange chargé de manière inorganique, tout spécialement d'environ 5% à environ 20% en volume des matières solides totales dans le mélange chargé de manière inorganique.

8. Article selon la revendication 1, **caractérisé en ce que** le matériau fibreux comprend des fibres organiques, de préférence l'un au moins des chanvre, bagasse, coton, abaca, lin cultivé, pin du sud ou fibres de bois dur du sud.

9. Article selon la revendication 1, **caractérisé en ce que** le matériau fibreux comprend des fibres inorganiques, de préférence au moins l'un des verre, silice, céramique, graphite, fibres métalliques ou laine de roche.

10. Article selon la revendication 1, **caractérisé en ce que** le matériau fibreux comprend des fibres individuelles ayant un rapport d'allongement d'au moins 100:1.

11. Article selon la revendication 1, **caractérisé en ce que** le liant organique comprend un polymère à base de cellulose, de préférence l'un au moins des méthylhydroxyéthylcellulose, hydroxyméthyléthylcellulose, carboxyméthylcellulose, méthylcellulose, éthylcellulose, hydroxyéthylcellulose ou hydroxyéthylpropylcellulose.

12. Article selon la revendication 1, **caractérisé en ce que** le liant organique comprend un polymère à base d'amidon, de préférence l'un au moins des amylopectine, amylose, seagel, acétates d'amidon, éther hydroxyéthyliques de l'amidon, amidons ioniques, amidons à longues chaînas alkyles, dextrines, amidons d'amines, amidons de phosphate ou amidons de dialdéhyde.

13. Article selon la revendication 1, **caractérisé en ce que** le liant organique comprend un matériau à base de protéines, de préférence l'un au moins des prolamine, collagène, gélatine, colle ou caséine.

14. Article selon la revendication 1, **caractérisé en ce que** le liant organique comprend une gomme de polysaccharide, de préférence l'un au moins des acide alginique, phyco-colloïdes, agar-agar, gomme arabique, gomme de guar, gomme de caroube, gomme karaya ou gomme adragante.

15. Article selon la revendication 1, **caractérisé en ce que** le liant organique comprend un polymère organique synthétique, de préférence l'un au moins des polyvinylpyrrolidone, polyéthylèneglycol, alcool polyvinylique, éther polyvinylméthylique, acides polyacryliques, sels d'acides polyacryliques, acides polyvinylacryliques, sels d'acides polyvinylacryliques, polyacrylimides, acide polylactique, polymères d'oxyde d'éthylène, argile synthétique ou latex.

16. Article selon la revendication 1, **caractérisé en ce que** le liant organique a une concentration dans la plage allant d'environ 1% à environ 50% en volume des matières solides totales dans le mélange chargé de manière inorganique.

17. Article selon la revendication 1, **caractérisé en ce que** le liant organique et le matériau fibreux ont une concentration combinée dans la plage d'environ 5% à environ 60% en volume des matières solides totales dans le mélange chargé de manière inorganique.

18. Article selon la revendication 1, **caractérisé en ce que** le mélange chargé de manière inorganique
comprend en outre un agent dispersant, de préférence l'un au moins des produits condensat sulfoné naphtalène formaldéhyde, condensat sulfoné mélamine-formaldéhyde, lignosulfonate ou acide polyacrylique.

19. Article selon la revendication 1, **caractérisé en ce que** la matrice chargée de manière inorganique comprend une phase discontinue, non agglomérée de cavités dispersées d'une manière fine.

20. Article selon la revendication 1, **caractérisé en ce que** la matrice chargée de manière inorganique a une épaisseur dans la plage comprise entre environ 0,1 mm et environ 3 mm.

21. Article selon la revendication 1, **caractérisé en ce que** la matrice a une densité dans la plage allant d'environ 0,1 g/cm³ à 1,5 g/cm³.

22. Article selon la revendication 1, **caractérisé en ce que** la matrice a un rapport résistance à la traction à densité en vrac dans une plage allant d'environ 2 MPa-cm³/g à 200 MPa-cm³/g, de préférence d'environ 3 MPa-cm³/g à environ 50 MPa-cm³/g.

23. Article selon la revendication 1, **caractérisé en ce que** l'article comprend une feuille.

24. Article selon la revendication 1, **caractérisé en ce que** l'article comprend un récipient, de préférence une boîte, une caisse, un sac, un tube, une coupe, un récipient à double coque, un carton, un récipient pour frites, un plateau, un bol, une boîte en carton ondulé ou un couvercle.

25. Article selon la revendication 1, **caractérisé en ce que** l'article comprend, en outre, un revêtement, de préférence l'un au moins des mélamine, chlorure de polyvinyle, alcool polyvinylique, acétate de polyvinyle, polyacrylate, un polyamide, hydroxypropylméthylcellulose, polyéthylèneglycol, un acrylique, un polyuréthanne, acide polylactique, copolymère polyhydroxybutyrate-hydroxyvalérate, un amidon, protéine de soja, polyéthylène, une cire, un élastomère, un polymère biodégradable, silicate de sodium, carbonate de calcium, kaolin ou céramique.

26. Article selon la revendication 25, **caractérisé en ce que** le revêtement est appliqué en tant que stratifié à l'article moulé stable en forme.

27. Procédé de fabrication d'un article ayant une matrice chargée de manière inorganique comprenant les étapes :
de mélange ensemble d'un liant polymère organique hydrodispersible, d'un agrégat inorganique dans une quantité dans la plage d'environ 20% à environ 95% en poids des matières solides totales, d'eau et d'un matériau fibreux pour former un mélange moulable ;
de moulage du mélange moulable dans un moule chauffé de manière à éliminer au moins une portion de l'eau par évaporation et pour obtenir un article moulé de forme stable ; et
de retrait de l'article moulé de forme stable du moule, dans lequel la matrice chargée de manière inorganique a une épaisseur de moins d'environ 2 cm, **caractérisé en ce que** le mélange moulable est substantiellement exempt de ciment hydraulique.

28. Procédé selon la revendication 27, **caractérisé en ce que** l'étape de mélange comprend la combinaison d'un agent entraînant de l'air dans le mélange de manière à incorporer une phase discontinue de cavités d'air dans le mélange moulable, l'agent d'entraînement d'air comprenant de préférence un agent tensioactif.

29. Procédé selon la revendication 27, **caractérisé en ce que** les composants sont ajoutés dans un rapport tel que le mélange moulable possède une limite d'élasticité dans la plage allant d'environ 5 kPa à environ 5 mPa.

30. Procédé selon la revendication 27, **caractérisé en ce que** l'étape de mélange est effectuée par utilisation d'un mélangeur à cisaillement élevé.

31. Procédé selon la revendication 27, **caractérisé en ce que** l'étape de mélange et au moins une partie de l'étape de moulage sont effectuées par utilisation d'une extrudeuse à deux vis.

32. Procédé selon la revendication 27, **caractérisé en ce que** l'étape de moulage est effectuée par un processus procédé parmi le groupe constitué du procédé moulé-pressé à matrice, du moulage à injection, du moulage par soufflage, du calibrage, du moulage en feuilles par voie humide et du moulage en feuilles par voie sèche.

33. Procédé selon la revendication 27, **caractérisé en ce que** le moule chauffé a une température dans la plage allant d'environ 50°C à environ 250°C.

34. Procédé selon la revendication 27, **caractérisé en ce que** l'étape de moulage est effectuée au cours d'une période de temps de moins d'environ 30 secondes, et **en ce que** l'article moulé parvient à une stabilité de forme durant cette période de temps.

35. Procédé selon la revendication 27, **caractérisé en ce que** le procédé fournit un article sélectionné qui est une boîte, un caisson, un sac, un tube, une coupe, un récipient à double coque, un carton, un récipient pour frites, un plateau, un bol ou un couvercle.

36. Procédé selon la revendication 27, **caractérisé en ce que** l'étape de moulage inclut l'utilisation d'au moins une matrice sélectionnée parmi le groupe constitué d'une matrice ronde extensible, d'une matrice progressive, et d'une matrice télescopique.

37. Procédé selon la revendication 27, **caractérisé en ce que** l'étape de moulage inclut :
le positionnement du mélange entre une matrice mâle d'une forme désirée et une matrice femelle ayant une configuration, substantiellement complémentaire à la forme de la matrice mâle, la matrice mâle ayant un sommet et une base, la base ayant une circonférence ;
la mise sous pression du mélange entre la matrice mâle et la matrice femelle pour mouler le mélange dans la forme désirée de l'article ; et
le retrait de la matrice mâle et de la matrice femelle de l'article quand l'article moulé a atteint la stabilité de forme, de manière à être auto-supportant, indépendamment de la matrice mâle et de la matrice femelle.

38. Procédé selon la revendication 37, **caractérisé en ce que** l'étape de positionnement du mélange inclut :
l'insertion de la matrice mâle partiellement dans la matrice femelle d'une manière complémentaire jusqu'à formation d'un entrefer entre la matrice mâle et la matrice femelle ; et
l'injection du mélange entre la matrice mâle et la matrice femelle.

39. Procédé selon la revendication 38, **caractérisé en ce que** le mélange est injecté entre la matrice mâle et la matrice femelle à travers un orifice d'admission sur l'une des matrices.

40. Procédé selon la revendication 27, **caractérisé en ce que** l'étape de moulage inclut ;
l'injection du mélange dans un moule ayant une configuration correspondant à la forme désirée de l'article , le mélange étant injecté à une pression suffisante à remplir le moule ; et
le retrait de l'article du moule quand l'article moulé est parvenu à la stabilité de forme, de manière à être auto-supportant, indépendamment du moule.

41. Procédé selon la revendication 27, **caractérisé en ce que** l'étape de moulage inclut :
l'injection du mélange dans une cavité de paraison et autour d'un noyau de coeur qui y est positionné ;
le positionnement du noyau de coeur au sein du mélange qui y est positionné dans un moule de moulage à soufflage, ayant une forme désirée de l'article de fabrication ;
le soufflage d'air à travers le noyau de coeur pour dilater le mélange au sein du moule de moulage à soufflage, en transformant ainsi le mélange dans la forme désirée de l'article ; et
le retrait du moule de moulage à soufflage de l'article quand l'article moulé est parvenu à la stabilité de forme, de manière à être auto-supportant, indépendamment du moule de moulage par soufflage.

42. Procédé selon la revendication 27, **caractérisé en ce que** l'étape de moulage inclut :
l'extrusion du mélange dans la forme d'un tube ;
la capture du tube entre un moule de moulage par soufflage à extrusion ayant deux moitiés et des parois qui définissent une cavité correspondant à la forme désirée de l'article ;
l'insertion d'une canne de soufflage dans le tube capturé dans le moule ;
le soufflage d'air à travers la canne de soufflage pour dilater le mélange contre les parois du moule, en façonnant, par conséquent, le mélange dans la forme désirée de l'article ; et
le retrait du moule de l'article en séparant les deux moitiés quand l'article moulé est parvenu à la stabilité de forme, de manière à être auto-supportant, indépendamment du moule.

43. Procédé selon la revendication 27, **caractérisé en ce que** l'étape de moulage comprend la mise en forme du mélange en une feuille et alors la mise en forme de la feuille dans l'article par moulage.

44. Procédé selon la revendication 43, **caractérisé en ce que** la feuille est moulée pour former l'article par un procédé de formage sous vide, de préférence au moins par au moins l'un des procédés formage sous vide, formage par aspiration directe, formage sous vide sur moule positif, formage sous vide du en relief profond , formage sous vide du type par vague/formage sous vide, formage sous vide du type drapage par vague thermoformage sous vide assisté par poinçon, formage du type par vagua/assisté par poinçon/en relief profond et formage par feuilles jumelées.

45. Procédé selon la revendication 43, **caractérisé en ce que** l'étape de mise en forme de la feuille comprend le passage du mélange entre une paire de rouleaux.

46. Procédé selon la revendication 45, **caractérisé en ce que** les rouleaux sont chauffés à une température dans la plage allant d'environ 60°C à environ 140°C.

47. Procédé selon la revendication 27, comprenant en outre l'étape de fixation d'une impression sur l'article séché.

48. Procédé selon la revendication 27, comprenant en outre l'étape d'application d'un matériau de revêtement sur l'article durci, de préférence de l'un au moins des mélamine, chlorure de polyvinyle, alcool polyvinylique, acétate de polyvinyle, un polyacrylate, un polyamide, hydroxypropylméthylcellulose, polyéthylèneglycol, un acrylique, un polyuréthanne, acide polylactique, copolymère polyhydroxybutyrate-hydroxyvalérate, un amidon, protéine de soja, polyéthylène, une cire, un élastomère, un polymère biodégradable, silicate de sodium, carbonate de calcium, kaolin ou céramique.

49. Procédé selon la revendication 27, **caractérisé en ce que** l'article a une épaisseur dans la plage allant d'environ 0,05 mm à environ 3 mm.
